# EUROPEAN PATENT SPECIFICATION

(11) **EP 3 096 321 B1**
(45) Date of publication and mention of the grant of the patent: **05.02.2020**
(21) Application number: 14878941.5
(22) Date of filing: 01.12.2014
(51) Int. Cl.: G11B 20/00, G11B 20/10, G11B 27/00, H04N 5/765, H04N 5/91, G11B 27/034, G11B 27/11, G11B 27/32, H04N 9/804, G06F 3/06, H04N 9/82, H04N 5/85, H04N 9/80

(54) **INFORMATION PROCESSING DEVICE, INFORMATION RECORDING MEDIUM, INFORMATION PROCESSING SYSTEM, INFORMATION PROCESSING METHOD, AND PROGRAM**
INFORMATIONSVERARBEITUNGSVORRICHTUNG, INFORMATIONSAUFZEICHNUNGSMEDIUM, INFORMATIONSVERARBEITUNGSSYSTEM UND INFORMATIONSVERARBEITUNGSVERFAHREN UND PROGRAMM
DISPOSITIF DE TRAITEMENT D'INFORMATIONS, SUPPORT D'ENREGISTREMENT D'INFORMATIONS, SYSTÈME DE TRAITEMENT D'INFORMATIONS, PROCÉDÉ DE TRAITEMENT D'INFORMATIONS, ET PROGRAMME

(30) Priority: 14.01.2014 JP 2014004114; 14.02.2014 JP 2014026724
(43) Date of publication of application: 23.11.2016
(73) Proprietor: Sony Corporation, Tokyo 108-0075 (JP)
(72) Inventor: UCHIMURA, Kouichi, Tokyo 1080075 (JP); TAKAHASHI, Ryohei, Tokyo 1080075 (JP)
(74) Representative: Witte, Weller & Partner Patentanwälte mbB
(86) International application number: PCT/JP2014/081711
(87) International publication number: WO 2015/107782

(56) References cited:
- EP-A1- 1 001 419
- EP-A1- 2 169 681
- EP-A1- 2 320 347
- EP-A1- 2 590 171
- WO-A1-2010/038455
- JP-A- 2008 098 765
- JP-A- 2011 223 281
- JP-A- 2012 018 729
- JP-A- 2013 058 287
- US-A1- 2006 195 911
- US-A1- 2009 150 553

## Description

### TECHNICAL FIELD

The present disclosure relates to information processing devices, information recording media, information processing systems, information processing methods, and programs. More particularly, the present disclosure relates to an information processing device that performs data copying and data recording between information recording media under predetermined management, an information recording medium, an information processing system, an information processing method, and a program.

### BACKGROUND ART

Digital Versatile Discs (DVDs) and Blu-ray Discs (BDs (registered trademark)) are widely used as the information recording media for various kinds of content such as movies and music. As for most content such as music data and image data recorded on those information recording media, the authors, the distributors, and the like thereof hold copyrights or distribution rights. Even a user who has purchased a disk has only a restricted right of use of the content recorded on the disk. For example, the user is not allowed to unlimitedly copy the content recorded on the disk onto some other medium such as another disk.

As a system for managing copying of content stored in such media, there is a management system that allows copying only if copy permission information has been received from a management server.

In this copy management system, processing is performed in the sequence described below, for example.

A user inserts a medium such as a content storage disk into a user device such as a PC or a recording/reproducing device, and the user device is connected to the management server via a network.

The user device then transmits predetermined information such as a disk identifier (ID) to the server.

After confirming the validity of the received information, the server transmits copy permission information to the user device . The user device can start a copying process only after receiving the copy permission information from the server.

Such a copy management mechanism is called managed copying (MC), which is described in detail in Patent Document 1 (Japanese Patent Application Laid-Open No. 2008-98765) and Patent Document 2 (Japanese Patent Application Laid-Open No. 2011-222078), for example.

The Advanced Access Content System (AACS) standards are standards for content copyright protection techniques. Most of the content recorded on disks such as BDs compliant with the AACS standards is encrypted content. A typical encryption mechanism compliant with the AACS standards divides content into units, and uses a different encryption key for each of the units. Such an encryption mechanism enables content use control on each unit, and thus realizes strict content use control in various manners.

Each of the units formed by dividing content is called a CPS unit, and the encryption keys to be used in encryption processes and decryption processes for the respective CPS units are called CPS unit keys, unit keys, or title keys.

In a case where the content stored on a medium such as a Blu-ray Disc (BD (registered trademark)) storing a movie or the like subject to copyright management is copied onto another medium such as a hard disk, a flash memory, or some other disk, a user device performs a process compliant with the above described managed copying (MC), and performs copying after receiving copy permission information from the management server.

According to the current managed copying (MC), however, data recorded on a BD is normally copied onto another medium without any change in the data recording format (Blu-ray Disc Movie (BDMV) of the Blu-ray Disc (BD (registered trademark)). Therefore, various problems might be caused when the data recorded on a BD is recorded on another medium in a different format from the BDMV format.

An increasing number of users view content such as movies on mobile terminals like smartphones and tablet terminals these days.

However, a reproduction application compatible with the BDMV format, which is the recording format of BDs, is not installed in all of these mobile terminals. Therefore, in a case where the data recorded on a BD is copied into a mobile terminal, the content needs to be recorded in a format that is not the BDMV format but can be reproduced by the reproduction application installed in the mobile terminal.

If the format of the original to be copied differs from the format of the copy destination, the data recorded on the original medium cannot be recorded directly onto the copy destination medium for the reason mentioned above. Example elements that may differ in recorded data due to differences in the recording format are as follows:
(a) the codec (encoding format) and the output form (such as the size and the frame rate) to be applied to image data;
(b) the codec (encoding format) and the output form (such as the number of channels and the sampling frequency) to be applied to audio data;
(c) the output form (such as the size and the language to be output) of subtitle data; and
(e) metadata (such as chapter information or a sleeve picture to be output for reproduction, or control information to be used in a reproduction process).

In a case where the original to be copied and the copy destination are in different formats, differences are generated between the original data and the copy destination data.

Specific examples of differences in the codec to be used for images are now described. Images recorded on a BD have been subjected to MPEG2 encoding, for example, and the MPEG2 encoded data is decoded and then reproduced in a reproducing process. However, if the reproduction application installed in the reproducing device for the content of the copy destination, such as a mobile terminal like a smartphone or a tablet terminal, does not have a function to decode MPEG2 data, the decoding process cannot be performed, and the copied content cannot be reproduced, as described above.

Further, specific examples of problems to be caused by differences in metadata are as follows.

The reproduction application installed in a mobile terminal such as a tablet terminal performs a reproducing process by sequentially read data recorded in a certain format that can be reproduced by the reproduction application. A reproducing process using chapter information or a sleeve picture display sequence is incorporated into this reproducing process sequence.

However, if the data recorded in the BDMV format on the BD as the original to be copied does not include any chapter information or sleeve picture, the reproduction application installed in the mobile terminal cannot read the chapter information or the sleeve picture necessary in the reproducing process, though the data recorded on the BD has been copied onto a medium in the mobile terminal. As a result, a reproduction error occurs.

Patent Document 3 shows a method and a system for use in coordinating multimedia devices.

Patent Document 4 shows an information processing device, a method for processing data, and a program.

Patent Document 5 shows systems and methods for integrating features into multiple media content sources.

Patent Document 6 shows an information processing apparatus and method, a content management system, in information recording medium, and a computer program.

### CITATION LISTS

### PATENT DOCUMENTS

Patent Document 1: Japanese Patent Application Laid-Open No. 2008-98765
Patent Document 2: Japanese Patent Application Laid-Open No. 2011-222078
Patent Document 3: US 2009/0150553 A1
Patent Document 4: EP 2 320 347 A1
Patent Document 5: EP 2 169 681 A1
Patent Document 6: US 2006/0195911 A1

### SUMMARY OF THE INVENTION

### PROBLEMS TO BE SOLVED BY THE INVENTION

The present disclosure is made in view of the above problems, and aims to provide an information processing device, an information recording medium, an information processing system, an information processing method, and a program for enabling acquisition and recording of data compatible with the data format of the copy destination medium without any omission, even when data needs to be recorded on the copy destination medium in a different format from the data format of the information recording medium that is the original medium.

### SOLUTIONS TO PROBLEMS

The invention is defined by the appended claims.

The program of the present disclosure is a program that can be provided in a computer-readable format from a storage medium or a communication medium to an information processing device or a computer system that can execute various program codes, for example. As such a program is provided in a computer-readable format, processes in accordance with the program are performed in an information processing device or a computer system.

Other objects, features, and advantages of the present disclosure will be made apparent by the embodiments of the present disclosure described below and the detailed descriptions with reference to the accompanying drawings. In this specification, a system is a logical assembly of devices, and does not necessarily mean devices with different structures incorporated into one housing.

### EFFECTS OF THE INVENTION

With a structure according to an embodiment of the present disclosure, it is possible to avoid a situation where some data is missing in a process of recording data on a second medium in a different format from the data recording format of a first medium.

Specifically, an information processing device that reads the data recorded on the first medium, and performs a process of recording data on the second medium receives copy permission information from a management server, and acquires, from a data providing server, additional data that cannot be acquired directly from the first medium. The information processing device reads a copy control management file recorded on the first medium, and accesses and acquires the additional data by using access information recorded in the copy control management file. The information processing device then uses data containing the acquired additional data as the data to be recorded on the second medium.

With this structure, it is possible to avoid a situation where some data is missing in a process of recording data on the second medium in a different format from the data recording format of the first medium.

The advantageous effects described in this specification are merely examples, and the advantageous effects of the present technology are not limited to them and may include additional effects.

### BRIEF DESCRIPTION OF DRAWINGS

Fig. 1 is a diagram for explaining the outline of a managed copying (MC) system.
Fig. 2 is a diagram for explaining a unit structure and a unit key management table.
Fig. 3 is a diagram for explaining an example of a media directory structure.
Fig. 4 is a diagram for explaining a copying process (Managed Copying (MC)) sequence being managed by a management server.
Fig. 5 is a diagram for explaining the structural data in a copy control management file (MCMF: Managed Copying Manifest File) that is information recorded on a first medium.
Fig. 6 is a diagram showing an example of data contained in a copy execution request.
Fig. 7 is a diagram for explaining the basic information included in server response information (Offer Response) 131.
Fig. 8 is a diagram for explaining the outline of a system that performs the same management as the managed copying (MC) in a case where data copying is performed in different formats between media.
Fig. 9 is a diagram for explaining the structural data in a copy control management file (MCMF: Managed Copying Manifest File).
Fig. 10 is a diagram for explaining a specific example of the additional data information recorded in the copy control management file (MCMF: Managed Copying Manifest File).
Fig. 11 is a sequence diagram for explaining a process sequence in a case where data copying is performed between media in different formats.
Fig. 12 is a sequence diagram for explaining a process sequence in a case where data copying is performed between media in different formats.
Fig. 13 is a diagram for explaining an example structure of an information processing device.
Fig. 14 is a diagram for explaining an example structure of an information processing device.
Fig. 15 is a diagram for explaining the structure of a data converting unit of the information processing device.
Fig. 16 is a diagram for explaining an example structure of a directory of data to be recorded on media in the BDMV format.
Fig. 17 is a diagram for explaining the correspondence between playlists specified in the BDMV format and reproduction data.
Fig. 18 is a diagram for explaining an example structure of an MPEG2 TS (transport stream) as the data structure of a clip AV stream file.
Fig. 19 is a diagram for explaining MP4 file formats.
Fig. 20 is a diagram for explaining the structure of Common File Format (CFF).
Fig. 21 is a diagram for explaining sample information boxes set in an MP4 (CFF) file.
Fig. 22 is a diagram for explaining examples of data recorded in sample information boxes set in an MP4 (CFF) file.
Fig. 23 is a diagram for explaining an example of a format conversion process for a playlist.
Fig. 24 is a diagram for explaining examples of the structures of files to be associated with a playlist.
Fig. 25 is a diagram for explaining an example where sample information files are set in BDMV format data.
Fig. 26 is a flowchart for explaining a format conversion process sequence to be executed by the information processing device.
Fig. 27 is a diagram for explaining the correspondence relationship between data in the BDMV format prior to format conversion and data in an MP4 (CFF) format after the conversion.
Fig. 28 is a diagram for explaining the data flow and the processing in the information processing device performing a format conversion process.
Fig. 29 is a diagram for explaining an example process of obtaining sample information from an external server.

### MODES FOR CARRYING OUT THE INVENTION

The following is a detailed description of an information processing device, an information recording medium, an information processing system, an information processing method, and a program of the present disclosure, with reference to the drawings. Explanation will be made in the following order.
A. Outline of managed copying (MC)
   A-1. Content copy control process under server management
   A-2. Example structure of recorded content
   A-3. Content copying process sequence under server management
B. Process of recording data on a copy destination medium in a different format from the original
   B-1. Problems caused by a difference in format
   B-2. Process of recording data on the second medium in a different format under server management
   B-3. Copy control management file (MCMF: Managed Copying Manifest File) recorded on the first medium
   B-4. Data copying process sequence
C. Other examples
   C-1. Example where the data download process is skipped in a copying process
   C-2. Structure to obtain additional data information provided from the management server
   C-3. Structure in which the data access destination to be recorded in the copy control management file (MCMF) is an area in the first medium
D. Example structure of the information processing device
E. Structure that records the reproduction data type attribute information unique to an MP4 format
   E-1. Outline of the structure of an information processing device and processing in this embodiment
   E-2. BDMV format
   E-3. MP4 file formats
   E-4. Samples boxes set in an MP4 (CFF) file
   E-5. Example of a data format conversion process
   E-6. Structure in which MP4-compliant sample information is recorded in BDMV format data
   E-7. Format conversion process sequence to be executed by the information processing device
   E-8. Example process of recording sample information obtained from an external server
   E-9. Summary of the structure and the effects of this embodiment
F. Summary of the structures according to the present disclosure

### [A. Outline of managed copying (MC)]

First, the outline of "managed copying" (MC), or the outline of a content copy control process under server management, is described.

The managed copying (MC) described in this article [A] is a process normally performed in a case where the original medium and the copy destination medium share the same data recording format. This process is disclosed in Japanese Patent Application Laid-Open No. 2011-222078, which was filed by the applicant.

Like the managed copying (MC), the process according to the present disclosure is to be performed under the management of a management server. The outline of the conventional managed copying (MC) is first described in the article [A], and specific examples of processes according to the present disclosure will be described in the article B and later.

### [A-1. Outline of a content copy control process under server management]

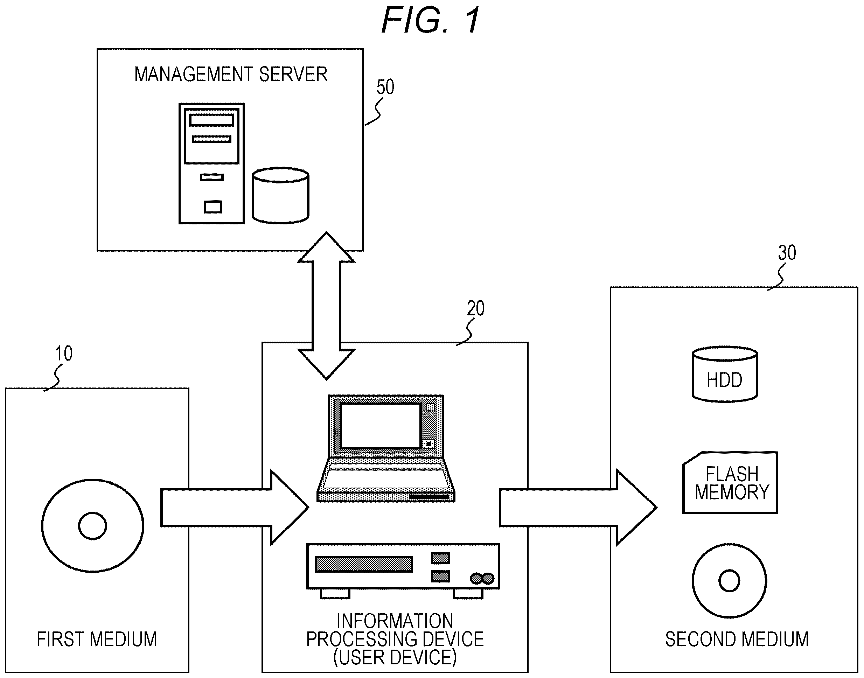

Referring to Fig. 1 and other drawings, the outline of a content copy control process under server management is described.

Use of most content such as movies recorded on Blu-ray Discs (BDs (registered trademark)) is allowed under predetermined copyright management. Therefore, even a user who has purchased a content-recorded disk has only a restricted right of use of the content recorded on the disk. For example, the user is not allowed to unlimitedly copy the content recorded on the disk onto some other medium such as another disk.

As a known system for managing copying of content stored in such media, there is a copy permission processing system that allows copying only if copy permission information from a management server has been received. Fig. 1 is a diagram for explaining the outline of a managed copying (MC) system that is an example of such a copy permission processing system.

An information processing device 20 is a PC or a recorder (a recording/reproducing device) or the like owned by a user, and can perform reproduction from a first medium 10 mounted in the information processing device 20. A movie or the like that is content to be subjected to copyright management is recorded on the first medium 10.

The information processing device 20 can perform a process of copying the content recorded on the first medium 10 onto a second medium 30 that is another medium. The second medium 30 is a medium on which recording can be performed in the information processing device 20, and may be a hard disk (HDD), a flash memory, or a disk (such as a BD or a DVD) on which data can be recorded, for example.

However, if the user unlimitedly performs the copying process, a large number of copies of the content will be generated, resulting in unauthorized use and distribution of the content. To prevent such a situation, the information processing device 20 as the user device is connected to a management server 50 when performing copying of the content, and then receives copy permission information from the management server 50. To receive the copy permission information, it is necessary to confirm the validity of the first medium owned by the user, or pay a predetermined fee, for example.

By carrying out these predetermined procedures, the information processing device 20 receives the copy permission information from the management server 50, and can perform copying of the content only after receiving the copy permission information. The above is the outline of the managed copying (MC) .

### [A-2. Example structure of recorded content]

Next, an example structure of data recorded on a medium (the first medium 10 in Fig. 1) that stores copyright-managed content to be subjected to the above described managed copying (MC) is described.

Most content such as a movie recorded on a conventional content-recorded disk like a Blu-ray Disc (BD (registered trademark)) is encrypted upon recording so as to prevent unauthorized use such as unauthorized copying.

Content encrypted in accordance with the Advanced Access Content System (AACS) standards that are standards for content copyright protection techniques is divided into units as described above, and is recorded as encrypted data, with different encryption keys used for the respective units . Such an encryption mechanism on the unit basis enables content use control on each unit, and thus realizes strict content use control in various manners.

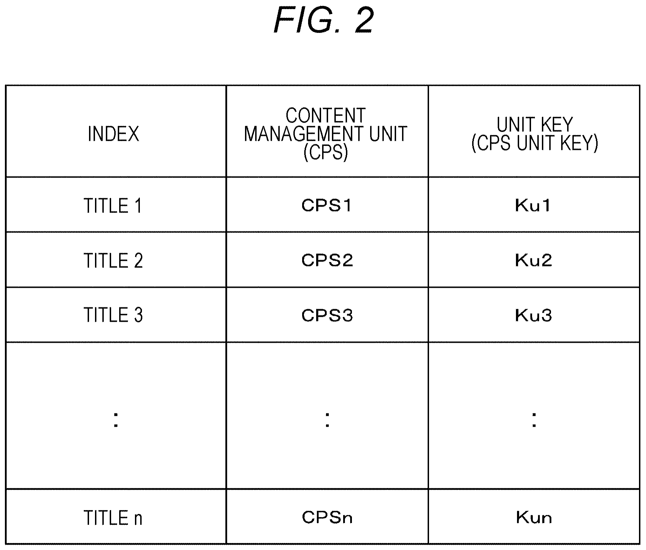

Each of the units formed by dividing content is called a content management unit or a CPS unit, and the encryption keys corresponding to the respective CPS units are called CPS unit keys, unit keys, or title keys. An example of the correspondence relationship between the divisional units of the content recorded on a disk and the encryption keys (unit keys) is shown in Fig. 2.

Fig. 2 is an example of a unit key management table showing the correspondence relationship between the units (CPS units) constituting the content recorded on a medium such as a disk and CPS unit keys serving as the encryption keys. This unit key management table is recorded together with the encrypted content on the medium (such as a BD).

As shown in Fig. 2, the CPS units that are structural data of the content are divided into CPS units 1 through n. CPS unit keys that are unique encryption keys are associated with the respective CPS units 1 through n.

In a case where the CPS unit 1 (CPS1) is reproduced, for example, decryption is performed with the CPS unit key 1 (Ku1). In a case where the CPS unit 2 (CPS2) is reproduced, the CPS unit key 2 (Ku2) needs to be used in decryption. For example, "titles" are used as the index showing the respective CPS units and the respective CPS unit keys. The "titles" are the index set for the respective CPS units, so that a CPS unit and a CPS unit key can be identified by designating the corresponding title.

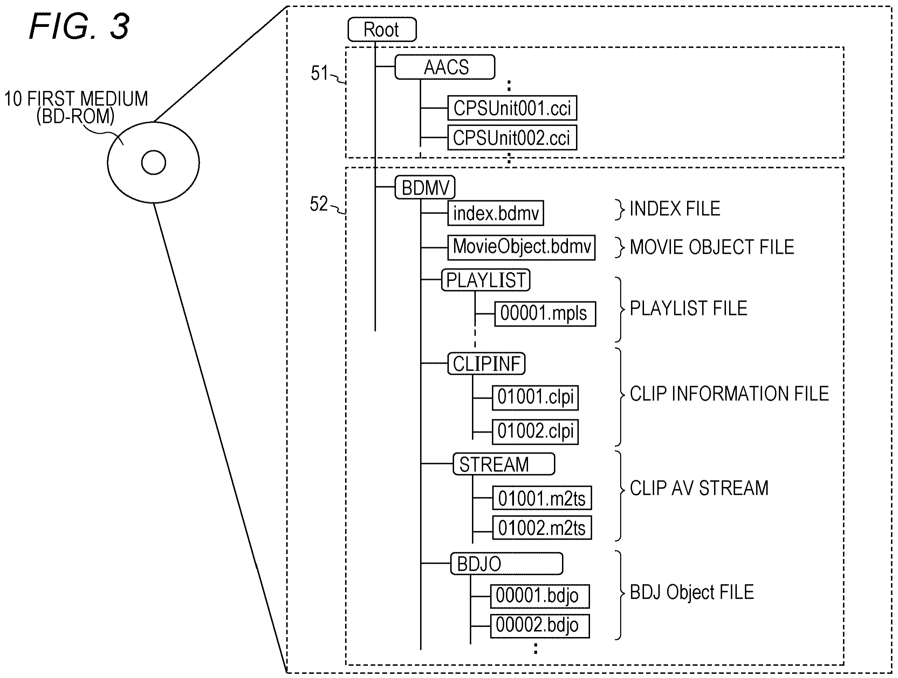

Fig. 3 shows a directory that is used in a case where the first medium 10 is a ROM-type Blu-ray Disc (registered trademark). The structure of this directory corresponds to the data recorded on the Blu-ray Disc (BD (registered trademark)).

The recorded data shown in Fig. 3 shows the directory structure of recorded data in the Blu-ray Disc Movie (BDMV) format.

As shown in Fig. 3, the directory is divided into a management information setting section 51 (an AACS directory) and a data section 52 (a BDMV directory).

The management information setting section 51 (AACS directory) stores a CPS unit key file, a use control information file, and the like.

Meanwhile, the data section 52 stores, under the BDMV directory,
an index file,
playlist files,
clip information files,
clip AV stream files, and
a BDJO file, for example.

The index file stores title information as the index information to be used in reproducing processes. The titles are the same as the titles registered in the unit key management table described above with reference to Fig. 2, and are data associated with the CPS units.

Each playlist file is a file that specifies the content reproduction order and the like in accordance with the program information about a reproduction program designated by a title, and stores designation information corresponding to clip information including reproduction position information.

Each clip information file is a file designated by a playlist file, and stores the reproduction position information and the like about the corresponding clip AV stream file.

Each clip AV stream file is a file that stores AV stream data to be reproduced.

The BDJO file is a file that stores execution control information about a file storing a JAVA (registered trademark) program, commands, and the like.

The sequence in which the information processing device reproduces the content recorded on an information recording medium is as follows.
(a) First, a certain title is designated from the index file through a reproduction application.
(b) The reproduction program associated with the designated title is selected.
(c) The playlist that specifies the content reproduction order and the like is selected in accordance with the program information about the selected reproduction program.
(d) An AV stream or a command is read as actual content data in accordance with the clip information specified in the selected playlist, and AV stream reproduction or a command execution process is performed.

In this content reproducing process, a unit and a unit key are identified in accordance with a selected title as described above with reference to Fig. 2. The unit key corresponding to the unit to be reproduced is obtained, and a decryption process is performed on a unit basis. In a case where the copying process described with reference to Fig. 1 is performed, the data to be copied is identified from information received from the management server 50, before the copying process is then performed.

### [A-3. Content copying process sequence under server management]

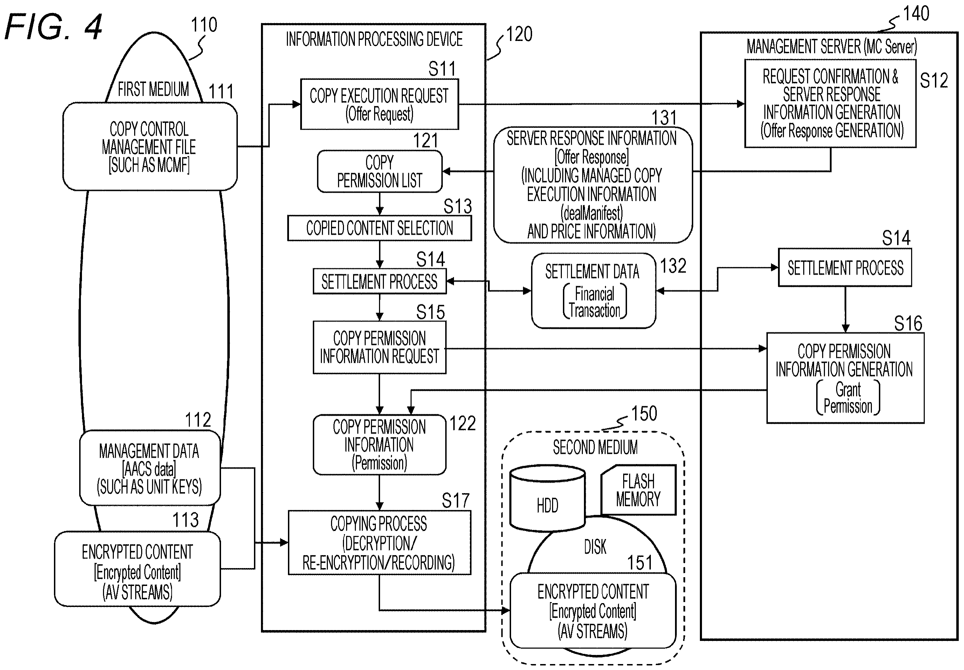

Referring now to Fig. 4 and other drawings, a content copying process sequence under server management is described. Fig. 4 is a diagram for explaining a sequence in which managed copying (MC), which is an example of a content copying process under server management, is performed.

Fig. 4 shows, from left,
a first medium 110 such as a ROM disk having content such as a movie recorded thereon,
an information processing device 120 serving as the user device that reads data such as the content from the first medium 110, and performs a copying process,
a second medium 150 that is a copy destination medium for the content, and is formed with a hard disk (HDD), a flash memory, an R/RE disk, or the like, and
a management server (MC server) 140 that performs a process of providing content copy permission information and the like.

The information processing device 120 is formed with a PC or a recording/reproducing device, for example. The information processing device 120 performs a process of receiving an input of data read from the first medium 110 and then recording the data on the second medium 150 serving as the copy destination medium formed with a hard disk (HDD), a flash memory, an R/RE disk, or the like. That is, the information processing device 120 performs a content copying process.

The first medium 110 is a ROM-type Blu-ray Disc (registered trademark) or a DVD, for example. The second medium 150 is a medium on which data can be written. Specifically, the second medium 150 is a hard disk (HDD), a flash memory, an R- or RE-type Blu-ray Disc (registered trademark), or a DVD, for example.

As shown in the drawing, encrypted content 113 that is use control content is recorded on the first medium 110 formed with a ROM disk, for example. The encrypted content 113 may be an Audio and Visual (AV) stream such as high-definition (HD) movie content formed with high-definition moving image data, or may be content formed with music data, a game program, an image file, audio data, text data, and the like.

As described above with reference to Fig. 2, the encrypted content 113 has a use management mechanism for each content management unit (CPS unit), and is encrypted with different unit keys (CPS unit keys) for the respective CPS units. That is, to perform different use control for each data section as a unit, the respective units are encrypted with different keys (these keys are called CPS unit keys, unit keys, or title keys).

The first medium 110 further stores: management data (AACS Data) 112 including the key information to be used in decryption of the encrypted content 113, use control information, and the like, and; a copy control management file (MCMF: Managed Copying Manifest File) 111 to be used in a process of copying content recorded on the first medium 110. The copy control management file (MCMF) will be described later in detail.

The management data 112 shown as information recorded on the first medium 110 in Fig. 4 is management data specified in Advanced Access Content System (AACS), which is a standard management system for content copyright protection techniques, for example. The management data 112 includes a CPS unit key file storing a key (unit key) to be used in decryption of the encrypted content 113, license information, a content certificate (CC) indicating the validity of the content, and an encryption key block (MKB: Media Key Block) storing a media key for obtaining the CPS unit key.

The Media Key Block (MKB) is now briefly described. The MKB is an encryption key block generated in accordance with a tree-structure key distribution method known as an example of a broadcast encryption method. The MKB is a key information block that enables acquisition of a media key [Km] necessary for decrypting content only through a process (decryption) based on a device key [Kd] stored in an information processing device of a user holding a valid license. This block uses an information distribution method in accordance with a so-called hierarchical tree structure. A media key [Km] can be acquired only when the user device (an information processing device) has a valid license. Acquisition of any media key [Km] is prohibited in a user device that is invalidated (revoked) . A device key [Kd] is stored in the memory of the information processing device 120 shown in Fig. 4.

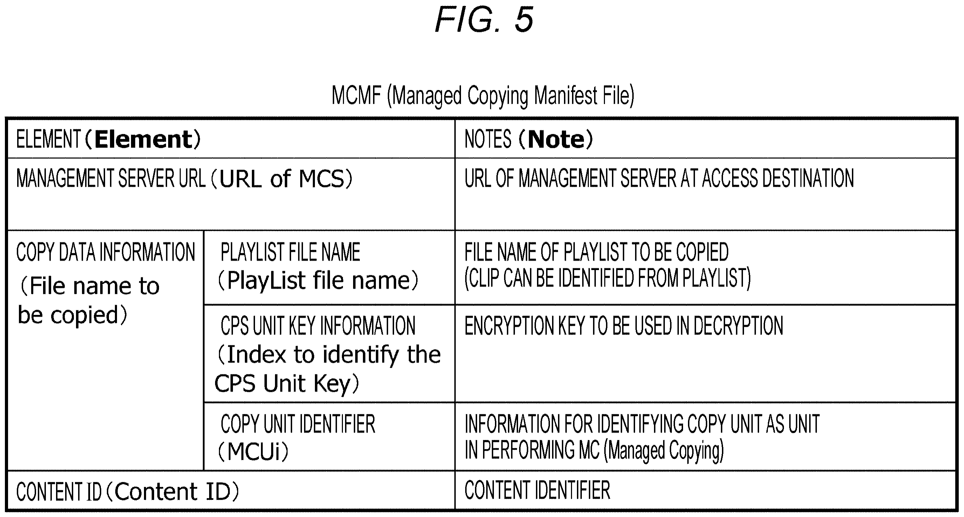

The copy control management file (MCMF: Managed Copying Manifest File) 111 shown as the recording information about the first medium 110 in Fig. 4 is a file to be used in executing a process of copying the content 113 recorded on the first medium 110, and stores XML descriptive data containing the data shown in Fig. 5, for example.

(1) Management server URL: the access information about the management server that provides the copy permission information; this is the access information about the management server 140 shown in Fig. 4.
(2) Copy data information (dealManifest)
   (2-1) Playlist file name: the file name of the playlist to be copied
   (2-2) CPS unit key information: the information for identifying the CPS unit key to be used in a process of decrypting the content to be copied
   (2-3) Copy unit identifier: the unit information for identifying the copy unit (MC unit) indicating a unit of copying in managed copying (MC)
(3) Content ID: the identifier of the content to be copied; an International Standard Audio/visual Number (ISAN) as content code information is used, for example.

Referring to Fig. 4, a process sequence is described. This process sequence is applied in a case where the encrypted content 113 recorded on the first medium 110, which is a ROM disk, is copied onto the second medium 150 formed with a flash memory, a hard disk, or an R/RE disk, for example.

In step S11, the information processing device 120 first transmits a copy execution request (Offer Request) to the management server 140, using the server information (such as a URI) recorded in the copy control management file (MCMF) 111 recorded on the first medium 110.

In this step, the content ID or the like corresponding to the content to be copied is transmitted to the management server 140.

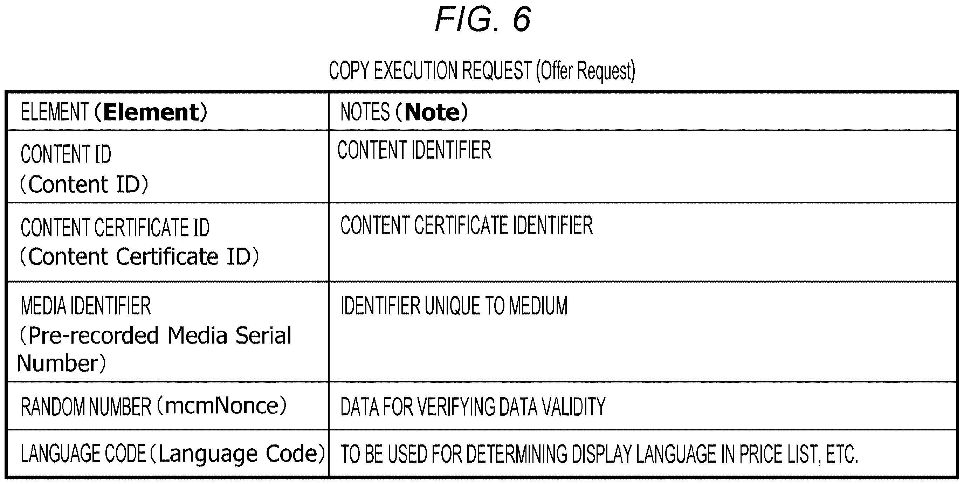

Fig. 6 shows an example of data contained in the copy execution request. As shown in Fig. 6, the copy execution request contains the data listed below, for example.
(a) Content ID: the identifier of the content stored in the first medium
(b) Content Certificate ID: the certificate for verifying the validity of the content
(c) Media identifier: the identifier of the first medium that is the original to be copied
(d) Random number: the data for verifying validity
(e) Language code: the code information about the language to be used by the information processing device

These pieces of information are contained in the request.

Each piece of the information (a) through (c) is read from the first medium 110. The (d) random number is generated in the information processing device 120. The (e) language code is recorded beforehand in the memory of the information processing device 120. The language code is obtained from the memory and is then transmitted.

The language code is used for determining the language of the detailed offer information contained in a response to be provided from the management server 140, for example.

Referring back to Fig. 4, the explanation of the content copying process sequence under server management is continued. In step S12, the management server 140 performs a process of verifying the validity of received information such as the content ID received from the information processing device 120. If the validity is verified without any problem, the management server 140 generates server response information (Offer Response) 131, and transmits the server response information 131 to the information processing device 120.

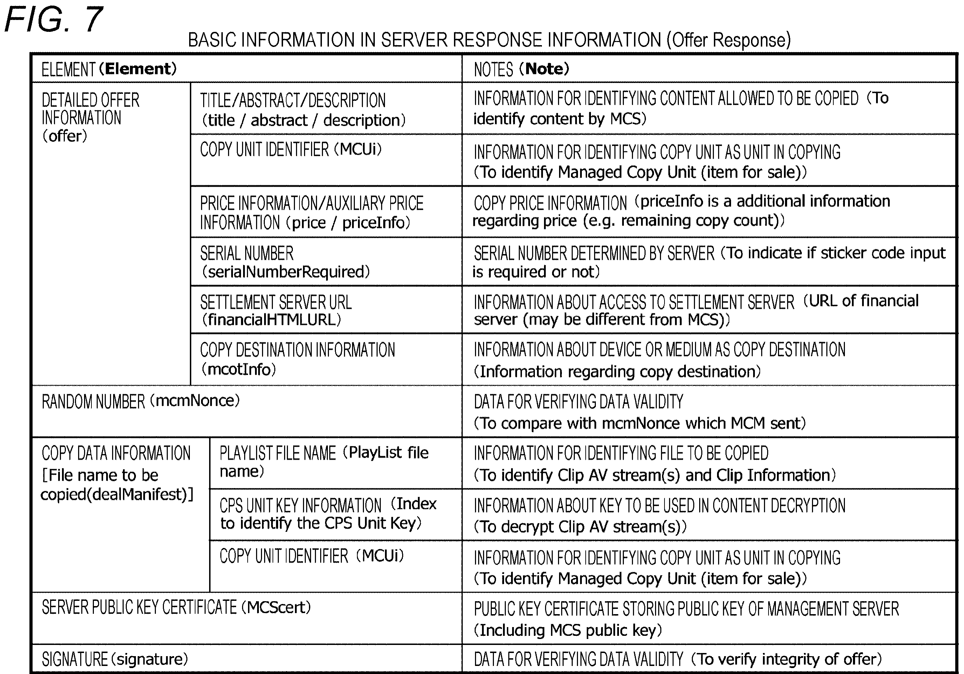

Referring now to Fig. 7, the basic information included in the server response information (Offer Response) 131 provided from the management server 140 to the information processing device 120 is described.

The basic information includes the pieces of information listed below.
(1) Detailed offer information
   (1a) Title/abstract/description (title/abstract/description): information about the title, the abstract, and the description of the copy-permitted content
   (1b) Copy unit identifier (MCU): the identifier for identifying a copy unit as a unit in copying; this corresponds to the content to be reproduced in accordance with a single playlist, for example.
   (1c) Price information (price) : information about the price of copying
   (1d) Auxiliary price information (price Info): auxiliary information about the price
   (1e) Settlement server URL (financial HTML URL) : access information about the server that performs a copying fee settlement process
   (1f) Copy destination information (mcot Info): information indicating the types of media allowed to be a copy destination device; the types of media, such as HDD and flash memory, are recorded.
(2) Random number (mcm Nonce): the random number for verifying data validity
(3) Copy data information (File name to be copied) (= deal Manifest)
   (3a) Playlist file name (Playlist file name) : the file name of the playlist to be copied; as the playlist is identified, the clip information file and the clip AV stream file can also be identified.
   (3b) CPS unit key information (Index to identify the CPS Unit Key) : information for identifying the key (CPS unit key) for decrypting the copied content
   (3c) Copy unit identifier (MCUi): information for identifying the copy unit (MCU) indicating the unit in copying
(4) Server public key certificate (MCScert): the certificate storing the server public key to be used in encrypted communication, signature verification, and the like
(5) Signature (signature) : signature data for checking for falsification in entire data

The above pieces of information are the basic information included in the server response information (Offer Response) 131 provided from the management server 140 to the information processing device 120. Those pieces of information are set for each copy unit (MCU) as a unit in a copying process.

A copy unit (MCU) is formed with a single playlist, the content to be reproduced in accordance with the playlist, reproduction control information, and the like.

The server response information (Offer Response) 131 shown in Fig. 7 includes the same information as the information recorded in the copy control management file (MCMF) 111 recorded on the first medium 110 as described above with reference to Fig. 5. That is, the information is the above described (3) copy data information (File name to be copied) (= dealManifest). The information processing device 120 performs a copying process, while giving priority to the information being received from the management server 140. This is because the information being received from the management server 140 might be sequentially updated.

Referring back to Fig. 4, the explanation of the content copying process sequence under server management is continued. In step S12, the management server 140 performs a process of verifying the validity of received information such as the content ID received from the information processing device 120. If the validity is verified without any problem, the management server 140 generates server response information (Offer Response) 131, and transmits the server response information 131 to the information processing device 120.

Having received the server response information (Offer Response) 131, the information processing device 120 displays a copy-permitted content list (a copy permission list 131) on the display unit of the information processing device 120 by using the response information (Offer Response) 131 received from the management server 140. In this list, prices for copying the respective pieces of the content are set, for example.

In step S13, the user performs content selection to designate the content to be copied from the copy-permitted content list. In step S14, the information processing device 120 further performs a settlement process with the management server 140, in conjunction with the copying process. Specifically, a process of transferring settlement data 132 is performed between the information processing device 120 and the management server 140. The server that performs the settlement process may be a different settlement server from the management server. In a case where a copying process is performed on content that can be copied for free, the settlement process is skipped.

After the settlement process to be performed as necessary is completed, the information processing device 120 in step S15 transmits a copy permission information request to the management server 140. In response to the copy permission information request transmitted from the information processing device 120, the management server 140 in step S16 generates copy permission information 122 after confirming payment, and transmits the copy permission information 122 to the information processing device 120.

Only if the information processing device 120 has received the copy permission information 122 from the management server 140, the information processing device 120 in step S17 performs a content copying process . Specifically, the encrypted content 113 is read from the first medium 110, the data to be copied is selected, a decryption process is performed, and the data is copied onto the second medium 150 as the copy destination formed with a hard disk (HDD), a flash memory, an R/RE disk, or the like.

The content copying process is performed in the sequence described below, for example.
(1) Encrypted content is read from the first medium 110 (original medium).
(2) The encrypted content is decrypted in accordance with a first management system compatible with the first medium 110 (original medium).
(3) The content is encrypted in accordance with a second management system compatible with the second medium 150 (copy destination medium).
(4) The encrypted content is recorded on the second medium 150 (copy destination medium).

The process is performed in the above sequence.

As described above, in a case where encrypted content is read from a disk and is copied onto a medium such as another disk, the encrypted content to be copied is decrypted, and is then re-encrypted compliant to the standard of a copyright management system compatible with the copy destination medium. The re-encrypted content is recorded. As such a process is performed, use of the content is also controlled on the copy destination medium, and unauthorized use and distribution of the copied content can be prevented.

Content copyright management systems for digital data are collectively called Digital Rights Management (DRM) systems. Digital data can be recorded on various kinds of media, and various DRM systems are used in accordance with the types of media. In a case where digital data is copied between media that use different DRM systems, the DRM system in use is switched from the DRM system used by the original medium to the DRM system used by the copy destination medium, and the copying is then performed. With this mechanism, unauthorized use and distribution of the copied content can be prevented.

If the management system of the original (hereinafter referred to as the first DRM) and the content management system of the copy destination (hereinafter referred to as the second DRM) differ from each other, the encrypted content of the original is decrypted, and a process compliant to the management system of the copy destination (second DRM), or re-encryption using another encryption key, needs to be performed before recording, as shown in the above described sequence of steps (1) through (4).

In a case where the first management system is a system compliant with the AACS standards, the decryption of the encrypted content compliant with the first management system in the step (2) is performed as decryption of each CPS unit using a CPS unit key.

The second management system compatible with the copy destination medium (second medium 150) may be compliant with AACS, or may be some other management system compliant with various standards compatible with media, such as CPRM, MagicGate, and VCPS.

### [B. Process of recording data on a copy destination medium in a different format from the original]

Next, a process of recording data on a copy destination medium in a different format from the original is described.

### [B-1. Problems caused by a difference in format]

The above described managed copying (MC) does not cause any problem, as long as data is copied on another medium without any change in the Blu-ray Disc Movie (BDM) format, which is the data format used in Blu-ray Discs (BDs (registered trademark)). However, when the data recorded on a BD is recorded on another medium in a different format from the BDMV format, various problems might be caused as described above.

A reproduction application compatible with the BDMV format, which is the recording format of BDs, is not installed in all mobile terminals such as smartphones and tablet terminals. Therefore, in a case where the data recorded on a BD is copied into a mobile terminal, content recording needs to be performed in a format that is not the BDMV format, or in a data format that can be reproduced by the reproduction application installed in the mobile terminal.

In a case where the original to be copied and the copy destination are in different formats, differences might exist between the original data and the copy destination data. These differences will be described for each of the following items (a) through (d).
(a) Image data
(b) Audio data
(c) Subtitle data
(d) Metadata

### (a) Image data

In a case where the original to be copied and the copy destination are in different formats, examples of differences that might exist between the original data and the image data at the copy destination include the following items.
(a1) Codec (the encoding format)
(a2) Image size (the size (the number of pixels) in the horizontal direction and the vertical direction)
(a3) Video frame rate
(a4) Maximum video bit rate

For example, in each of the above items (a1) through (a4), the details (the type of the codec and the permitted value) of a permission vary depending on the data format.

In a case where the data format (such as BDMV) of the original medium and the data format of the copy destination medium differ from each other, a reproduction error will be caused if the data recorded on the original medium is recorded directly on the copy destination medium. To prevent this, the above elements (a1) through (a4) should be adjusted to the recording format of the copy destination medium before recording.

Examples of (a1) codec (encoding formats) include various encoding formats such as MPEG, MPEG4-HEVC, and AVC. The reproducible format varies depending on the reproduction application that performs a process of reproducing data recorded on a medium, and encoded data compatible with the codec that can be reproduced by the reproduction application that reproduces the data recorded on the medium needs to be recorded on the copy destination medium.

### (b) Audio data

In a case where the original to be copied and the copy destination are in different formats, examples of differences that might exist between the original data and the audio data at the copy destination include the following items.
(b1) Codec (the encoding format)
(b2) Number of channels (such as 2 (stereo), or 4 to 5 (surround))
(b3) Sampling pattern (sampling frequency and sampling size)
(b4) Maximum bit rate
(b5) Language (such as English or Japanese)

For example, in each of the above items (b1) through (b5), the details (the type of the codec and the permitted value) of a permission vary depending on the data format.

For example, in a case where the data format (such as BDMV) of the original medium and the recording data format of the copy destination medium differ from each other, each of the above elements (b1) through (b5) needs to be adjusted to a structure permitted by the data format of the copy destination medium.

### (c) Subtitle data

In a case where the original to be copied and the copy destination are in different formats, examples of differences that might exist between the original data and the subtitle data at the copy destination include the following items.
(c1) Subtitle size (the size (the number of pixels) in the horizontal direction and the vertical direction)
(c2) Subtitle codec (Namespace)
(c3) Subtitle scheme (subtitle format information (XML data))
(c4) Subtitle type (content type)
(c5) Language (such as English or Japanese)

For example, in each of the above items (c1) through (c5), the details (the type of the codec and the permitted value) of a permission vary depending on the data format.

For example, in a case where the data format (such as BDMV) of the data recorded on the original medium and the recording data format of the copy destination medium differ from each other, each of the above elements (c1) through (c5) needs to be adjusted to a structure permitted by the data format of the copy destination medium.

### (d) Metadata

Metadata includes reproduction control information, reproduction content information, and the like, which are necessary for the reproduction application that performs a process of reproducing the data recorded in each format, for example.

Specifically, metadata includes chapter information to be used as reproduction control information, a sleeve picture to be used as data to be reproduced, and the like. These pieces of data are the metadata specified in a particular format, such as a format A. The reproduction application X that reproduces data in the format A performs a reproducing process using the chapter information and the sleeve picture.

However, a reproduction application Y that does not reproduce data in the format A but reproduces data in a format B might perform a reproducing process, not using the chapter information and the sleeve picture.

For example, in a case where the data format (such as BDMV) of the data recorded on the original medium does not include the chapter information and the sleeve picture, and the application that reproduces the data recorded on the copy destination medium performs reproduction using the chapter information and the sleeve picture, it is necessary to add the chapter information and the sleeve picture to the data to be recorded in a copying process.

In a case where the data format of the original to be copied and the data format of the copy destination differ from each other, moving the data in the data format of the original directly to the copy destination might disable reproduction of copied content from the copy destination medium, or might result in incorrect reproduction.

A mechanism to solve this problem according to the present disclosure will be described below.

### [B-2. Process of recording data on the second medium in a different format under server management]

The following is a description of a structure in which data for enabling correct content reproduction can be recorded on the copy destination medium without any omission in a case where the data recording format of the original and the data recording format of the copy destination differ from each other.

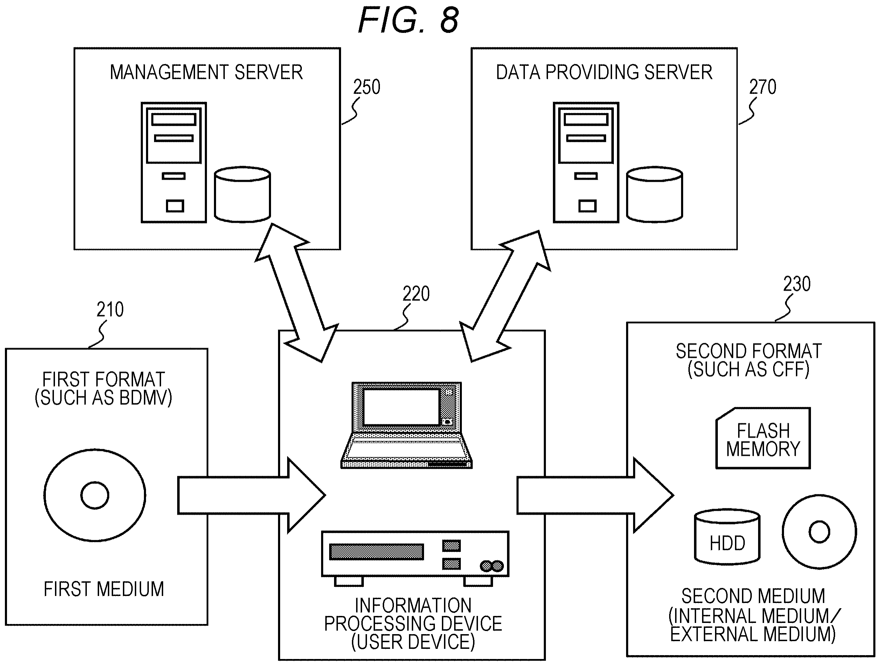

Referring to Fig. 8, an example structure of a system for performing a process according to the present disclosure is first described.

The structure shown in Fig. 8 differs from the structure shown in Fig. 1 in further including a data providing server 270.

Except for the data providing server 270, the components shown in Fig. 8 perform substantially the same processes as the respective components shown in Fig. 1.

The data providing server 270 is a server that provides data to be recorded on a copy destination medium. If there is data that cannot be obtained from an original medium, the data providing server 270 provides the data to an information processing device (a user device) 220 that is a copying process execution device.

The information processing device 220 shown in Fig. 8 is a PC or a recorder (a recording/reproducing device) or the like owned by a user, and can perform reproduction from a first medium 210 mounted in the information processing device 220. A movie or the like that is content to be subjected to copyright management is recorded on the first medium 10.

The information processing device 220 performs a process of copying the content recorded on the first medium 210 onto a second medium 230 that is another medium.

In this embodiment, the content that is recorded on the first medium 210 and is to be copied is content recorded in a first format.

Meanwhile, the content to be copied on to the second medium 230 as the copy destination is recorded in a second format that differs from the first format.

For example, the first medium 210 is a BD, and the first format is BDMV.

The second medium 230 is a medium such as a flash memory or an HDD, and the second format is a different format from BDMV. Specifically, the second format is Common File Format (CFF), for example.

In the example described below, a "copying process" means an entire data recording process to be performed on the second medium 230 so that the same content as the content recorded on the first medium 210 can be reproduced from the second medium 230.

That is, a copying process may be a process of recording recorded data read from the first medium 210 on the second medium 230, or may be a process of obtaining, from the data providing server 270, data that cannot be obtained from the first medium 210, and recording the data onto the second medium 230.

Although only one data providing server 270 is shown in Fig. 8, it is possible to provide more than one data providing server 270, and the data providing servers may provide various kinds of data to be recorded on the second medium 230 in copying processes. Alternatively, the data providing server 270 may be integrated with the management server 250.

In the structure shown in Fig. 8, the information processing device (user device) 229 in Fig. 8 performs a copying process only if the information processing device 220 has received copy permission information from the management server 250, as in the example described above with reference to Fig. 1 and other drawings. That is, a copying process is performed under management of the management server 250 in accordance with the above described managed copying (MC) system.

The information processing device 220 is a PC or a recorder (a recording/reproducing device) or the like owned by a user, and can perform reproduction from the first medium 210 mounted in the information processing device 220. A movie or the like that is content to be subjected to copyright management is recorded on the first medium 210.

The first medium 210 stores content recorded in the first format (BDMV, for example).

The information processing device 220 performs a copying process so that the data recorded on the first medium 10 can also be reproduced from the second medium 230 that is another medium.

However, on the second medium 230, content is recorded in the second format that differs from the data recording format of the first medium 210.

The second medium 230 may be an internal medium formed inside the information processing device 220, a medium that can be detachably attached to the information processing device 220, or an external medium provided in an external device such as a mobile terminal like a smartphone or a tablet terminal. The second medium 230 is a hard disk (HDD), a flash memory, or a disk (such as a BD or a DVD) on which data can be recorded, for example.

As described above, if a user unlimitedly copies the content recorded on the first medium 210 onto the second medium 230, a large number of copies of the content will be generated, resulting in unauthorized use and distribution of the content.

To prevent such a situation, the information processing device 220 as the user device is connected to the management server 250 when performing copying of the content, and then receives copy permission information from the management server 50. To receive the copy permission information, it is necessary to confirm the validity of the first medium owned by the user, or pay a predetermined fee, for example.

By carrying out these predetermined procedures, the information processing device 20 receives the copy permission information from the management server 250, and can perform copying of the content only after receiving the copy permission information. This is the same process as the managed copying (MC) described above with reference to Fig. 1 and other drawings.

One of the differences from the copying process described above with reference to Fig. 1 and others is that the information processing device 220 shown in Fig. 8 obtains, from the data providing server 250, data that cannot be obtained from the first medium 210, and records the data on the second medium 230.

### [B-3. Copy control management file (MCMF: Managed Copying Manifest File) recorded on the first medium]

The first medium 210 is a ROM-type Blu-ray Disc (registered trademark) or a DVD, for example.

Content that is use control content is recorded on the first medium 210, as in the example described above with reference to Fig. 4. The content may be an Audio and Visual (AV) stream such as high-definition (HD) movie content formed with high-definition moving image data, or may be content formed with music data, a game program, an image file, audio data, text data, and the like.

As described above with reference to Fig. 2, the content is encrypted content, for example. The encrypted content has a use management mechanism for each content management unit (CPS unit), and is encrypted with different unit keys (CPS unit keys) for the respective CPS units. That is, to perform different use control for each data section as a unit, the respective units are encrypted with different keys (these keys are called CPS unit keys, unit keys, or title keys).

Further, management data (AACS Data) including key information to be used in decryption of the encrypted content, and use control information is recorded on the first medium 210.

The management data is the management data specified in Advanced Access Content System (AACS), which is the standard management system for content copyright protection techniques, for example, as in the example described above with reference to Fig. 4. Specifically, the management data includes a CPS unit key file that stores the key (unit key) to be used in decryption of the encrypted content, license information, a content certificate (CC) indicating the validity of the content, and an encryption key block (Media Key Block (MKB)) that stores the media key for obtaining the CBS unit key.

The first medium 210 further stores a copy control management file (MCMF: Managed Copying Manifest File) to be used in a process of copying content recorded on the first medium 210.

However, the first medium 210 shown in Fig. 8 stores different data from the copy control management file (MCMF) described above with reference to Fig. 5.

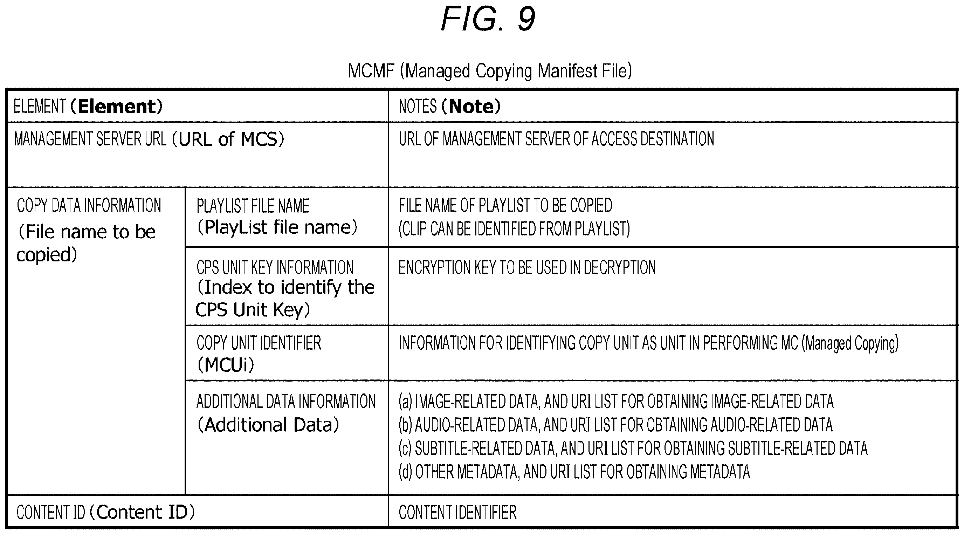

Referring now to Fig. 9, the copy control management file (MCMF) to be used in the system shown in Fig. 8 is described.

The copy control management file (MCMF: Managed Copying Manifest File) as the recording information about the first medium 210 is a file to be used in executing a process of copying the content recorded on the first medium 210, and stores XML descriptive data containing the data shown in Fig. 9, for example.
(1) Management server URL: the access information about the management server that provides the copy permission information; this is the access information about the management server 250 shown in Fig. 8.
(2) Copy data information (dealManifest)
   (2-1) Playlist file name: the file name of the playlist to be copied
   (2-2) CPS unit key information: the information for identifying the CPS unit key to be used in aprocess of decrypting the content to be copied
   (2-3) Copy unit identifier: the unit information for identifying the copy unit (MC unit) indicating a unit of copying in managed copying (MC)
   (2-4) Additional data information: missing data that cannot be recorded on the second medium by copying the content recorded on the first medium, and data access information (a URI, for example) for obtaining the missing data are recorded herein.
(3) Content ID: the identifier of the content to be copied; an International Standard Audio/visual Number (ISAN) as content code information is used, for example.

The difference between the copy control management file (MCMF) shown in Fig. 9 and the copy control management file (MCMF) shown in Fig. 5 is that (2-4) additional data information is added to the copy control management file (MCMF) shown in Fig. 9. The other aspects are the same as those of the copy control management file (MCMF) shown in Fig. 5.

As described above, (2-4) additional data information includes: missing data that cannot be recorded on the second medium by copying the content recorded on the first medium as the original medium; and data access information (a URI, for example) for obtaining the missing data.

The data access information is the access information regarding the data stored in the data providing server 270 shown in Fig. 8, and includes a Uniform Resource Identifier (URI), for example.

As described above, in a case where the original to be copied and the copy destination use different formats, the original to be copied and the copy destination might need different data. Specifically, the copy destination might need the following data that differs from the data for the original to be copied.
(a) Image data compatible with a different codec (an encoding format)
(b) Audio data compatible with a different codec (an encoding format)
(c) Different subtitle data
(d) Different metadata

In a case where the above differences exist, there are times when the data to be recorded on the second medium 230 as the copy destination medium cannot be obtained from the data recorded on the first medium 210 as the original medium.

The data that cannot be obtained, or the data access information necessary for obtaining the data is recorded in the "additional data information" in the copy control management file (MCMF) shown in Fig. 9.

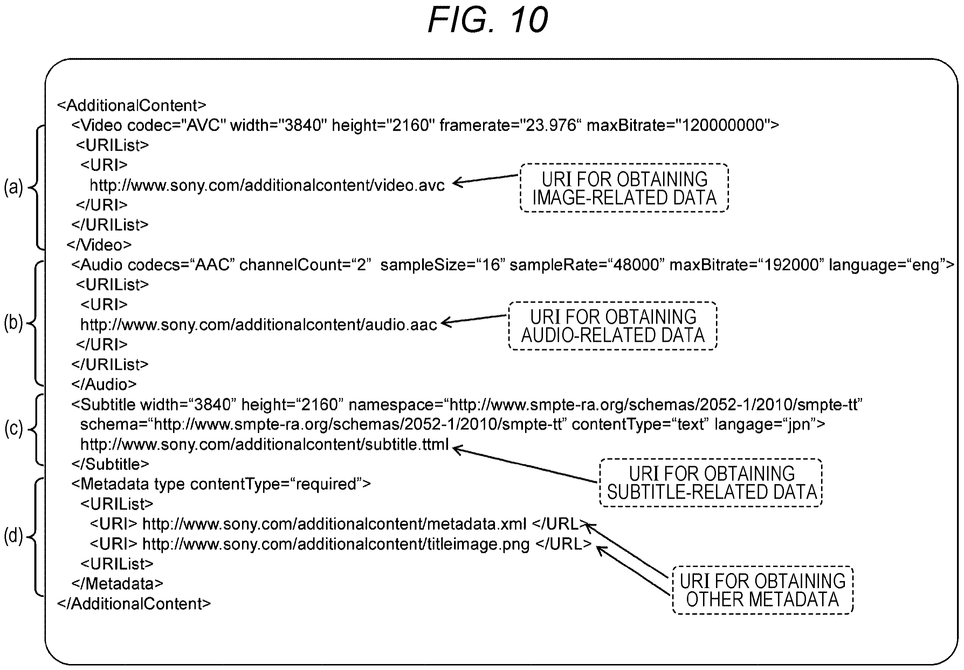

Fig. 10 shows a specific example (XML data) of the "additional data information" in the copy control management file (MCMF) shown in Fig. 9.

The XML data shown in Fig. 10 is an example of the XML data corresponding to the items in the "additional data information" in the copy control management file (MCMF) shown in Fig. 9.

The symbols (a) through (d) shown on the left side in Fig. 10 correspond to the respective items (shown below) in the "additional data information" in the copy control management file (MCMF) shown in Fig. 9.
(a) Image-related data, and a URI list for obtaining image-related data
(b) Audio-related data, and a URI list for obtaining audio-related data
(c) Subtitle-related data, and a URI list for obtaining subtitle-related data
(d) Other metadata, and a URI list for obtaining metadata The respective pieces of data (a) through (d) are recorded in the XML data shown in Fig. 10.

The image-related data information listed below is recorded in the data section (a) in Fig. 10.
(a1) Videocodec = "AVC"
(a2) width = "3840"
(a3) height = "2160"
(a4) framerate = "23.976"
(a5) maxBitrate = "120000000"
(a6) http://www.sony.com/additionalcontent/video.avc</URI>

The URI shown in (a6) is the access information about the image data of the content to be copied. In the above example, the URI is the access information about AVC-encoded image data.

In the structure shown in Fig. 8, the image data recorded on the first medium 210 is MPEG-encoded image data allowed in the BDMV format, for example.

However, if the MPEG-encoded image data is recorded directly on the second medium 230, the recorded MPEG-encoded image data cannot be reproduced by a reproduction device for the data recorded on the second medium 230 in some cases.

An example of such a case is where the reproduction application installed in the reproduction device in which the second medium 230 as the copy destination is mounted is capable of reproducing AVC-encoded data, but does not have a function of reproducing data in the BDMV format.

The URI shown in (a6) is the access information for obtaining the AVC-encoded data to be recorded on the second medium 230 in such a case.

On the second medium 230 as the copy destination, data needs to be recorded in the second format, which differs from the first format as the data format of the first medium 210 that is the original medium. In a case where the encoded data allowed in the second format is AVC-encoded data, AVC-encoded data is obtained by using the URI, and is then recorded on the second medium 230.

Even if the MPEG data recorded on the first medium 210 is recorded on the second medium 230, content cannot be reproduced from the second medium. To prevent such a situation, encoded image data that is allowed in the second format and is to be recorded on the second medium 230 is obtained from the data providing server 270, and is then recorded on the second medium 230.

The URI shown in (a6) is the access information for obtaining this encoded image data, or AVC-encoded image data in this example.

Using this URI, the information processing device 220 obtains (downloads) AVC-encoded image data, and records the AVC-encoded image data on the second medium 230. This AVC-encoded image data differs in encoding format from the image data that is recorded on the first medium 210 and is to be copied, but is of the same content.

The unit in a copying process is a playlist that is set in the first medium 210, for example, and the AVC-encoded image data to be obtained by using the URI corresponds to the content to be reproduced in accordance with the playlist selected as the object to be copied.

The above elements (a1) through (a5) indicate the attribute information regarding the image data to be obtained with the URI shown in (a6).

These pieces of attribute information as the attribute information corresponding to the content to be recorded are recorded on the second medium 230 in the process of recording the image data obtained with the URI shown in (a6) on the second medium 230.

In this manner, image data that can be accessed with an URI, and data containing the attribute information about the image data are recorded on the second medium.

If there exist not only the above elements (a1) through (a5) but also attribute information and control information related to image data that can be recorded on the second medium 230 by copying the information recorded on the first medium 210, the information processing device 220 in a copying process reads these pieces of data from the first medium 210, and records the read data on the second medium 230.

In a copying process, the image-related data to be recorded on the second medium 230 is one of the pieces of data listed below, or a combination of these pieces of data.
(1) Data obtained from the content storage area of the first medium
(2) Data obtained from the "additional data information" in the copy control management file (MCMF) of the first medium (the above elements (a1) through (a5))
(3) Data obtained by using the URI recorded in the "additional data information" in the copy control management file (MCMF) of the first medium (the data obtained with the URI shown in (a6))

In a case where the information processing device 220 has a function of converting MPEG-encoded data into AVC-encoded data, for example, MPEG image data read from the first medium 210 may be converted into AVC image data, and the converted image data may be recorded on the second medium 230. In this case, there is no need to use the URI shown in the "additional data information" in the copy control management file (MCMF) .

The audio-related data information listed below is recorded in the data section (b) in Fig. 10.
(b1) Audiocodec = "AAC"
(b2) channeCount = "2"
(b3) sampleSize = "16"
(b4) sampleRate = "48000"
(b5) maxBitrate = "192000"
(b6) language = "eng"
(b7) http://www.sony.com/additionalcontent/audio.aac</URI>

The URI shown in (b7) is the access information about the audio data of the content to be copied. In the above example, the URI is the access information about AAC-encoded audio data.

In the structure shown in Fig. 8, encoded audio data allowed in the BDMV format, for example, is recorded on the audio data recorded on the first medium 210.

However, if the encoded audio data is recorded directly on the second medium 230, the recorded audio data cannot be reproduced by a reproduction device for the data recorded on the second medium 230 in some cases.

An example of such a case is where the reproduction application installed in the reproduction device in which the second medium 230 as the copy destination is mounted does not have a function of reproducing encoded audio data compatible with the BDMV format.

The URI shown in (b7) is the access information for obtaining the encoded audio data to be recorded on the second medium 230 in such a case.

On the second medium 230 as the copy destination, data needs to be recorded in the second format, which differs from the first format as the data format of the first medium 210 that is the original medium. In a case where the encoded data allowed in the second format is AAC-encoded data, AAC-encoded data is obtained by using the URI, and is then recorded on the second medium 230.

Even if the MPEG data recorded on the first medium 210 is recorded on the second medium 230, content cannot be reproduced from the second medium. To prevent such a situation, encoded audio data that is allowed in the second format and is to be recorded on the second medium 230 is obtained from the data providing server 270, and is then recorded on the second medium 230.

The URI shown in (b7) is the access information for obtaining this encoded audio data, or AAC-encoded audio data in this example.

Using this URI, the information processing device 220 obtains (downloads) AAC audio data, and records the AAC audio data on the second medium 230. The obtained audio data differs in encoding format from the audio data of the content that is recorded on the first medium 210 and is to be copied, but is of the same content.

The unit in a copying process is a playlist that is set in the first medium 210, for example, and the audio data to be obtained by using the URI corresponds to the content to be reproduced in accordance with the playlist selected as the object to be copied.

The above elements (b1) through (b6) indicate the attribute information regarding the audio data to be obtained with the URI shown in (b7).

These pieces of attribute information as the attribute information corresponding to the content to be recorded are recorded on the second medium 230 in the process of recording the audio data obtained with the URI shown in (b7) on the second medium 230.

In this manner, audio data that can be accessed with an URI, and data containing the attribute information about the audio data are recorded on the second medium.

If there exist not only the above elements (b1) through (b6) but also attribute information and control information related to audio data that can be recorded on the second medium 230 by copying the information recorded on the first medium 210, the information processing device 220 in a copying process reads these pieces of data from the first medium 210, and records the read data on the second medium 230.

In a copying process, the audio-related data to be recorded on the second medium 230 is one of the pieces of data listed below, or a combination of these pieces of data.
(1) Data obtained from the content storage area of the first medium
(2) Data obtained from the "additional data information" in the copy control management file (MCMF) of the first medium (the above elements (b1) through (b6))
(3) Data obtained by using the URI recorded in the "additional data information" in the copy control management file (MCMF) of the first medium (the data obtained with the URI shown in (b7))

In a case where the information processing device 220 has a function of converting encoded data read from the first medium into encoded data compatible with the format of the second medium, for example, data read from the first medium 210 may be converted and then recorded on the second medium 230. In this case, there is no need to use the URI shown in the "additional data information" in the copy control management file (MCMF).

The subtitle-related data information listed below is recorded in the data section (c) in Fig. 10.
(c1) width = "3840"
(c2) height = "2160"
(c3) namespace = "http://www.smpte - /smpte-tt"
(c4) schema = "http://www.smpte - /smpte-tt"
(c5) contenType = "text"
(c6) language = "jpn"
(c7) http://www.sony.com/additionalcontent/subtitle.ttml</URI>

The URI shown in (c7) is the access information about the subtitle data of the content to be copied.

In the structure shown in Fig. 8, if the content recorded on the first medium 210 does not contain subtitle data, or even if subtitle data is stored in the first medium 210, the subtitle data in the format cannot be recorded on the second medium 230 in some cases. An example of such a case is where the format of the subtitle data is a format not allowed by the reproduction application installed in the reproduction device in which the second medium 230 as the copy destination is mounted.

In such a case, the information processing device 220 in a copying process needs to record, on the second medium 230, subtitle data in a different format from the format of the first medium.

Such subtitle data is obtained from the data providing server 270, and is then recorded on the second medium 230. The URI shown in (c7) is the access information indicating the subtitle data address for obtaining the subtitle data.

Using this URI, the information processing device 220 obtains (downloads) the subtitle data, and records the subtitle data on the second medium 230. The obtained subtitle data differs in format from the subtitle of the content that is recorded on the first medium 210 and is to be copied, but is of the same content.

The unit in a copying process is a playlist that is set in the first medium 210, for example, and the subtitle data to be obtained by using the URI corresponds to the content to be reproduced in accordance with the playlist selected as the object to be copied.

The above elements (c1) through (c6) indicate the attribute information regarding the subtitle data to be obtained by using the URI shown in (c7), and the URIs for obtaining the attribute information.

The attribute information recorded in the above elements (c1) through (c6) and the attribute information obtained with the URIs are recorded as the attribute information corresponding to the content to be recorded on the second medium 230 in the process of recording the subtitle data obtained with the URI shown in (c7) on the second medium 230.

In this manner, subtitle data that can be accessed with an URI, and data containing the attribute information about the subtitle data are recorded on the second medium.

If there exist not only the above elements (c1) through (c6) but also attribute information and control information related to subtitle data that can be recorded on the second medium 230 by copying the information recorded on the first medium 210, the information processing device 220 in a copying process reads these pieces of data from the first medium 210, and records the read data on the second medium 230.

The subtitle-related data to be recorded on the second medium 230 is one of the pieces of data listed below, or a combination of these pieces of data.
(1) Data obtained from the content storage area of the first medium
(2) Data obtained from the "additional data information" in the copy control management file (MCMF) of the first medium (the above elements (c1), (c2), (c5), and (b6))
(3) Data obtained by using the URIs recorded in the "additional data information" in the copy control management file (MCMF) of the first medium (the data obtained with the URIs shown in (c3), (c4), and (b7))

In a case where the information processing device 220 has a function of converting subtitle data read from the first medium into subtitle data compatible with the format of the second medium, for example, data read from the first medium 210 may be converted and then recorded on the second medium 230. In this case, there is no need to use any URI shown in the "additional data information" in the copy control management file (MCMF).

The metadata information listed below is recorded in the data section (d) in Fig. 10.
(d1) contentType="required"
(d2) http://www.sony.com/additionalcontent/metadata.xml</URI>
(d3) http://www.sony.com/additionalcontent/metadata.png</URI>

The URIs shown in (d2) and (d3) are the access information about the metadata corresponding to the content to be copied.

For example, (d2) is the access information for obtaining XML data indicating chapter information, and (d3) is the URI indicating the access information for obtaining a sleeve picture.

In the structure shown in Fig. 8, there are cases where the content recorded on the first medium 210 also contains metadata, but the metadata recorded on the first medium 210 is not compatible with the data to be reproduced by the reproduction application installed in the reproduction device in which the second medium 230 as the copy destination is mounted.

In such a case, the information processing device 220 in a copying process needs to obtain metadata not recorded on the first medium 210, and then record the metadata on the second medium 230.

The information processing device 220 obtains such metadata from the data providing server 270, and then records the obtained metadata on the second medium 230. The URIs shown in (d2) and (d3) are the access information for obtaining the metadata.

Using these URIs, the information processing device 220 obtains (downloads) the metadata, and records the metadata on the second medium 230. The obtained metadata is used in reproducing the content recorded on the second medium 230.

The unit in a copying process is a playlist that is set in the first medium 210, for example, and the metadata to be obtained by using the URIs corresponds to the content to be reproduced in accordance with the playlist selected as the object to be copied.

The above element (d1) indicates the attribute information regarding the metadata to be obtained with the URIs shown in (d2) and (d3).

The attribute information recorded in (d1) is recorded as the attribute information corresponding to the content to be recorded on the second medium 230 in the process of recording the metadata obtained with the URIs shown in (d2) and (d3) on the second medium 230.

In this manner, metadata that can be accessed with URIs, and data containing the attribute information regarding the metadata are recorded on the second medium.

If there exist not only the above elements (d1) through (d3) but also metadata that can be recorded on the second medium 230 by copying the information recorded on the first medium 210, the information processing device 220 in a copying process reads the data from the first medium 210, and records the read data on the second medium 230.

The metadata to be recorded on the second medium 230 is one of the pieces of data listed below, or a combination of these pieces of data.
(1) Data obtained from the content storage area of the first medium
(2) Data obtained from the "additional data information" in the copy control management file (MCMF) of the first medium (the above element (d1))
(3) Data obtained by using the URIs recorded in the "additional data information" in the copy control management file (MCMF) of the first medium (the data obtained with the URIs shown in (d2) and (d3))

In a case where the information processing device 220 has a function of converting metadata read from the first medium into metadata compatible with the format of the second medium, for example, data read from the first medium 210 maybe converted and then recorded on the second medium 230. In this case, there is no need to use the URI shown in the "additional data information" in the copy control management file (MCMF).

### [B-4. Data copying process sequence]

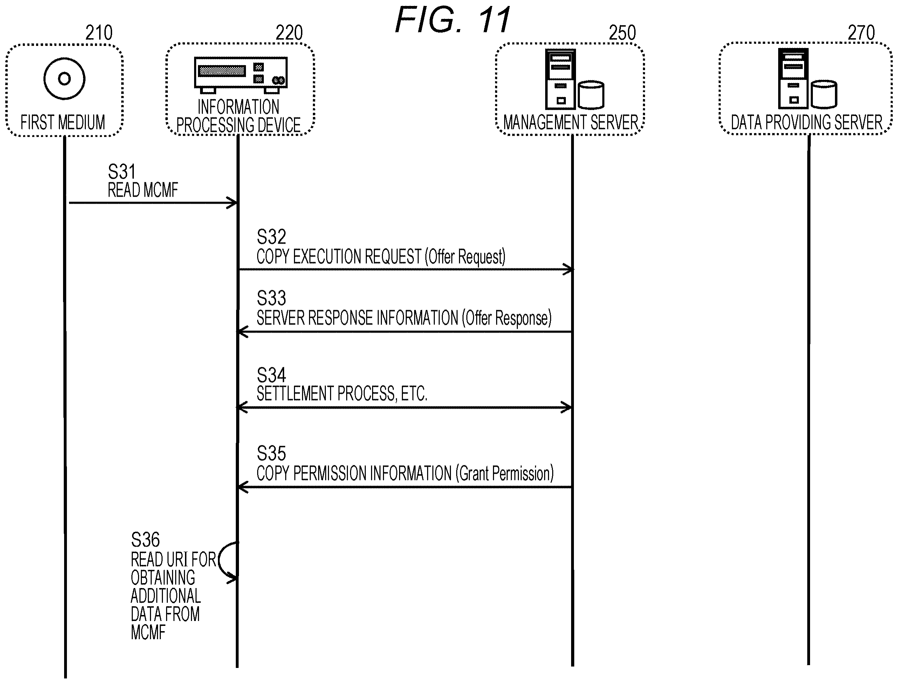

Referring now to Fig. 11 and other drawings, a data copying process sequence to be executed with the structures shown in Fig. 8 is described.

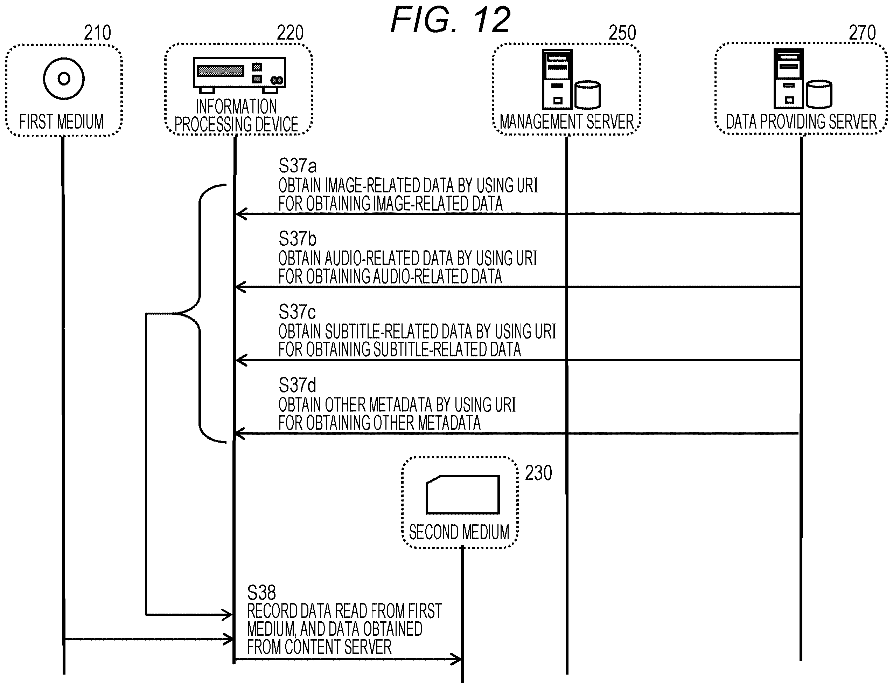

Figs. 11 and 12 are sequence diagrams for explaining the data copying process sequence to be executed with the structures shown in Fig. 8.

Fig. 11 shows the first medium 210 that stores content as the original to be copied, the information processing device 220 that performs a copying process, the management server 250 that conducts copy management, and the data providing server 270 that provides data and the like that are missing in a copying process.

Fig. 12 shows the same structures as those shown in Fig. 11. Fig. 12 further shows the second medium 230 as the copy destination medium.

Referring to the sequence diagrams shown in Figs. 11 and 12, the sequence of steps in a copying process to be performed so that the data recorded on the first medium 210 in the first format is recorded on the second medium 230 in the second format that differs from the first format is described.

The processing in each of the steps (S31 through S38) shown in Figs. 11 and 12 is described below.

### (Step S31)

In step S31, the information processing device 220 first reads the copy control management file (MCMF) recorded on the first medium 210.

This copy control management file (MCMF) is the copy control management file (MCMF) described above with reference to Fig. 9, and has "additional data information" recorded therein.

### (Step S32)

In step S32, the information processing device 220 transmits a copy execution request (Offer Request) to the management server 250, using the server access information (URI) recorded in the copy control management file (MCMF).

In this step, the content ID or the like corresponding to the content to be copied is transmitted to the management server 250.

It should be noted that a copying process is performed for each playlist set in the first medium 210 that is the original content recording medium, and a content ID is equivalent to the identifier for designating a playlist as the object to be copied.

As described above with reference to Fig. 6, the copy execution request contains the data listed below, for example.
(a) Content ID: the identifier of the content stored in the first medium
(b) Content Certificate ID: the certificate for verifying the validity of the content
(c) Media identifier: the identifier of the first medium that is the original to be copied
(d) Random number: the data for verifying validity
(e) Language code: the code information about the language to be used by the information processing device

These pieces of information are contained in the request.

Each piece of the information (a) through (c) is read from the first medium 210. The (d) random number is generated in the information processing device 220. The (e) language code is recorded beforehand in the memory of the information processing device 120. The language code is obtained from the memory and is then transmitted.

The language code is used for designating the language of the detailed offer information contained in a response to be provided from the management server 250, for example.

### (Step S33)

The management server 250 performs a process of verifying the validity of received information such as the content ID received from the information processing device 220. If the validity is verified without any problem, the management server 250 generates server response information (Offer Response), and transmits the server response information to the information processing device 120.

As described above with reference to Fig. 7, the server response information (Offer Response) provided from the management server 250 to the information processing device 220 includes basic information, and the basic information includes the information listed below, for example.
(1) Detailed offer information
   (1a) Title/abstract/description (title/abstract/description) : information about the title, the abstract, and the description of the copy-permitted content
   (1b) Copy unit identifier (MCU): the identifier for identifying a copy unit as a unit in copying; this corresponds to the content to be reproduced in accordance with a single playlist, for example.
   (1c) Price information (price) : information about the price of copying
   (1d) Auxiliary price information (price Info): auxiliary information about the price
   (1e) Settlement server URL (financial HTML URL) : access information about the server that performs a copying fee settlement process
   (1f) Copy destination information (mcot Info): information indicating the types of media allowed to be a copy destination device; the types of media, such as HDD and flash memory, are recorded.
(2) Random number (mcm Nonce): the random number for verifying data validity
(3) Copy data information (File name to be copied) (= deal Manifest)
   (3a) Playlist file name (Playlist file name) : the file name of the playlist to be copied; as the playlist is identified, the clip information file and the clip AV stream file can also be identified.
   (3b) CPS unit key information (Index to identify the CPS Unit Key) : information for identifying the key (CPS unit key) for decrypting the copied content
   (3c) Copy unit identifier (MCUi): information for identifying the copy unit (MCU) indicating the unit in copying
(4) Server public key certificate (MCScert): the certificate storing the server public key to be used in encrypted communication, signature verification, and the like
(5) Signature (signature) : signature data for checking for falsification in entire data

The above pieces of information are the basic information included in the server response information (Offer Response) provided from the management server 250 to the information processing device 220. Those pieces of information are set for each copy unit (MCU) as a unit in a copying process.

### (Step S34)

The information processing device 220 that has received the server response information (Offer Response) performs the settlement process, which accompanies the copying process, with the management server 250. Specifically, a process of transferring settlement data 132 is performed between the information processing device 120 and the management server 250. The server that performs the settlement process may be a different settlement server from the management server. In a case where a copying process is performed on content that can be copied for free, the settlement process is skipped.

### (Step S35)

After completing the settlement process performed as necessary, the information processing device 220 in step S35 transmits a copy permission information request to the management server 250. In response to the copy permission information request transmitted from the information processing device 220, the management server 250 generates copy permission information after confirming payment, and transmits the copy permission information to the information processing device 220.

### (Step S36)

After receiving the copy permission information from the management server 250, the information processing device 220 reads the URIs recorded in the "additional data information" recording area in the copy control management file (MCMF) obtained from the first medium 210. The URIs are the access URIs for obtaining the image data, the audio data, the subtitle data, and the metadata to be recorded on the second medium 230, as described above with reference to Figs. 9 and 10.

### (Steps S37a through 37d)

Using the URIs recorded in the "additional data information" in the copy control management file (MCMF), the information processing device 220 accesses the data providing server 270, and obtains the image data, the audio data, the subtitle data, and the metadata to be recorded on the second medium 230.

Although these sequence diagrams show an example case where image data, audio data, subtitle data, and metadata are obtained, this is merely an example, and these pieces of data are only partially obtained in some cases . The data that needs to be obtained is data the information processing device 220 cannot read directly from the first medium 210 that is the original medium, or data the information processing device 220 cannot generate from data read from the first medium 210, for example.

### (Step S38)

In step S38, the information processing device 220 records data on the second medium 230.

The recorded data includes the data listed below, for example:
data read from the first medium 210;
information recorded in the "additional data information" recording area in the copy control management file (MCMF); and
information obtained from the data providing server 270 by using the URIs recorded in the "additional data information" recording area.

The information processing device 220 records these pieces of information on the second medium 230.

On the second medium 230, data recording is performed in a different format (CFF, for example) from the data recording format (BDMV, for example) of the first medium that is the original medium.

The format in which data recording is to be performed can be determined by a user input performed on the information processing device 220, or by communication between the information processing device 220 that outputs copy data and the device like a smartphone or a tablet terminal, in which the second medium 230 as the copy destination is mounted.

The process of formatting the data to be recorded on the second medium 230 is performed by a copying application that is executed by the control unit (data processing unit) of the information processing device 220. Alternatively, the copying application that is executed by the control unit (data processing unit) of the information processing device 220 may only output copy data, and the control unit of the device like a smartphone or a tablet terminal, in which the second medium 230 as the copy destination having the copy data input thereto from the information processing device 220 is mounted, may perform the process of formatting the data to be recorded on the second medium 230.

As a result of the process in accordance with the sequence described above with reference to Figs. 11 and 12, data is recorded on the second medium 230 in a different format (CFF, for example) from the data format (BDMV, for example) of the data recorded on the first medium that is the original medium.

By virtue of this process, a CFF file recorded on the second medium 230 can be read and reproduced even in a case where the reproduction application being executed in the reproducing device like a smartphone or a tablet terminal for reproducing the content recorded on the second medium 230 cannot reproduce BDMV files and can reproduce only CFF files.

### [C. Other examples]

Next, modifications of the above described embodiment are described.

### [C-1. Example where the data download process is skipped in a copying process]

In the above described embodiment, the information processing device 220 that performs a copying process obtains, from the content providing server 270, data that cannot be obtained from the first medium 210 storing the original content to be copied, and then records the obtained data on the second medium 230.

However, the information processing device 220 that performs copying may not obtain data from the content providing server 270, but may output or record the URI data recorded in the "additional data information" recording area in the copy control management file (MCMF) recorded on the first medium 210, to or on the second medium 230.

In this case, the reproduction application that conducts content reproduction from the second medium 230 obtains the data to be used in reproduction from the access destination designated by the URI copied and recorded on the second medium 230, and records the obtained data on the second medium 230. The reproduction application then performs a reproducing process.

That is, the downloading process is performed in the reproduction device that performs a reproducing process using the second medium 230.

With this mechanism, the information processing device 220 that performs a copying process does not need to download data in the copying process, and the load from the copying process can be reduced.

### [C-2. Structure to obtain additional data information provided from the management server]

In the above described embodiment, information missing in a copying process and the site (URI) from which the missing information can be acquired are recorded as the "additional data information" in the copy control management file (MCMF) recorded on the first medium 210.

The "additional data information" may not be recorded in the copy control management file (MCMF), and may be provided from the management server 250 to the information processing device 220.

For example, the "additional data information" may be incorporated into the server response information (Offer Response) to be transmitted from the management server 250 to the information processing device 220 in step S33 in the sequence diagram shown in Fig. 9, or may be incorporated into the copy permission information (Grant Permission) to be transmitted from the management server 250 to the information processing device 220 in step S35. The information into which the "additional data information" is incorporated is then provided to the information processing device 220.

That is, the "additional data information" described above as information recorded in the copy control management file (MCMF) with reference to Fig. 9 is provided from the management server 250 to the information processing device 220.

Alternatively, the "additional data information" may also be recorded in the copy control management file (MCMF), and only the "additional data information" altered after the release of the disk may be provided from the management server 250.

With this mechanism, it becomes easy to cope with changes in the additional data.

### [C-3. Structure in which the data access destination to be recorded in the copy control management file (MCMF) is an area in the first medium]

In the above described embodiment, information missing in a copying process and the site (URI) from which the missing information can be acquired are recorded in the copy control management file (MCMF) of the first medium 210 storing the original content to be copied. In this example, the information regarding the missing data acquisition site recorded in the copy control management file (MCMF) is the access information regarding the data providing server 270. Specifically, the information is the Uniform Resource Identifier (URI) for accessing a database in the data providing server 270, for example.

However, the missing data acquisition site (access destination) is not limited to the data providing server 270. For example, the missing data acquisition site (access destination) may be a certain data recording area in the first medium 210 storing the original content to be copied.

A data recording area storing the data to be copied, for example, is formed in the first medium 210 storing the original content to be copied.

The data to be used in a reproducing process using the copy destination medium in a different format is recorded in the copy data recording area. This data is not necessarily used in a content reproducing process using the first medium 210.

Further, the access information about the copy data recording area of the first medium 210 is recorded as the information about the acquisition site of the information missing in a copying process, in the copy control management file (MCMF) of the first medium 210.

For example, pieces of data in different formats, or data in the format A and data in the format B, are stored into an information recordingmedium. The data in one of the formats is used as the data for reproduction only, and the data in the other format is used as the data to be copied.

### [D. Example structure of the information processing device]

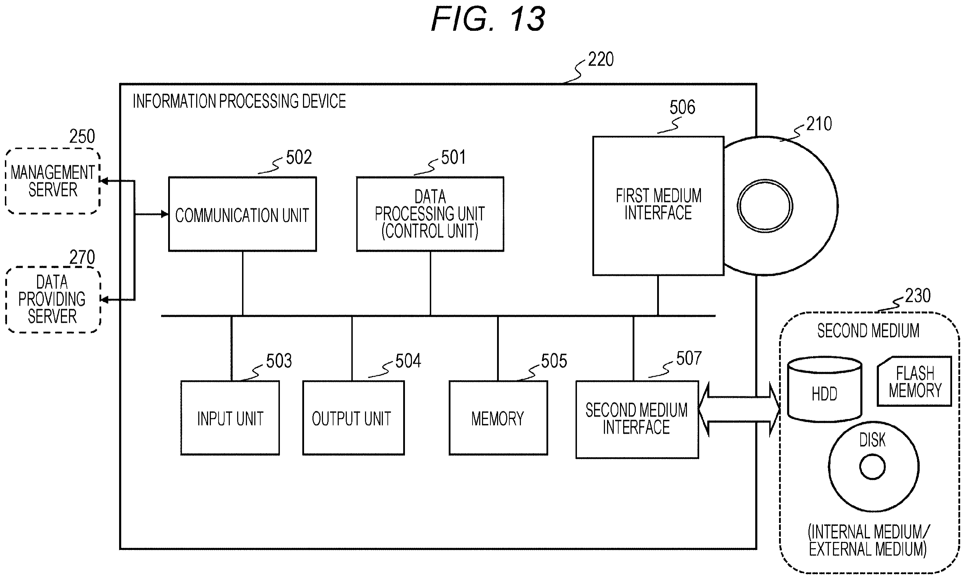

Lastly, an example structure of the information processing device 220 according to an embodiment of the present disclosure is described, with reference to Fig. 13. For example, the information processing device 220 is designed so that the first medium 210 as the medium storing the original content to be copied can be mounted therein.

A first medium interface 506 is the interface to be used in data recording, data reproduction, and a copying process using the first medium 210. In response to a request from a data processing unit 501, a data writing process, a data reading process, or a data copying process is performed with the first medium 110.

The second medium 230 as the content copy destination may be an external medium or an internal medium.

A second medium interface 507 is formed with a drive for a medium such as a flash memory, a hard disk, or a BD, or is formed with a USB cable, a communication unit, or the like. The second medium 230 or the information processing device in which the second medium 230 is mounted is accessed via the second medium interface 507, and recording data in a copying process is then output, for example.

Various kinds of media (information recording media) such as a Blu-ray Disc (registered trademark), a DVD, a hard disk, and a flash memory can be used as the first medium 210 and the second medium 230.

As shown in Fig. 13, the information processing device 220 further includes the data processing unit (control unit) 501, a communication unit 502, an input unit 503, an output unit 504, and a memory 505.

The data processing unit 501 is formed with a CPU or the like that has a program execution function to execute a data processing program. For example, the data processing unit 501 performs the above described copying process, as well as a data recording/reproducing process . The data processing unit 501 further performs control on all processes to be performed by the device, such as communication with the management server 250 and the data providing server 270 via the communication unit 502.

The communication unit 502 is used for communicating with the management server 250 and the data providing server 270, requests for the above described server response information (Offer Response) including the copy data information (dealManifest), receives the server response information, and is further used in the settlement process or the process of receiving the copy permission information (Permission).

The communication unit 502 further performs a data acquisition process using the URIs recorded as the additional data information in the copy control management file (MCMF: Managed Copying Manifest File) recorded on the first medium 210.

The input unit 503 is the operating unit for users, for example. Various inputs such as inputs of a data recording or reproducing instruction and a copying instruction are performed through the input unit 503. The input unit 503 also includes a remote controller, and information can be input through the remote controller. The output unit 504 is an image and sound output unit that is formed with a display, a speaker, and the like. The memory 505 is formed with a RAM, a ROM, and the like, and is used as the storage area for the program to be executed by the data processing unit 501, various parameters, and received data.

### [E. Structure that records the reproduction data type attribute information unique to an MP4 format]

The following is a description of an embodiment that records the reproduction data type attribute information unique to an MP4 format when BDMV format data is converted into MP4 format data.

MP4 format data is designed for recording the attribute information such as codec information about data types including image, audio and subtitle into the storage area for the attribute information about the data types. However, BDMV format data does not have any file storing the same data type attribute information as the attribute information unique to MP4.

The embodiment described below is an embodiment for solving this problem, and is an embodiment that records the reproduction data type attribute information unique to an MP4 format when BDMV format data is converted into MP4 format data.

### [E-1. Outline of the structure of an information processing device and processing in this embodiment]

First, the outline of the structure of an information processing device and processing according to this embodiment are described.

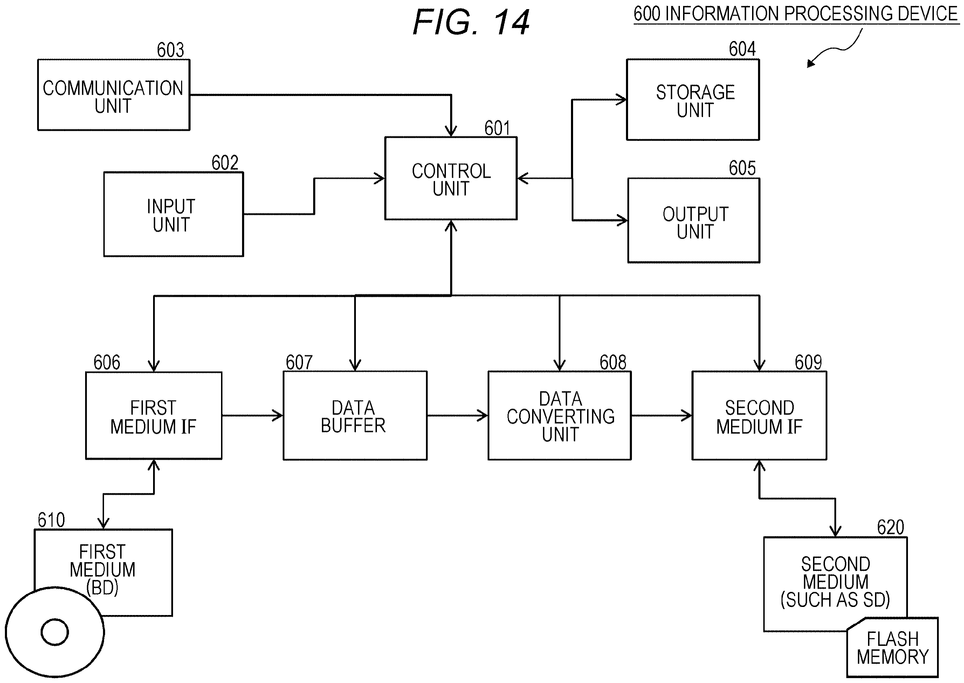

Fig. 14 is a block diagram showing an example structure of an information processing device 600 according to an embodiment of the present disclosure. The information processing device 600 reads data recorded on a first medium 610 that is an information recording medium such as a Blu-ray (registered trademark) Disc (BD), and records the read data on a second medium 620 that is an information recording medium such as a flash memory. This process is called a copying process.

Alternatively, the information processing device 600 performs a process of receiving data input via a communication unit 603, and recording the data on the second medium 620 such as a flash memory.

The data format of data that is input from the first medium 610 or via the communication unit 603 is a first format, and the format of data to be recorded on the second medium 620 is a second format.

When recording data in the first format that is input from the first medium 610 or via the communication unit 603, onto the second medium 620 such as a flash memory, the information processing device performs a process of converting the first format data into second format data.

In the example described below, the format of data that is input from the first medium 610 or via the communication unit 603 is the BDMV format, and the recording format of the second medium 620 is an MP4 format.

In a data recording process on the second medium 620, the information processing device 600 performs format conversion from the BDMV format to an MP4 format.

As shown in Fig. 14, the information processing device 600 includes a control unit 601, an input unit 602, the communication unit 603, a storage unit 604, an output unit 605, a first medium interface (IF) 606, a data buffer 607, a data converting unit 608, and a second medium IF 609.

The control unit 601 controls data processing to be performed in the information processing device 600, such as data recording/reproduction using media and a data copying process between media. These control operations are performed in accordance with a program stored in the storage unit 604, for example.

The input unit 602 is an input unit formed with switches, buttons, a touch panel, and the like that can be operated by users. The input unit 602 is an input unit through which instructions for various processes such as reproduction, copying, and recording are input.

The input unit 602 may also be designed to include an imaging unit and a microphone through which images and sound to be recorded on media are input.

The communication unit 603 communicates with an external server or an external device, for example, and is used in various communication processes for acquiring data to be recorded on a medium, control information related to the data to be recorded, permission information for a copying process, or the like.

The storage unit 604 is used as a storage area for the programs to be executed by the control unit 601 and parameters and the like to be used in executing the programs, and as a work area or the like during execution of a program.

Specifically, the storage unit 604 is used as an area that temporarily stores data read from the first medium 610 before recording the data on the second medium 620, or data that is input via the communication unit 603.

The storage unit 604 is formed with a RAM, a ROM, and the like.

The output unit 605 is used in a process of outputting reproduction data from a medium, and is further used in displaying the progress of a data recording process on the second medium 620 or displaying a message to the user. The output unit 605 is formed with a display, a speaker, and the like.

The first medium interface (IF) 606 functions as a data recording/reproducing unit that accesses the first medium 610 such as a Blu-ray (registered trademark) Disc (BD), and performs data recording or data reading on the first medium 610.

The data buffer 607 is a buffer that temporarily stores data read from the first medium 610, and data input from the communication unit 603. For example, the data buffer 607 temporarily stores data to be recorded on the second medium 620.

The data converting unit 608 performs a format conversion process to convert the data recorded on the first medium 610 or data in the first format that is the format of data input via the communication unit 603, into data in the second format that is the format of data to be recorded on the second medium 620 as the data recording destination. The structure of the data converting unit 608 and the process will be described later in detail.

The second medium interface (IF) 609 functions as a data recording/reproducing unit that accesses the second medium 620, and performs a data recording or reading process on the second medium 620.

As described above, the information processing device 600 performs a process of recording data in the first format that is input from the first medium 610 or via the communication unit 603, onto the second medium 620 such as a flash memory. In this process, the information processing device 600 performs a process of converting the first format data into second format data.

The first format is BDMV format data, and the second format is MP4 format data, for example.

From an external server via the communication unit 603, the information processing device 600 may acquire data that cannot be obtained from the first medium 610. The information processing device 600 then records, on the second medium 620, data read from the first medium 610 and the received data acquired via the communication unit 603.

In the structure shown in Fig. 14, the first medium 610 is a Blu-ray (registered trademark) Disc (BD), for example. The second medium 620 is a flash memory such as an SD card.

The first medium 610 and the second medium 620 are not limited to the above mentioned combination of media, but may be any of other various combinations.

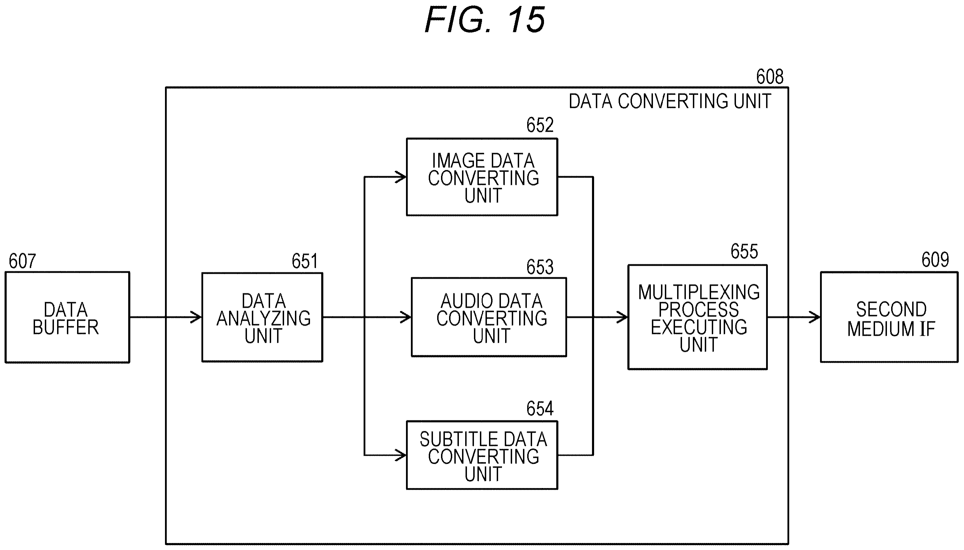

Referring now to Fig. 15, the structure of the data converting unit 608 is described in detail.

As shown in Fig. 15, the data converting unit 608 includes a data analyzing unit 651, an image data converting unit 652, an audio data converting unit 653, a subtitle data converting unit 654, and a multiplexing process executing unit 655.

In accordance with identifiers (PIDs: Program IDs) set in data that is read from the first medium 610 and is stored in the data buffer 607, or in data (packets) that is input via the communication unit 603, the data analyzing unit 651 classifies data (packets) into the three types of data:
image data,
audio data, and
subtitle data.

The data analyzing unit 651 outputs image data to the image data converting unit 652, audio data to the audio data converting unit 653, and subtitle data to the subtitle data converting unit 654.

The image data converting unit 652, the audio data converting unit 653, and the subtitle data converting unit 654 perform a process of converting data in the first format such as BDMV format data that is the data format of input data, into format data in the second format such as an MP4 format to be recorded on the second medium 620.

Specifically, the image data converting unit 652 generates image data in an MP4 format, which is the data recording format compatible with the second medium 620, and then outputs the image data to the multiplexing process executing unit 655.

The audio data converting unit 653 generates audio data in the MP4 format, and then outputs the audio data to the multiplexing process executing unit 655.

The subtitle data converting unit 654 generates subtitle data in the MP4 format, and then outputs the subtitle data to the multiplexing process executing unit 655.

In the format conversion process for the respective types of data, the image data converting unit 652, the audio data converting unit 653, and the subtitle data converting unit 654 each perform a decoding process, an encoding process, an encryption process, and the like, as necessary.

That is, the image data converting unit 652, the audio data converting unit 653, and the subtitle data converting unit 654 each perform a decoding process in accordance with the encoding method (MPEG2, for example) in the first format (BDMV, for example) of input data, and perform an encoding process in accordance with the encoding method in the second format (MP4, for example) that is the recording format for the second medium 620.

In a case where input data is encrypted data, the image data converting unit 652, the audio data converting unit 653, and the subtitle data converting unit 654 each perform a decryption process, and perform format conversion using the decrypted data.

In a case where the data to be recorded on the second medium 620 needs to be encrypted, the image data converting unit 652, the audio data converting unit 653, and the subtitle data converting unit 654 each perform an encryption process using an existing encryption algorithm.

The multiplexing unit 655 performs a multiplexing process on the following data:
(a) image format data in the second format (MP4) generated by the image data generating unit 652;
(b) audio format data in the second format (MP4) generated by the audio data generating unit 653;
(c) subtitle format data in the second format (MP4) generated by the subtitle data generating unit 654; and
(d) data that extracted from reproduction control information files or the like stored in the storage unit 604.

By performing the above multiplexing process, the multiplexing process executing unit 655 generates recording data in the second format (MP4).

The data generated by the multiplexing process executing unit 655 is recorded on the second medium 620 via the second medium interface 609.

As described above, the information processing device 600 performs a process of converting the data recorded on the first medium 610 or data in the first format (BDMV format) that is input via the communication unit 603, into data in the second format (MP4) that is the recording format for the second medium 620, and then recording the converted data on the second medium 620.

The BDMV format as the format of the content to be copied, and MP4 as the recording format for the copy destination medium are described below in detail.

### [E-2. BDMV format]

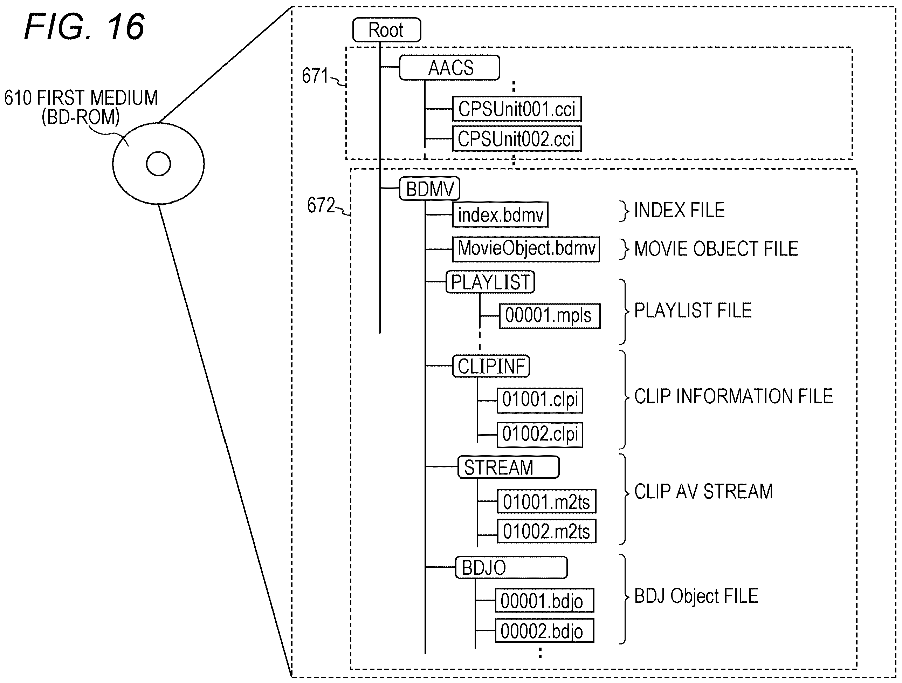

Referring to Fig. 16 and other drawings, the BDMV format is described.

Fig. 16 is a diagram showing the directory of recorded data in the BDMV format recorded on a ROM-type Blu-ray (registered trademark) Disc (BD) that is the first medium 610, for example.

As shown in Fig. 16, the directory is divided into a management information setting section 671 (an AACS directory) and a data section 672 (a BDMV directory).

The management information setting section 671 (AACS directory) stores a CPS unit key file storing data encryption keys, a use control information file, and the like.

Meanwhile, the data section 672 stores, under the BDMV directory,
an index file,
playlist files,
clip information files,
clip AV stream files, and
a BDJO file, for example.

The index file stores title information as the index information to be used in reproducing processes.

Each playlist file is a file that specifies the content reproduction order and the like in accordance with the program information about a reproduction program designated by a title, and stores designation information corresponding to clip information including reproduction position information.

Each clip information file is a file designated by a playlist file, and stores the reproduction position information and the like about the corresponding clip AV stream file.

Each clip AV stream file is a file that stores AV stream data to be reproduced.

The BDJO file is a file that stores execution control information about a file storing a JAVA (registered trademark) program, commands, and the like.

The sequence in which the information processing device reproduces the content recorded on an information recording medium is as follows.
(a) First, a certain title is designated from the index file through a reproduction application.
(b) The reproduction program associated with the designated title is selected.
(c) The playlist that specifies the content reproduction order and the like is selected in accordance with the program information about the selected reproduction program.
(d) An AV stream or a command is read as actual content data in accordance with the clip information specified in the selected playlist, and AV stream reproduction or a command execution process is performed.

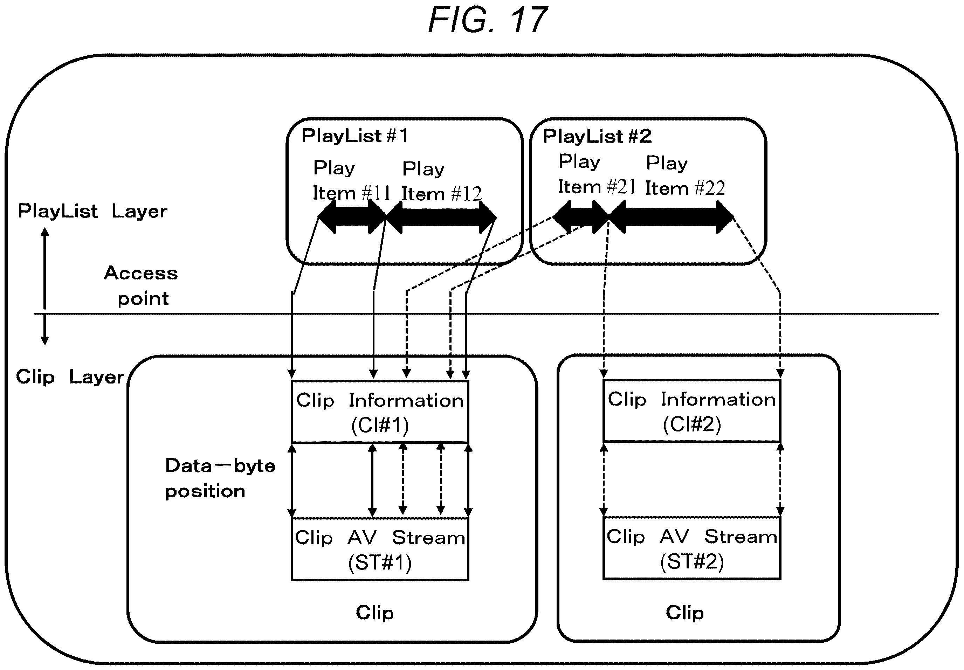

Fig. 17 is a diagram for explaining the correspondence relationship among the following sets of data recorded on the first medium 610:
playlist files,
clip information files, and
clip AV stream files.

AV streams formed with image and audio data that are the data to be actually reproduced are recorded as clip AV stream files. Further, playlist files and clip information files are specified as the management information files and the reproduction control information files for those AV streams.

As shown in Fig. 17, the files under different categories can be divided into the two layers: a playlist layer including the playlist files, and a clip layer including the clip AV stream files and the clip information files.

One clip AV stream file is associated with one clip information file. Such a pair may be regarded as one object, and be collectively called a clip in some cases.

Specific information about the data contained a clip AV stream file, such as management information in the form of an EP map storing I-picture location information and the like about MPEG data, is recorded in the corresponding clip information file.

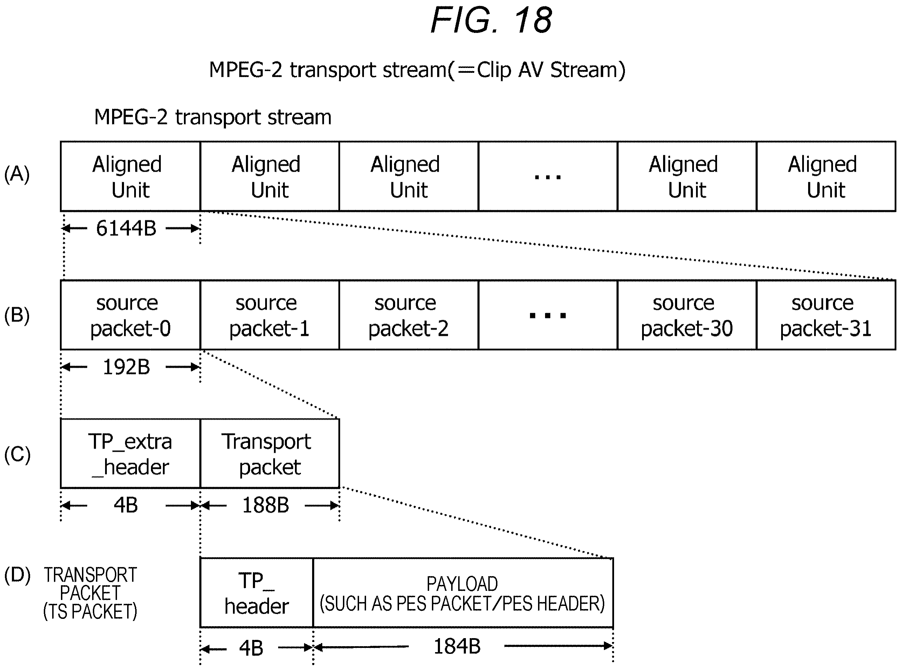

Each clip AV stream file stores data of an MPEG2 TS (transport stream) arranged in accordance with the specific structure in the BDMV format. This structure will be described later in detail, with reference to Fig. 18.

Each clip information file stores management information for obtaining the start position of reproduction of the data stored in the corresponding clip AV stream file, including the data of correspondence between the data position of the byte sequence data in the clip AV stream file and the reproduction time position such as the reproduction start point (entry point: EP) developed on a time axis.

For example, when a time stamp indicating the point of the reproduction time elapsed since the start point of content is supplied, the data reading point in the clip AV stream file, or the address as the reproduction start point, can be obtained by referring to the clip information file.

Each playlist file stores information for designating a reproduction period for reproducible data included in the clip (= clip information file + clip AV stream file) layer.

Each playlist file has one or more play items, and each of the play items has information for designating a reproduction period for reproducible data contained in the clip (= clip information file + clip AV stream file) layer.

A clip AV stream file storing actual image and audio data to be reproduced has the MPEG2 transport stream (TS) file structure shown in Fig. 18, for example.

The MPEG2 transport stream file structure has the settings listed below.
1) An MPEG2 transport stream file is formed with an integral number of aligned units.
2) The size of an aligned unit is 6 kB (= 6144 bytes (2048 × 3 bytes)).
3) An aligned unit starts from the first byte of a source packet.
4) A source packet is 192 bytes in length. One source packet is formed with a TP_extra_header and a transport packet (TS packet) . A TP_extra_header is four bytes in length, and a transport packet (TS packet) is 188 bytes in length.
5) A transport packet (TS packet) includes a header (TP header) and a payload. Encoded data of data of one type, such as an image or sound, is stored in the payload in one TS packet.
6) A PID (program ID) indicating the data type in the payload is recorded in the header (TP header) in a transport packet (TS packet).
7) The payload in a transport packet (TS packet) is formed with a packet (packetized elementary stream (PES)) storing an elementary stream (ES) as encoded data of an image or sound, and a PES header and the like.
8) A PES header stores a presentation time stamp (PTS) indicating the reproduction time information about the elementary stream (ES) stored in the PES packet that follows.

### [E-3. MP4 file format]

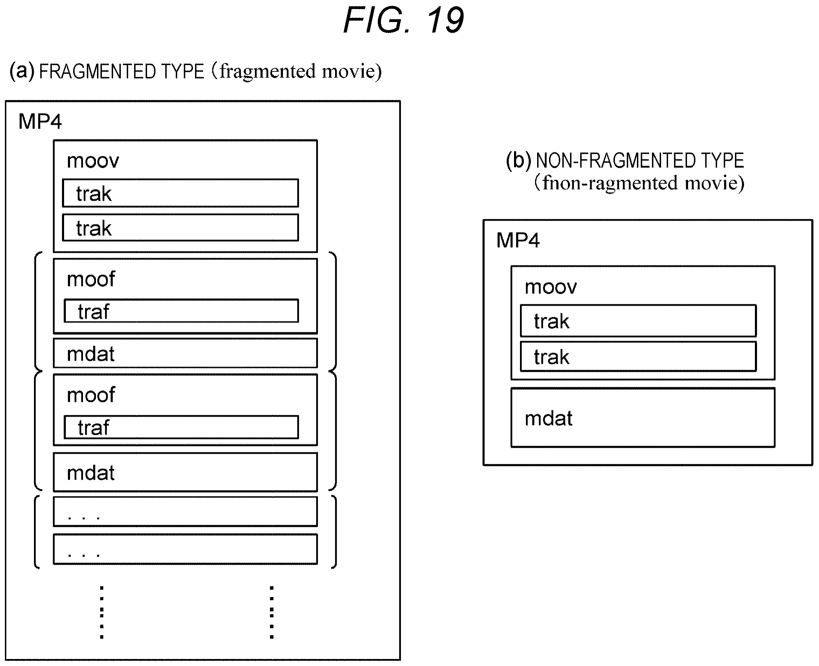

Referring now to Fig. 19 and other drawings, the outline of an MP4 file format is described.

Fig. 19 shows two examples as examples of MP4 file formats specified in ISO/IECC14496-14. The two examples are as follows:
(a) fragmented MP4 file (fragmented movie), and
(b) non-fragmented MP4 file (non-fragmented movie).

The MP4 files shown in Figs. 19(a) and 19(b) are files that are set as a single processing unit in a data recording or reproducing process in an MP4 format.

The (a) fragmented MP4 file (fragmented movie) is a file format that stores data such as images and sound to be reproduced. The stored data is divided into pieces of reproduction data within a predetermined time.

The (b) non-fragmented MP4 file (non-fragmented movie) is a file format that stores data such as images and sound to be reproduced. The stored data is not divided.

An MP4 file has area settings on a box basis, and each box stores data defined by the box.

Each box includes the following areas: a box-size area, a box-type area, and a box-data area.

The data length (byte size) of the box is recorded in the box-size area.

The type of the data stored in the box is recorded in the box-type area.

The data of the type indicated in the box-type area is recorded on the box-data area.

In the fragmented MP4 file shown in Fig. 19(a), boxes of the types listed below are set:
a moov box,
trak boxes,
moof boxes,
traf boxes, and
mdat boxes.

The above boxes are set in the fragment MP4 file.

Actual data that are data to be reproduced, such as images, sound, and subtitles, are divided and stored into the mdat boxes.

Each mdat box is associated with a moof box, and each moof box stores metadata such as attribute information and reproduction control information regarding the divided actual data stored in the mdat box associated with the moof box.

The fragmented MP4 file shown in Fig. 19(a) has a structure in which actual data (mdat) that is divided data of the data to be reproduced and the metadata (moof) associated with the divided actual data are regarded as one set of data, a large number of such sets of data are stored, and the metadata regarding all the stored sets of data is further stored in the moov box.

A traf box is set in the metadata (moof) associated with divided actual data.

Reproduction sequence information and the like regarding the associated actual data (mdat) are stored in the traf box.

The moov box is a box that is set as the storage area for the metadata such as the reproduction control information regarding all the data stored in the MP4 file.

One or more trak boxes are set in the moov box. The trak boxes can be set for the respective types of data, such as images, sound, and subtitles, and store the reproduction sequence information regarding the respective types of data.

In a case where the reproduction data stored in the MP4 file includes different types of image data, such as HD images and 4K images, trak boxes can be set for the respective types of images.

In a case where the audio data stored in the MP4 file includes different types of audio data, such as speeches in Japanese and speeches in English, trak boxes can be set for the respective types of audio data.

Likewise, in a case where the subtitle data stored in the MP4 file includes different types of subtitle data, such as Japanese subtitles and English subtitles, trak boxes can be set for the respective types of subtitle data.

The (b) non-fragmented MP4 file (non-fragmented movie) is a file format that stores data such as images and sound to be reproduced. The stored data is not divided.

In the non-fragmentedMP4 file shown in Fig. 19(b), boxes of the types listed below are set:
a moov box,
trak boxes, and
a mdat box.

The above boxes are set in the non-fragment MP4 file.

The actual data to be reproduced is stored in the mdat box.

The moov box stores the metadata associated with the actual data (mdat) as the data to be reproduced. The metadata includes attribute information and reproduction control information regarding the actual data (mdat) to be reproduced, for example.

Reproduction sequence information and the like regarding the actual data (mdat) are stored in the trak boxes set in the moov box.

As in the (a) fragmented MP4 file described above, one or more trak boxes are set in the moov box set in the (b) non-fragmented MP4 file. The respective trak boxes are set for different types of data, such as images, sound, and subtitles.

Fig. 19 shows examples of basic structures of MP4 file formats.

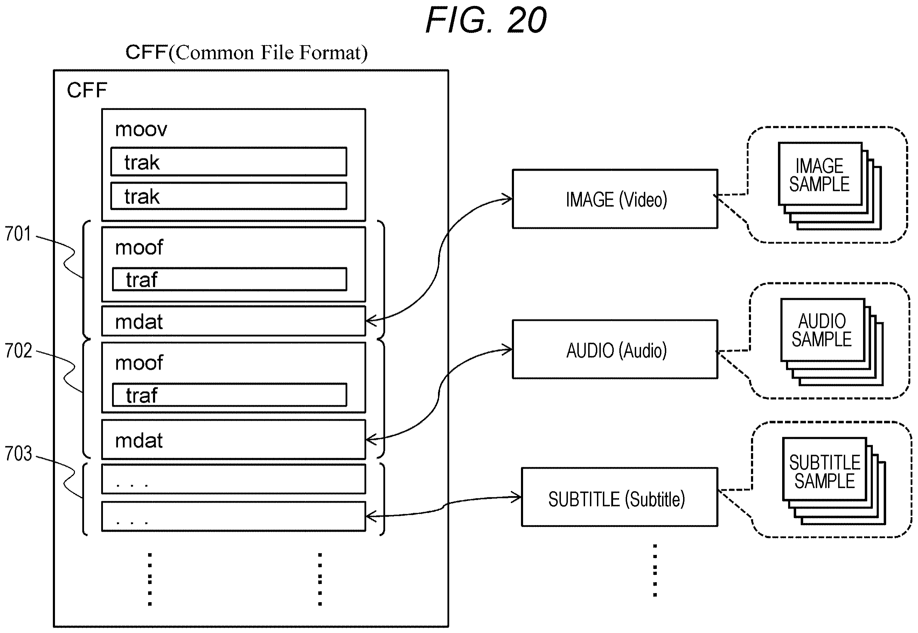

Digital Entertainment Content Ecosystem (DECE), which is a standardization organization for MP4 formats, has standardized Common File Format (CFF) as a new file format based on MP4. Referring now to Fig. 20, the CFF is described in detail.

The Common File Format (CFF) shown in Fig. 20 basically has the same data structure as the fragmented (fragmented movie) MP4 described above with reference to Fig. 19(a).

Specifically, in the Common File Format (CFF) file shown in Fig. 20, the boxes listed below are set as in the fragmented MP4 file described above with reference to Fig. 19(a):
a moov box,
trak boxes,
moof boxes,
traf boxes, and
mdat boxes.

The above boxes are set in the CFF file.

The data stored in the respective boxes are substantially the same as in the fragmented MP4 file shown in Fig. 19(a).

In the CFF, however, only one type of data should be stored in one mdat box.

Specifically, each one mdat box stores only one of the following types of data:
(a) image data,
(b) audio data, and
(c) subtitle data.

Mixed storage of the above types (a) through (c) of data is prohibited.

In a case where the CFF file contains different types of image data, such as HD images and 4K images, these different types of images are stored in different mdat boxes.

Likewise, different types of audio data, such as speeches in Japanese and speeches in English, are stored in different mdat boxes, and different types of subtitle data, such as Japanese subtitles and English subtitles, are stored in different mdat boxes.

In the general-purpose fragmented MP4 file shown in Fig. 19(a), mixed storage of different types of data, such as images, sound, and subtitles, is allowed in a mdat box that is set as a storage box for one set of divided data (a fragment).

In the Common File Format (CFF) shown in Fig. 20, however, each one mdat box can store only one type of data.

That is, each one mdat box stores only one of the following types of data: images, sound, and subtitles.

Therefore, the moof box that is the metadata storage area associated with a mdat box stores metadata set for one type of data among image data, audio data, and subtitle data.

The data stored in a mdat box that is a data section in the MP4 file format is divided into samples as basic data units.

In the Common File Format (CFF), each one mdat box stores data samples of one type, such as a set of image samples, a set of audio samples, or a set of subtitle samples.

Further, CFF standardized by DECE also specifies encoding methods (codec) and data formats for images, sound, and subtitles to be stored in a CFF file. Examples of data formats that can be stored in a CFF file include the following data formats:
images (Video): AVC and HEVC,
sound (Audio): MPEG4-AAC, Dolby, and AC-3, and
subtitles (subtitle): SMPTE Timed Text(SMPTE-TT).

### [E-4. Samples boxes set in an MP4 (CFF) file]

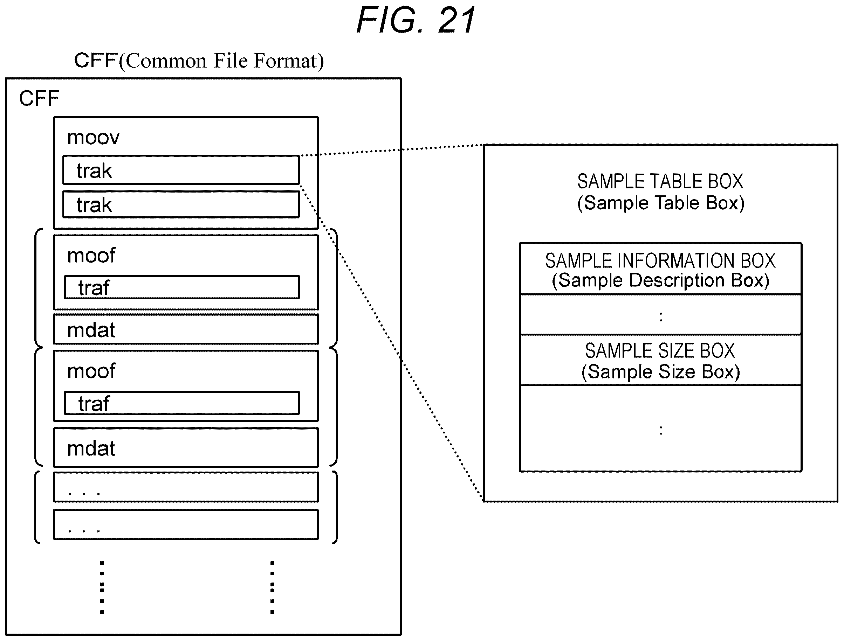

In a trak box in the moov box in an MP4 (CFF) file generated in the MP4 format described above with reference to Figs. 19 and 20, a sample table box is recorded as shown in Fig. 21.

A sample table box is a box that stores information about samples as basic data units of the reproduction data stored in a mdat box serving as a storage box for data to be reproduced.

A sample information box (Sample Description Box) storing attribute information (metadata) such as codec information about each sample is set in a sample table box.

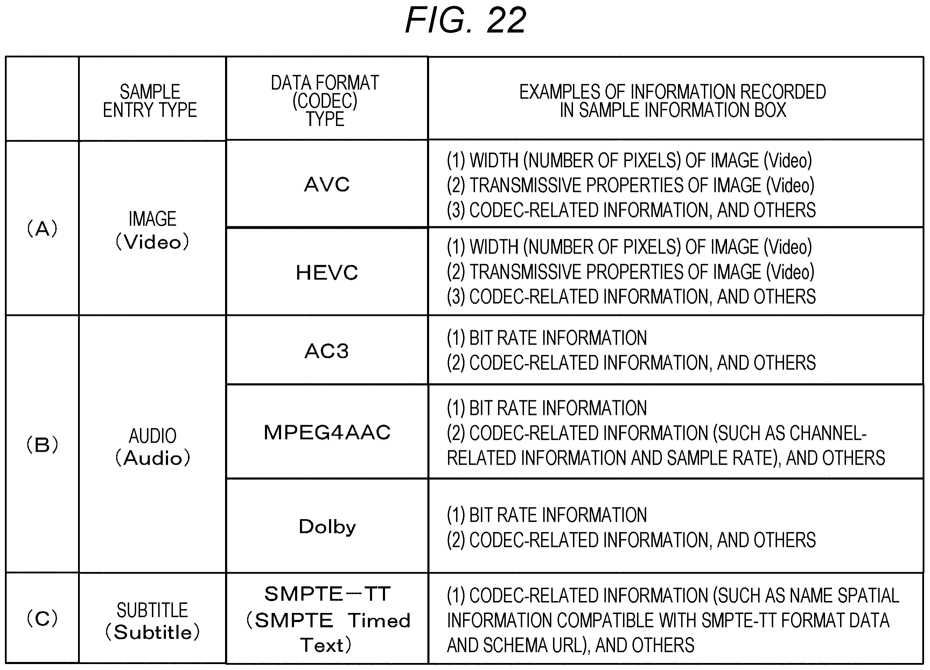

Referring to Fig. 22, examples of data recorded in sample information boxes (Sample Description Boxes) are described.

Sample information boxes (Sample Description Boxes) are set in accordance with the data types and the data formats of the images, the sound, the subtitles, or the like to be stored in the mdat boxes in an MP4 (CFF) file.

As described above, examples of data formats that can be stored in a CFF file include the following data formats:
images (Video): AVC and HEVC,
sound (Audio): MPEG4-AAC, Dolby, and AC-3, and
subtitles: SMPTE Timed Text(SMPTE-TT).

Data in these data formats are stored in the mdat boxes on a sample basis, and attribute information about the samples of the reproduction data stored in the mdat boxes are stored in the sample information boxes (Sample Description Boxes).

The respective trak boxes in the moov box shown in Fig. 21 are set for the respective data types and the respective data formats of the images, the sound, and the subtitles to be stored in the mdat boxes. The sample information boxes (Sample Description Boxes) in the respective trak boxes store the attribute information (metadata) about the samples corresponding to the respective data types and the respective data formats of the images, the sound, and the subtitles to be stored in the mdat boxes.

In a decoding and reproducing process for a sample in a mdat box that stores data to be reproduced, the reproducing device that performs the process of reproducing the MP4 format data obtains the attribute information (metadata) associated with the sample to be reproduced, from the sample information box (Sample Description Box) in the trak box associated with the sample. With the use of the obtained attribute information (metadata), a correct decoding and reproducing process can be performed for each sample.

As shown in Fig. 22, sample information boxes (Sample Description Boxes) store various kinds of information in accordance with the data types and the data formats of the images, the sound, the subtitles, and the like to be stored in the mdat boxes in an MP4 (CFF) file.

For example, the attribute information described below is recorded as shown in Fig. 22.

### (A) Images (Video)

In an MP4 (CFF) file, image data is encoded by an encoding process such as AVC or HEVC, and the encoded image data is stored into a mdat box.

The sample information box (Sample Description Box) that is set for the image data stores the information listed below, for example.
(1) Image (Video) width (the number of pixels)
(2) Transmissive property information about the images (Video)
(3) Codec-related information

These pieces of image attribute information are recorded in the sample information box (Sample Description Box), for example.

Other various kinds of information may be recorded in accordance with the data format such as AVC or HEVC.

### (B) Sound (Audio)

In an MP4 (CFF) file, audio data is encoded by an encoding process such as AC3, MPEG4-ACC, or Dolby, and the encoded audio data is stored into a mdat box.

The sample information box (Sample Description Box) that is set for the audio data stores the information listed below, for example.
(1) Bit rate information
(2) Codec-related information

These pieces of audio attribute information are recorded in the sample information box (Sample Description Box), for example.

Other various kinds of information may be recorded in accordance with the data format such as AC3, MPEG4-ACC, or Dolby.

### (C) Subtitles

In an MP4 (CFF) file, subtitle data is encoded by an encoding data format such as SMPTE-TIMED Text, and the encoded subtitle data is stored into a mdat box.

The sample information box (Sample Description Box) that is set for the subtitle data stores the information listed below, for example.

### (1) Codec-related information

For example, subtitle attribute information such as name spatial information and a schema URL to be used in the encoded data in the SMPTE-TT format is recorded in the sample information box (Sample Description Box).

Other various kinds of information may be recorded in accordance with the data format.

As described above, the reproducing device that performs a process of reproducing MP4 format data obtains the attribute information (metadata) associated with the sample to be reproduced, from the sample information box (Sample Description Box) in the trak box associated with the sample in the mdat box that stores the data to be reproduced. With the use of the obtained attribute information (metadata), a correct decoding and reproducing process can be performed for each sample.

In a case where BDMV format data is converted into an MP4 (CFF) file and is then recorded on a medium, for example, the information processing device that performs the conversion process needs to generate or obtain sample information about the respective samples of the reproduction data to be stored into the mdat boxes in the MP4 (CFF) file to be generated through the conversion process, and store the sample information into the sample information boxes in the MP4 (CFF) file.

Without the process of recording in the sample information boxes (Sample Description Boxes), any correct reproducing process might not be performed on the data stored in the MP4 (CFF) file.

### [E-5. Example of a data format conversion process]

Next, an example of a data format conversion process to be performed by the information processing device 600 of the present disclosure is described.

The information processing device of the present disclosure performs a process of converting data in the BDMV format into data in an MP4 format, or more specifically, into data in the Common File Format (CFF) described above with reference to Figs. 20 and 21.

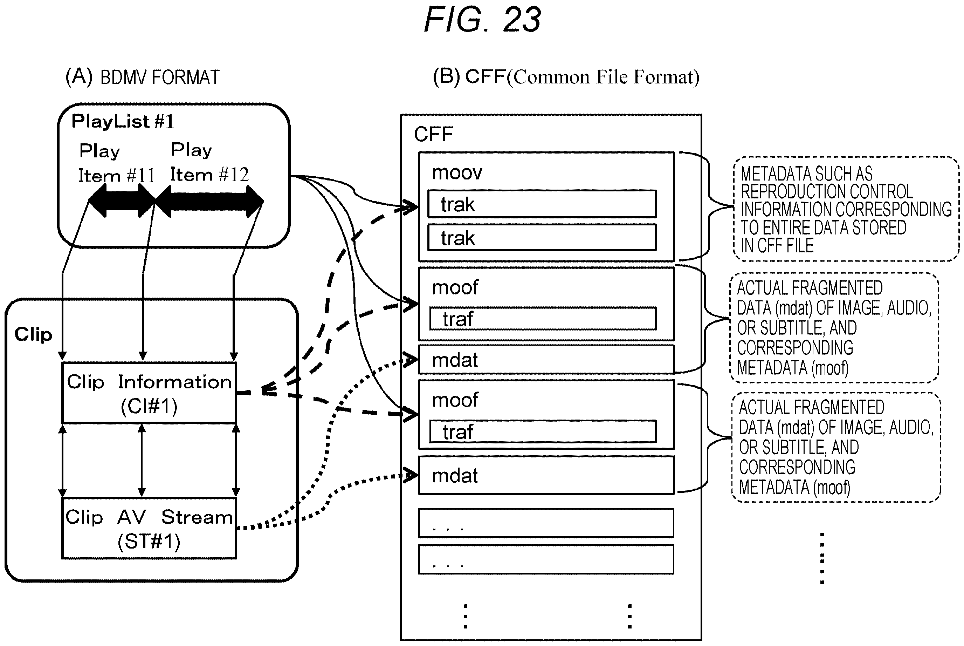

Referring to Fig. 23, an example of the format conversion process is described.

In a case where BDMV format data is converted into MP4 format data, various settings are possible as to what kind of data unit of BDMV data is turned into an MP4 file.

MP4 files are classified into the two types of MP4 files, fragmented (fragmented movie) MP4 files and non-fragmented (non-fragmented movie) MP4 files, as described above with reference to Fig. 19. MP4 files may also be CFF files that have further restrictions. In this example, a process to generate a CFF file is described.

In the example process described below, one CFF file is generated from a playlist specified as a unit in reproduction in the BDMV format.

Fig. 23 is a diagram for explaining the correspondence relationship between
(A) the BDMV format data prior to format conversion and
(B) the CFF file generated after the format conversion.

The BDMV format data prior to the format conversion shown in (A) includes the data listed below.
(a1) The one playlist #1 to be subjected to the format conversion
(a2) The clip information file (CI#1) designated by the playlist #1
(a3) The clip AV stream (ST#1) designated as the reproduction data by the clip information file (CI#1)

In this example, each format conversion process unit is formed with a playlist set in the BDMV format and the reproduction control information and the reproduction data to be used by the playlist. An MP4 file or the CFF file shown in Fig. 23(B) is generated from such a process unit.

In this format conversion, the structural data of the clip AV stream (ST#1) that is the data to be reproduced is divided and stored into mdat boxes that are reproduction data storage sections set in the MP4 file.

When this divisional data storing process is performed, data of only one type among image data, audio data, and subtitle data is stored into each mdat compliant with the CFF file specifications.

The respective pieces of data in the playlist #1 and the clip information file (CI#1) are stored into the moov box and moof boxes that are metadata storage sections in the MP4 file (CFF).

The control information to be used only for the data stored in the respective mdat boxes is stored into the moof boxes associated with the respective mdat boxes, and the control information related to the data stored in the mdat boxes is stored into the moov box.

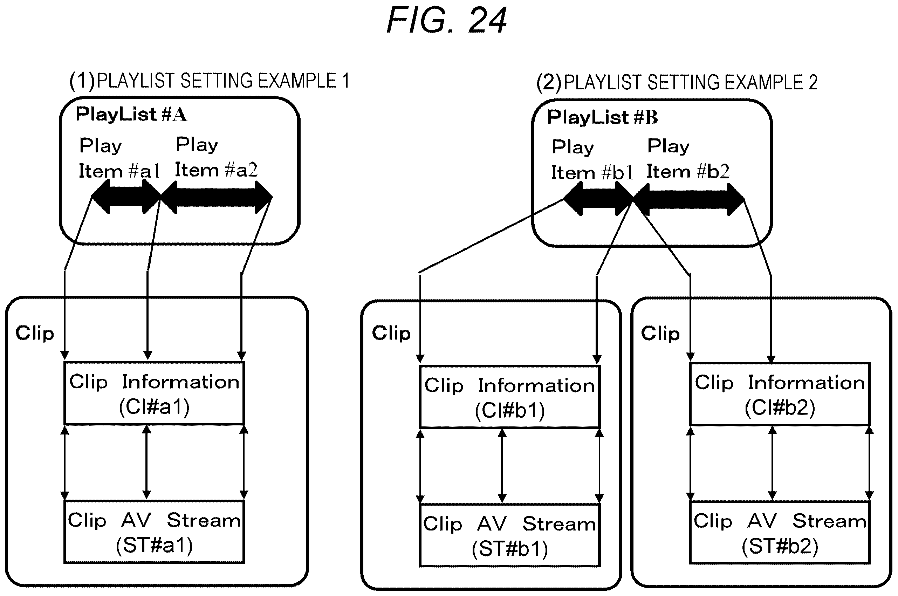

Through this process, BDMV format data is converted into MP4 format (CFF) data, and a CFF file is generated. As for the playlists, there are various examples of settings as shown in Fig. 24.

### [E-6. Structure in which MP4-compliant sample information is recorded in BDMV format data]

In a case where an MP4 file such as a CFF file is generated through format conversion of BDMV format data, and is then recorded on a medium, it is difficult in reality to analyze the existing data contained in the BDMV data, which are playlist files, clip information files, and clip AV stream files, and generate the data to be recorded in the sample information boxes (Sample Description Boxes) to be recorded in the MP4 (CFF) file.

However, without the recording of the sample information boxes (Sample Description Boxes) in the MP4 file, the MP4 player that performs the process of reproducing the MP4 (CFF) format data cannot perform correct data reproduction.

In view of this, the process of generating and recording the sample information boxes (Sample Description Boxes) is necessary in generating an MP4 (CFF) file through format conversion.

A structure that eliminates the difficulties in generating the data to be recorded in the sample information boxes (Sample Description Boxes) through analysis of BDMV format data is described below.

As the BDMV format data to be subjected to the format conversion process, extended BDMV format data including the same data as the data to be recorded in the sample information boxes (Sample Description Boxes) in the MP4 file is defined in advance, and format conversion is performed with the extended BDMV format data.

Specifically, a file containing the same data as the data to be recorded in the sample information boxes (Sample Description Boxes) in the MP4 file is added to conventional BDMV format data.

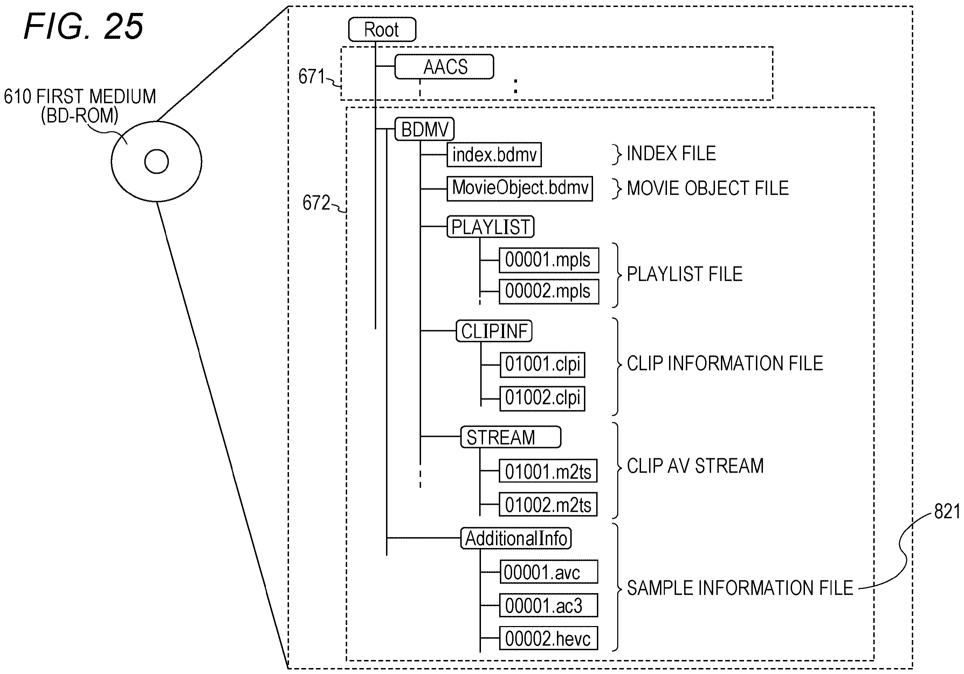

Fig. 25 is a diagram showing an example of a BDMV directory having a structure to which files (sample information files 821) containing the same data as the data to be recorded in the sample information boxes (Sample Description Boxes) are added.

The directory structure shown in Fig. 25 differs from the directory structure described with reference to Fig. 16 in including the sample information files 821.

The sample information files 821 are files storing the data to be recorded in the sample information boxes (Sample Description Boxes) in the MP4 (CFF) file.

The sample information files 821 are set as files associated with the playlist files, and are separately set in accordance with the data types and the data formats of the data to be reproduced.

That is, the sample information files 821 are recorded as separate files corresponding to the respective sample information boxes (Sample Description Boxes) to be recorded in the MP4 (CFF) file.

As described above, the sample information boxes (Sample Description Boxes) in the MP4 (CFF) file are separately set in accordance with the data types and the data formats of the reproduction data to be recorded in the MP4 (CFF) file.

The sample information files 821 set in the BDMV directory shown in Fig. 25 are also recorded as separate files associated with the respective data types (images, sound, and subtitles) and the respective data formats (AVC, HEVC, AC-3, and the like) listed below:
images (Video): AVC and HEVC,
sound (Audio): MPEG4-AAC, Dolby, and AC-3, and
subtitles: SMPTE Timed Text (SMPTE-TT).

The attribute information regarding these data types and data formats, or the information described above with reference to Fig. 22, is recorded into the respective sample information files as the files that form BDMV data.

As described above with reference to Fig. 23, format conversion from BDMV format data into MP4 format data is performed for each playlist, for example. In view of this, the sample information files to be obtained are preferably identified from the playlist file selected as the object to be subjected to the format conversion.

To clarify the correspondence between the playlist files and the sample information files, file name setting is performed as follows.

Specifically, the sample information file corresponding to the data to be reproduced in accordance with a playlist file A is given a file identifier that matches the file identifier of the playlist file A.

For example, in a case where the file identifier of the playlist file A is "00001.mpls", the sample information file corresponding to the data to be reproduced in accordance with the playlist file A is given a file identifier "00001.avc".

That is, the sample information file is given the same file identifier as the identifier of the playlist file as described above.

The extension ("avc" in the above described example) of a sample information file is set so as to identify the data format.

The extension "avc" indicates that the sample information stored in the sample information file corresponds to avc image data.

The extension "hevc" indicates that the sample information stored in the sample information file corresponds to hevc image data.

The extension "ac3" indicates that the sample information stored in the sample information file corresponds to ac3 audio data.

The extension "m4ac" indicates that the sample information stored in the sample information file corresponds to MPEG4-AAC audio data.

The extension "dby" indicates that the sample information stored in the sample information file corresponds to Dolby audio data.

The extension "smpt" indicates that the sample information stored in the sample information file corresponds to SMPTE-TT subtitle data.

The sample information files to be added to the BDMV directory have the above identifiers and extensions.

With this settings, the information processing device that performs BDMV format conversion can select the correct sample information files to be obtained, in accordance with the file identifier of the playlist file selected as the object to be converted.

That is, the sample information files having the same file identifier as the file identifier of the playlist file selected as the object to be converted should be selected.

From the extension of each selected sample information file, it is possible to determine to which data type and data format the sample information stored in the sample information file corresponds.

From the extension of each sample information files, it is possible to determine into which one of the trak boxes the data stored in the sample information file should be recorded, with the trak boxes being set for the respective data types in the moov box in the MP4 (CFF) file.

As described above with reference to Fig. 21 and others, in the moov box in an MP4 (CFF) file, trak boxes are set for the respective data types, a sample table box is set in each trak box, and a sample information box is set in each sample table box.

The information processing device that converts BDMV format data into MP4 (CFF) format data performs a process of recording the data recorded in sample information files recorded as files forming the BDMV format data, into a sample information box to be set in the MP4 (CFF) file.

From the file identifiers and the file extensions, it is possible to determine which sample information files in the BDMV format are to be recorded into which sample information boxes in the MP4 (CFF) file.

The BDMV format data having the sample information files 821 described above with reference to Fig. 25 can be the data to be recorded in a case where the information processing device 600 shown in Fig. 14 performs data recording on the first medium 610, for example.

The data recording application (program) to be executed by the control unit 601 includes the sequence for generating the sample information files corresponding to the playlist files, for example. As a data recording process is performed in accordance with this program, data having the directory structure shown in Fig. 25 can be recorded.

Specifically, when data recording is performed on the first medium 610, the playlist files to be used in data reproduction are generated, and sample information files storing the data (the data shown in Fig. 22, for example) to be recorded in the sample information boxes (Sample Description Boxes) in the MP4 (CFF) file are generated and then recorded.

The file names of these files are identical as described above, for example.

This data recording process can be performed in conjunction with a process of recording video data that is input via the imaging unit and the microphone constituting the input unit 602 of the information processing device 600 shown in Fig. 14, or video data that is input via the communication unit 603, for example.

### [E-7. Format conversion process sequence to be executed by the information processing device]

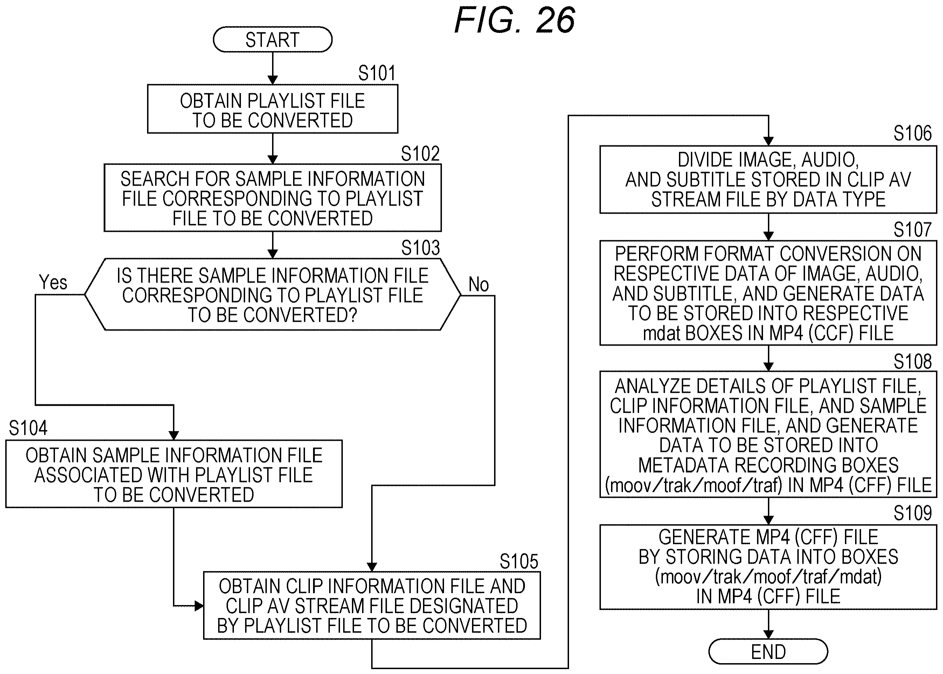

Referring now to the flowchart shown in Fig. 26, a format conversion process sequence to be executed by the information processing device 600 is described.

The sequence shown in the flowchart in Fig. 26 is executed in accordance with a program stored in the storage unit, for example, under the control of the control unit of the information processing device.

The procedures in the respective steps shown in the flowchart are sequentially described below.

### (Step S101)

First, the information processing device receives, from a medium or an external server or the like, BDMV format data to be converted, and obtains, from the received data, the playlist file to be converted.

### (Step S102)

The information processing device then searches for the sample information files corresponding to the playlist file selected as the object to be converted.

This step is carried out as a process of searching for the sample information files corresponding to the playlist file name, for example.

There is a copy management system that allows copying of data between media only if copy permission information has been received from an external management server.

That is, when the information processing device 600 shown in Fig. 14 performs a copying process of recording the data recorded on the first medium 610 onto the second medium 620, for example, the information processing device 600 needs to receive copy permission information from an external management server. When performing a process in accordance with such a copy management system, the information processing device 600 first reads the copy control management file (MCMF: Managed Copying Manifest File) recorded on the first medium 610.

The copy control management file (MCMF) stores the access information (URL) about the management server that provides the copy permission information regarding the content recorded on the first medium 610, and playlist file names as the data information (dealManifest) for permitting copying. Only the data identified by the playlist file names recorded in the copy control management file (MCMF) is the copy-permitted data.

In a case where the copy control management file (MCMF) is recorded on the first medium 610, the information processing device receives copy permission information from the management server, and selects, from the first medium 610, only the data identified by the playlist file names recorded in the copy control management file (MCMF) . The information processing device then records the selected data on the second medium 620.

When performing such a process, the information processing device 600 may search for sample information files based on the file names of the playlist files recorded in the copy control management file (MCMF).

### (Step S103)

In step S103, a check is made to determine whether the sample information files corresponding to the playlist file selected as the object to be converted have been detected. If the sample information files have been detected, the process moves on to step S104. If any corresponding sample information file has not been detected, the process moves on to step S105.

### (Step S104)

If the sample information files corresponding to the playlist file selected as the object to be converted have been detected, the sample information files are acquired in step S104.

### (Step S105)

In step S105, the clip information file designated by the playlist file selected as the object to be converted, and the clip AV stream file associated with the clip information file are acquired.

### (Step S106)

In step S106, the data of images, sound, and subtitles stored in the clip AV stream file is divided by the data type. This process is a process to be performed by the data analyzing unit 651 of the data converting unit 608 shown in Fig. 15.

### (Step S107)

In step S107, format conversion is performed on the data of images, sound, and subtitles, to generate data to be stored in mdat boxes in an MP4 (CCF) file.

This process is a process to be performed by the image data converting unit 652, the audio data converting unit 653, and the subtitle data converting unit 654 of the data converting unit 608 shown in Fig. 15.

### (Step S108)

In step S108, the playlist file, the clip information file, and the sample information files are analyzed in detail, and the data to be stored into the metadata recording boxes (moov/trak/moof/traf) in the MP4 (CFF) file is generated.

This process is a process to be performed by the control unit 601 shown in Fig. 14 and the multiplexing unit 655 of the data converting unit 608 shown in Fig. 15.

In this process in step S108, the data to be recorded in the sample table boxes and the sample information boxes (Sample Description Boxes) in the trak boxes in the moov box is also generated.

The data to be recorded in the sample information boxes (Sample Description Boxes) is obtained from the sample information files acquired in step S104.

### (Step S109)

In step S109, the data is stored into the boxes (moov/trak/moof/traf/mdat) in the MP4 (CFF) file, and the MP4 (CFF) file is generated.

This process is a process to be performed by the control unit 601 shown in Fig. 14 and the multiplexing unit 655 of the data converting unit 608 shown in Fig. 15.

The generated MP4 (CFF) file is recorded on the second medium, and the process is completed.

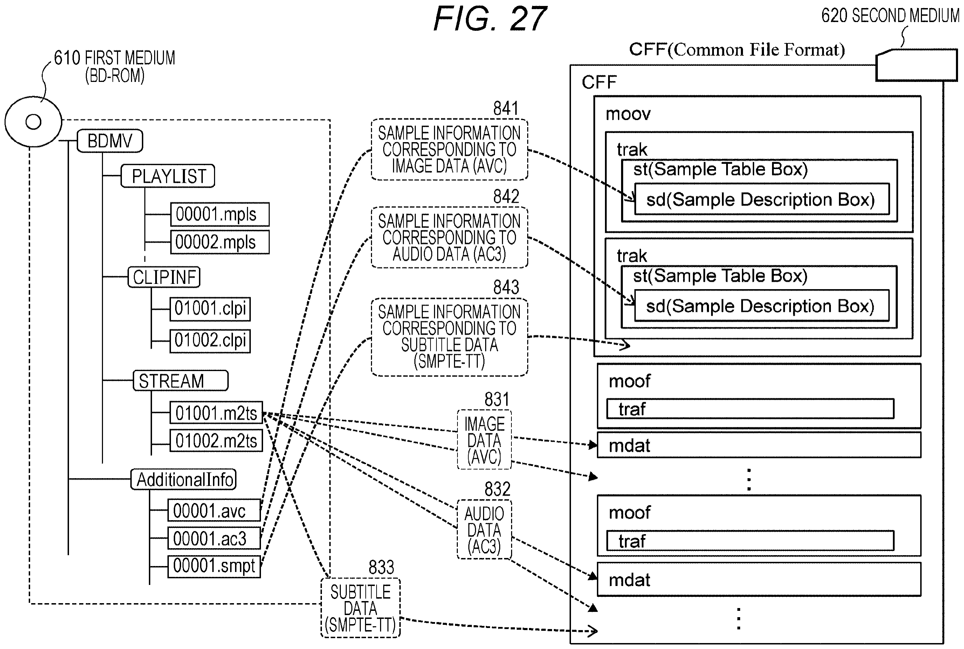

Fig. 27 is a diagram for explaining the correspondence relationship between the data structure of BDMV format data as the data to be subjected to format conversion, and the data structure (bos structure) of the MP4 (CFF) file to be generated after the format conversion.

The BDMV format data is the data recorded on the first medium 610 such as a BD-ROM. The MP4 (CFF) file after the conversion is the data recorded on the second medium 620 such as a flash memory.

An example process in which a playlist file [00001.mpls] is selected as the object to be converted is now described.

The clip AV stream file selected as the object to be reproduced in accordance with the playlist file [00001.mpls] to be converted is a clip AV stream file [01001.m2ts].

This clip AV stream file [01001.m2ts] stores image data, audio data, and subtitle data in the form of encoded data. The information processing device that performs the conversion process decodes these pieces of data, converts the data into predetermined encoded data specified in the CFF format, divides the encoded data, and then stores the divided data into mdat boxes in the CFF file.

Specifically, the following pieces of data:
image data (AVC) 831,
audio data (AC3) 832, and
subtitle data (SMPTE-TT) 833,
which are shown in the drawing, are generated, and are then divided and stored into mdat boxes in the CFF file.

The information processing device further acquires the sample information files storing the attribute information (metadata) corresponding to the respective pieces of data to be reproduced.

The sample information files having the same file name as the file name [00001.mpls] of the playlist file selected as the object to be converted should be selected.

The information processing device selects the following three sample information files shown in the drawing:
the sample information file [00001.avc] corresponding to the image data (AVC),
the sample information file [00001.ac3] corresponding to the audio data (AC3), and
the sample information file [00001.smpt] corresponding to the subtitle data (SMPTE-TT).

The information processing device records the sample information data extracted from the respective files into the sample information boxes in the respective trak boxes in the moov box in the CFF file.

The trak boxes are set for the respective data types and the respective data formats. In accordance with the extensions of the sample information files, the information processing device recognizes the data types and formats, selects the corresponding trak boxes, and then records the respective pieces of data into the sample information boxes (Sample Description Boxes) in the selected trak boxes.

The following pieces of sample information:
the sample information 841 corresponding to the image data (AVC),
the sample information 842 corresponding to the audio data (AC3), and
the sample information 843 corresponding to the subtitle data (SMPTE-TT),
are recorded into the sample information boxes (Sample Description Boxes) in the respective trak boxes in the moov box in the CCF file, as shown in the drawing.

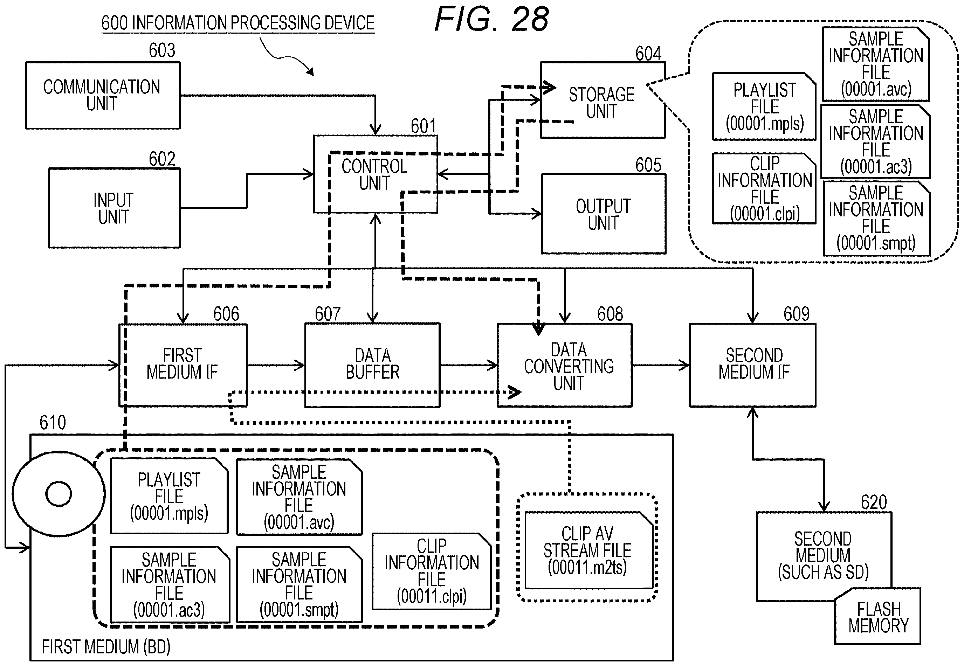

Fig. 28 is a diagram for explaining the data flow caused in a format conversion process.

In the example data flow shown in Fig. 28, the BDMV format data recorded on the first medium 610 is read and converted into MP4 format data, and is then recorded on the second medium 620.

The playlist file selected from the first medium 610 is the playlist file [00001.mpls].

The control unit 601 first reads this playlist file [00001.mpls] from the first medium 610, and stores the playlist file [00001.mpls] into the storage unit 604.

The control unit 601 then searches for the sample information files corresponding to the playlist file [00001.mpls].

The search process is performed based on the file name. Specifically, the control unit 601 searches for the sample information files having the same file name as the playlist file [00001.mpls].

In a case where data copying is performed between media using the above described copy control management file (MCMF), the control unit 601 may search for the sample information files based on the playlist file name recorded in the copy control management file (MCMF) recorded on the first medium 610.

The sample information files detected as the sample information files having the same file name as the playlist file [00001.mpls] are:
the sample information file [00001.avc] corresponding to the image data (AVC),
the sample information file [00001.ac3] corresponding to the audio data (AC3), and
the sample information file [00001.smpt] corresponding to the subtitle data (SMPTE-TT).

These sample information files are read from the first medium 610, and are recorded into the storage unit 604.

The control unit 601 further acquires the clip information file designated by the playlist file [00001.mpls] selected as the object to be converted, and the clip AV stream file associated with the clip information file.

The acquired files are as follows:
a clip information file [00011.clpi], and
a clip AV stream file [00011.m2ts].

The acquired clip information file [00011.clpi] is stored into the storage unit 604.

The clip AV stream file [00011.m2ts] is input to the data converting unit 608 via the data buffer 607.

In accordance with the program IDs (PIDs) that are set in the respective packets in the clip AV stream file by the data analyzing unit 651 shown in Fig. 15, the data converting unit 608 separates the image data, the audio data, and the subtitle data from one another, and the respective pieces of data are output to the image data converting unit 652, the audio data converting unit 653, and the subtitle data converting unit 654.

The image data converting unit 652, the audio data converting unit 653, and the subtitle data converting unit 654 perform format conversion on the input data. Specifically, a process is performed to convert the BDMV format data into data in an MP4 (CFF) format to be recorded on the second medium 620.

In the format conversion process for the respective types of data, the image data converting unit 652, the audio data converting unit 653, and the subtitle data converting unit 654 each perform a decoding process, an encoding process, an encryption process, and the like, as necessary.

The image data converting unit 652, the audio data converting unit 653, and the subtitle data converting unit 654 generate data in the MP4 format, and then output the data to the multiplexing process executing unit 655.

The multiplexing unit 655 performs a multiplexing process on the following data:
(a) image format data in the second format (MP4) generated by the image data generating unit 652;
(b) audio format data in the second format (MP4) generated by the audio data generating unit 653;
(c) subtitle format data in the second format (MP4) generated by the subtitle data generating unit 654;
(d) reproduction control data obtained from reproduction control information files such as the playlist file and the clip information file stored in the storage unit 604; and
(e) sample information obtained from the sample information files stored in the storage unit 604.

By performing the above multiplexing process, the multiplexing process executing unit 655 generates recording data in the second format (MP4).

The reproduction control information files stored in the storage unit 604 are:
the playlist file [00001.mpls], and
the clip information file [00011.clpi].

Also, the sample information files of the respective data types and the respective data formats listed below are temporarily stored in the storage unit 604:
the sample information file [00001.avc] corresponding to the image data (AVC),
the sample information file [00001.ac3] corresponding to the audio data (AC3), and
the sample information file [00001.smpt] corresponding to the subtitle data (SMPTE-TT).

The sample information files store the attribute information about the respective pieces of data described above with reference to Fig. 22.

The information processing device records the data recorded in the sample information files, into the sample information boxes (Sample Description Boxes) in the trak boxes in the moov box in the MP4 (CCF) file.

The multiplexing unit 655 of the data converting unit 608 performs the multiplexing process on the image data, the audio data, and the subtitle data in the MP4 format, and on the data extracted from the reproduction control information files. As a result, recording data in the second format (MP4) is generated.

The generated MP4 (CFF) file is recorded on the second medium 620 via the second medium interface 609.

In the example process shown in Fig. 28, BDMV format data is recorded on the first medium 610, and the data read from the first medium 610 is converted into an MP4 (CFF) file. The MP4 (CFF) file is then recorded on the second medium 620.

However, the data to be subjected to the format conversion process may be data that is input from outside via the communication unit 603, as described above. In that case, all the data read from the first medium 610 shown in Fig. 28 is input via the communication unit 603.

### [E-8. Example process of recording sample information obtained from an external server]

As described above with reference to Fig. 28, the data to be subjected to format conversion may be input from the first medium 610 such as a BD or from outside via the communication unit 603.

Further, in another example, the first medium 610 may not store conventional BDMV format data or sample information files, and only the sample information file may be obtained from an external server.

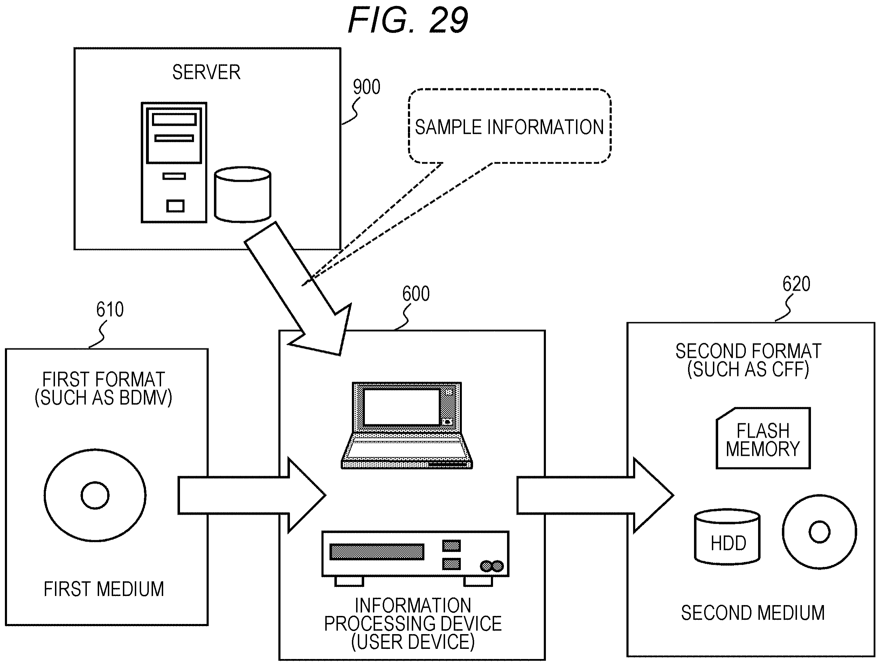

Specifically, as shown in Fig. 29, the information processing device 600 that performs a data recording process has the first medium 610 mounted therein, and is further connected to a server 900.

The information processing device 600 obtains the playlist file to be converted from the first medium 610 storing the BDMV format data, and transmits the information for identifying the obtained playlist file to the server 900.

In accordance with the information for identifying the playlist file, the server 900 obtains the sample information files associated with the playlist file from a storage unit, and transmits the sample information files to the information processing device 600. The server 900 holds sample information files associated with various playlists in the storage unit.

The information processing device 600 records the sample information files received from the server 900 into the trak boxes in the moov box in an MP4 (CCF) file. The trak boxes in which the respective sample information files are recorded are trak boxes associated with the data types and the data formats of the reproduction data corresponding to the respective pieces of sample information.

In this processing structure, there is no need to additionally record sample information files on the first medium 610, and the data recorded on a medium having a data recording structure compliant with the conventional BDMV directory described with reference to Fig. 16, for example, can be converted into data in an MP4 file format and be recorded on the second medium.

### [E-9. Summary of the structure and the effects of this embodiment]

As described so far, in a case where BDMV data is converted into an MP4 file to be recorded according to this embodiment, the data to be recorded in sample information boxes in the MP4 file can be obtained and recorded.

Specifically, the control unit obtains the information to be used in the format conversion process, and the data converting unit performs the process of converting the BDMV format data into MP4 format data. The control unit selects the playlist file to be converted from the BDMV format data, and obtains sample information files that have the file names corresponding to the selected playlist file and store the attribute information regarding the respective data types. The data converting unit records the data obtained from the sample information files into the sample information boxes (Sample Description Boxes) specified in the MP4 format data.

Thus, when BDMV data is converted into an MP4 file to be recorded with this structure, the data to be recorded in the sample information boxes in the MP4 file can be obtained and recorded.

### [F. Summary of the structures according to the present disclosure]

Embodiments of the present disclosure have been described so far by way of specific examples. However, it is obvious that those skilled in the art can make modifications to and substitutions of the embodiments without departing from the scope of the present disclosure. That is, the present invention is disclosed in the form of examples, and the above description should not be interpreted in a restrictive manner . The claims should be taken into account in understanding the subject matter of the present disclosure.

The series of processes described in this specification can be performed by hardware, software, or a combination of hardware and software . In a case where processes are performed by software, a program in which the process sequences are recorded may be installed into a memory incorporated into special-purpose hardware in a computer, or may be installed into a general-purpose computer that can perform various kinds of processes. For example, the program can be recorded beforehand into a recording medium. The program can be installed from the recording medium into a computer, or can be received via a network such as a Local Area Network (LAN) or the Internet and be installed into a recording medium such as an internal hard disk.

The respective processes described in this specification may not be performed in chronological order according to the description, but may be performed in parallel or independently of one another depending on the configuration/capability of the apparatus performing the processes or as necessary. In this specification, a system is a logical assembly of devices, and does not necessarily mean devices with different structures incorporated into one housing.

### INDUSTRIAL APPLICABILITY

As described so far, with a structure according to an embodiment of the present disclosure, it is possible to avoid a situation where some data is missing in a process of recording data on a second medium in a different format from the data recording format of a first medium.

Specifically, an information processing device that reads the data recorded on the first medium, and performs a process of recording data on the second medium receives copy permission information from a management server, and acquires, from a data providing server, additional data that cannot be acquired directly from the first medium. The information processing device reads a copy control management file recorded on the first medium, and accesses and acquires the additional data by using access information recorded in the copy control management file. The information processing device then uses data containing the acquired additional data as the data to be recorded on the second medium.

With this structure, it is possible to avoid a situation where some data is missing in a process of recording data on the second medium in a different format from the data recording format of the first medium.

### REFERENCE SIGNS LIST

- 10: First medium
- 20: Information processing device
- 30: Second medium
- 50: Management server
- 110: First medium
- 111: Copy control management file
- 112: Management data
- 113: Encrypted content
- 120: Information processing device
- 121: Copy permission list
- 122: Copy permission information
- 131: Server response information
- 132: Settlement data
- 140: Management server
- 150: Second medium
- 151: Encrypted content
- 210: First medium
- 220: Information processing device
- 230: Second medium
- 250: Management server
- 270: Data providing server
- 501: Data processing unit (control unit)
- 502: Communication unit
- 503: Input unit
- 504: Output unit
- 505: Memory
- 506: First medium interface
- 507: Second medium interface
- 600: Information processing device
- 601: Control unit
- 602: Input unit
- 603: Communication unit
- 604: Storage unit
- 605: Output unit
- 606: First medium interface
- 607: Data buffer
- 608: Data converting unit
- 609: Second medium interface
- 610: First medium
- 620: Second medium
- 651: Data analyzing unit
- 652: Image data converting unit
- 653: Audio data converting unit
- 654: Subtitle data converting unit
- 655: Multiplexing unit
- 900: Server

## Claims

1. An information processing device (220) comprising:
a data processing unit (501) configured to read data recorded on a first medium (210), and perform one of a process of recording data on a second medium (230) and a process of outputting data to be recorded on the second medium (230); and
a communication unit (502) configured to perform communication with a management server (250) and a data providing server (270),
wherein the first medium (210) is a Blu-ray disc and the second medium (230) is a flash memory or a hard drive disk,
wherein the data that are recorded on the first medium (210) are recorded in a first data format,
wherein the data to be recorded onto the second medium (230) as a copy destination are to be recorded in a second data format that differs from the first data format,
wherein the first data format is a Blu-ray Disc Movie, BDMV, format and the second data format is a Common File Format, CFF,
wherein the data recorded on the first medium (210) comprise image data, audio data, subtitle data and metadata provided in the first data format,
wherein the first medium (210) stores a copy control management file, the copy control management file having a structure comprising access information about the management server (250) that provides copy permission information and data access information about the data providing server (270) for acquiring additional data, the additional data being not directly acquirable from the first medium (210), the additional data being generated due to the difference in data format between the first data format and the second data format, the additional data with regard to content corresponding to the data as recorded on the first medium (210) in the first data format, but the additional data comprise encoded image data in the second format, encoded audio data in the second format, subtitle data in the second format, and metadata different from metadata recorded on the first medium (210),
wherein, in a copying process to record, on the second medium (230), the data recorded on the first medium (210), the data processing unit is configured to:
read the copy control management file recorded on the first medium (210),
perform a process of receiving the copy permission information from the management server (250),
read, from the copy control management file, the data access information of the additional data,
perform a process of accessing and acquiring the additional data from the data providing server (270) by using the data access information, and
output data containing the additional data acquired from the data providing server (270) as the data to be recorded on the second medium (230).

2. The information processing device (220) according to claim 1, wherein:
the copy control management file further stores attribute information about data that can be acquired with the data access information recorded in the copy control management file; and
the data processing unit (501) outputs attribute information as data to be recorded on the second medium (230), the attribute information being acquired from the copy control management file.

3. The information processing device (220) according to claim 1, wherein:
the data processing unit (501) identifies data to be copied, and reads, from the copy control management file, the data access information of the additional data associated with the identified data to be copied.

4. An information processing device (220) comprising:
a data processing unit (501) configured to read data recorded on a first medium (210), and perform one of a process of recording data on a second medium (230) and a process of outputting data to be recorded on the second medium (230); and
a communication unit (502) configured to perform communication with a management server (250),
wherein the first medium (210) is a Blu-ray disc and the second medium (230) is a flash memory or a hard drive disk,
wherein the data that are recorded on the first medium (210) are recorded in a first data format,
wherein the data to be recorded onto the second medium (230) as a copy destination are to be recorded in a second data format that differs from the first data format,
wherein the first data format is a Blu-ray Disc Movie, BDMV, format and the second data format is a Common File Format, CFF,
wherein the data recorded on the first medium (210) comprise image data, audio data, subtitle data and metadata provided in the first data format,
wherein the first medium (210) stores a copy control management file, the copy control management file having a structure comprising access information about the management server (250) that provides copy permission information and data access information about a data providing server (270) for acquiring additional data, the additional data being not directly acquirable from the first medium (210), the additional data being generated due to the difference in data format between the first data format and the second data format, the additional data with regard to content corresponding to the data as recorded on the first medium (210) in the first data format, but the additional data comprise encoded image data in the second format, encoded audio data in the second format, subtitle data in the second format, and metadata different from metadata recorded on the first medium (210),
wherein, in a copying process to record, on the second medium (230), the data recorded on the first medium (210), the data processing unit (501) is configured to:
read the copy control management file recorded on the first medium (210),
perform a process of receiving the copy permission information from the management server (250),
read, from the copy control management file, the data access information of the additional data,
perform a process of reading the data access information for obtaining the additional data from the copy control management file recorded on the first medium (210), and
output data containing the data access information for obtaining the additional data as the data to be recorded on the second medium (230).

5. An information processing system comprising:
an information processing device (220) configured to read data recorded on a first medium (210), and perform one of a process of recording data on a second medium or a process of outputting data to be recorded on the second medium (230);
a management server (250) configured to output copy permission information to the information processing device; and
a data providing server (270) configured to performs a process of providing additional data to the information processing device,
wherein the first medium (210) is a Blu-ray disc and the second medium (230) is a flash memory or a hard drive disk,
wherein the data that are recorded on the first medium (210) are recorded in a first data format,
wherein the data to be recorded onto the second medium (230) as a copy destination are to be recorded in a second data format that differs from the first data format,
wherein the first data format is a Blu-ray Disc Movie, BDMV, format and the second data format is a Common File Format, CFF,
wherein the data recorded on the first medium (210) comprise image data, audio data, subtitle data and metadata provided in the first data format,
wherein the first medium (210) stores a copy control management file, the copy control management file having a structure comprising access information about the management server (250) that provides the copy permission information and data access information about a data providing server (270) for acquiring the additional data, the additional data being not directly acquirable from the first medium (210), the additional data being generated due to the difference in data format between the first data format and the second data format, the additional data with regard to content corresponding to the data as recorded on the first medium (210) in the first data format, but the additional data comprise encoded image data in the second format, encoded audio data in the second format, subtitle data in the second format, and metadata different from metadata recorded on the first medium (210),
wherein the information processing device (220) includes:
a data processing unit (501) configured to read data recorded on the first medium (210), and perform one of the process of recording data on the second medium (230) or the process of outputting data to be recorded on the second medium (230); and
a communication unit (502) configured to perform communication with the management server and the data providing server (270),
wherein, in a copying process to record, on the second medium (230), the data recorded on the first medium (210), the data processing unit (501) is configured to:
read the copy control management file recorded on the first medium (210),
perform a process of receiving the copy permission information from the management server (250),
read, from the copy control management file, the data access information of the additional data,
perform a process of accessing and acquiring the additional data from the data providing server (270) by using the data access information, and
output data containing the additional data acquired from the data providing server as the data to be recorded on the second medium (230).

6. An information processing method implemented in an information processing device (220),
the information processing device (220) including:
a data processing unit (501) configured to read data recorded on a first medium (210), and perform one of a process of recording data on a second medium (230) and a process of outputting data to be recorded on the second medium (230); and
a communication unit (502) configured to perform communication with a management server (250) and a data providing server (270),
wherein the first medium (210) is a Blu-ray disc and the second medium (230) is a flash memory or a hard drive disk,
wherein the data that are recorded on the first medium (210) are recorded in a first data format,
wherein the data to be recorded onto the second medium (230) as a copy destination are to be recorded in a second data format that differs from the first data format,
wherein the first data format is a Blu-ray Disc Movie, BDMV, format and the second data format is a Common File Format, CFF,
wherein the data recorded on the first medium (210) comprise image data, audio data, subtitle data and metadata provided in the first data format,
wherein the first medium (210) stores a copy control management file, the copy control management file having a structure comprising access information about the management server (250) that provides copy permission information and data access information about the data providing server (270) for acquiring additional data, the additional data being not directly acquirable from the first medium (210), the additional data being generated due to the difference in data format between the first data format and the second data format, the additional data with regard to content corresponding to the data as recorded on the first medium (210) in the first data format, but the additional data comprise encoded image data in the second format, encoded audio data in the second format, subtitle data in the second format, and metadata different from metadata recorded on the first medium (210),
wherein, in a copying process to record, on the second medium (230), the data recorded on the first medium (210), the data processing unit (501):
reads the copy control management file recorded on the first medium (210),
performs a process of receiving copy permission information from the management server (250),
read, from the copy control management file, the data access information of the additional data,
performs a process of accessing and acquiring additional data from the data providing server (270) by using the data access information, and
outputs data containing the additional data acquired from the data providing server (270) as the data to be recorded on the second medium (230).

7. A program for causing an information processing device (220) to perform information processing,
the information processing device (220) including:
a data processing unit (501) configured to read data recorded on a first medium (210), and perform one of a process of recording data on a second medium (230) and a process of outputting data to be recorded on the second medium (230); and
a communication unit (502) configured to perform communication with a management server (250) and a data providing server (270),
wherein the first medium (210) is a Blu-ray disc and the second medium (230) is a flash memory or a hard drive disk,
wherein the data that are recorded on the first medium (210) are recorded in a first data format,
wherein the data to be recorded onto the second medium (230) as a copy destination are to be recorded in a second data format that differs from the first data format,
wherein the first data format is a Blu-ray Disc Movie, BDMV, format and the second data format is a Common File Format, CFF,
wherein the data recorded on the first medium (210) comprise image data, audio data, subtitle data and metadata provided in the first data format,
wherein the first medium (210) stores a copy control management file, the copy control management file having a structure comprising access information about the management server (250) that provides copy permission information and data access information about the data providing server (270) for acquiring additional data, the additional data being not directly acquirable from the first medium (210), the additional data being generated due to the difference in data format between the first data format and the second data format, the additional data with regard to content corresponding to the data as recorded on the first medium (210) in the first data format, but the additional data comprise encoded image data in the second format, encoded audio data in the second format, subtitle data in the second format, and metadata different from metadata recorded on the first medium (210),
wherein, in a copying process to record, on the second medium(230), the data recorded on the first medium (210), the program causes the data processing unit (501) to:
read the copy control management file recorded on the first medium (210);
perform a process of receiving copy permission information from the management server (250);
read, from the copy control management file, the data access information of the additional data;
perform a process of accessing and acquiring additional data from the data providing server (270) by using the data access information; and
output data containing the additional data acquired from the data providing server (270) as the data to be recorded on the second medium (230).

## Patentansprüche

1. Informationsverarbeitungsvorrichtung (220), die Folgendes umfasst:
eine Datenverarbeitungseinheit (501), die dafür konfiguriert ist, auf einem ersten Medium (210) aufgezeichnete Daten zu lesen und einen Prozess des Aufzeichnens von Daten auf einem zweiten Medium (230) oder einen Prozess des Ausgebens von Daten, die auf dem zweiten Medium (230) aufgezeichnet werden sollen, auszuführen; und
eine Kommunikationseinheit (502), die dafür konfiguriert ist, die Kommunikation mit einem Managementserver (250) und mit einem Datenbereitstellungsserver (270) auszuführen,
wobei das erste Medium (210) eine Blu-Ray-Disk ist und das zweite Medium (230) ein Flash-Speicher oder eine Festplatte ist,
wobei die Daten, die auf dem ersten Medium (210) aufgezeichnet sind, in einem ersten Datenformat aufgezeichnet sind,
wobei die Daten, die auf dem zweiten Medium (230) als einem Kopierziel aufgezeichnet werden sollen, in einem zweiten Datenformat, das sich von dem ersten Datenformat unterscheidet, aufgezeichnet werden sollen,
wobei das erste Datenformat ein Blu-Ray-Disk-Spielfilm-Format, BDMV-Format, ist und das zweite Datenformat ein Common File Format, CFF, ist,
wobei die auf dem ersten Medium (210) aufgezeichneten Daten in dem ersten Datenformat bereitgestellte Bilddaten, Audiodaten, Untertiteldaten und Metadaten umfassen,
wobei das erste Medium (210) eine Kopiersteuerungs-Managementdatei speichert, wobei die Kopiersteuerungs-Managementdatei eine Struktur aufweist, die Zugriffsinformationen über den Managementserver (250), der Kopierberechtigungsinformationen bereitstellt, und Datenzugriffsinformationen über den Datenbereitstellungsserver (270) zum Erfassen zusätzlicher Daten umfasst, wobei die zusätzlichen Daten von dem ersten Medium (210) nicht direkt erfassbar sind, wobei die zusätzlichen Daten wegen des Unterschieds des Datenformats zwischen dem ersten Datenformat und dem zweiten Datenformat erzeugt werden, wobei die zusätzlichen Daten hinsichtlich des Inhalts den Daten entsprechen, wie sie auf dem ersten Medium (210) in dem ersten Datenformat aufgezeichnet sind, wobei die zusätzlichen Daten aber codierte Bilddaten in dem zweiten Format, codierte Audiodaten in dem zweiten Format, Untertiteldaten in dem zweiten Format und von den auf dem ersten Medium (210) aufgezeichneten Metadaten verschiedene Metadaten umfassen,
wobei die Datenverarbeitungseinheit in einem Kopierprozess zum Aufzeichnen der auf dem ersten Medium (210) aufgezeichneten Daten auf dem zweiten Medium (230) zu Folgendem konfiguriert ist:
Lesen der auf dem ersten Medium (210) aufgezeichneten Kopiersteuerungs-Managementdatei,
Ausführen eines Prozesses des Empfangens der Kopiergenehmigungsinformationen von dem Managementserver (250),
Lesen der Datenzugriffsinformationen der zusätzlichen Daten von der Kopiersteuerungs-Managementdatei,
Ausführen eines Prozesses des Zugreifens auf die und des Erfassens der zusätzlichen Daten von dem Datenbereitstellungsserver (270) unter Verwendung der Datenzugriffsinformationen, und
Ausgeben von Daten, die die von dem Datenbereitstellungsserver (270) erfassten zusätzlichen Daten enthalten, als die auf dem zweiten Medium (230) aufzuzeichnenden Daten.

2. Informationsverarbeitungsvorrichtung (220) nach Anspruch 1, wobei:
die Kopiersteuerungs-Managementdatei ferner Attributinformation über Daten, die mit den in der Kopiersteuerungs-Managementdatei aufgezeichneten Datenzugriffsinformationen erfasst werden können, speichert; und
die Datenverarbeitungseinheit (501) Attributinformationen als auf dem zweiten Medium (230) aufzuzeichnende Daten ausgibt, wobei die Attributinformationen von der Kopiersteuerungs-Managementdatei erfasst werden.

3. Informationsverarbeitungsvorrichtung (220) nach Anspruch 1, wobei:
die Datenverarbeitungseinheit (501) zu kopierende Daten identifiziert und von der Kopiersteuerungs-Managementdatei die Datenzugriffsinformationen der zusätzlichen Daten liest, die den identifizierten zu kopierenden Daten zugeordnet sind.

4. Informationsverarbeitungsvorrichtung (220), die Folgendes umfasst:
eine Datenverarbeitungseinheit (501), die dafür konfiguriert ist, auf einem ersten Medium (210) aufgezeichnete Daten zu lesen und einen Prozess des Aufzeichnens von Daten auf einem zweiten Medium (230) oder einen Prozess des Ausgebens von Daten, die auf dem zweiten Medium (230) aufgezeichnet werden sollen, auszuführen; und
eine Kommunikationseinheit (502), die dafür konfiguriert ist, die Kommunikation mit einem Managementserver (250) auszuführen,
wobei das erste Medium (210) eine Blu-Ray-Disk ist und das zweite Medium (230) ein Flash-Speicher oder eine Festplatte ist,
wobei die Daten, die auf dem ersten Medium (210) aufgezeichnet sind, in einem ersten Datenformat aufgezeichnet sind,
wobei die Daten, die auf dem zweiten Medium (230) als einem Kopierziel aufgezeichnet werden sollen, in einem zweiten Datenformat, das sich von dem ersten Datenformat unterscheidet, aufgezeichnet werden sollen,
wobei das erste Datenformat ein Blu-Ray-Disk-Spielfilm-Format, BDMV-Format, ist und das zweite Datenformat ein Common File Format, CFF, ist,
wobei die auf dem ersten Medium (210) aufgezeichneten Daten in dem ersten Datenformat bereitgestellte Bilddaten, Audiodaten, Untertiteldaten und Metadaten umfassen,
wobei das erste Medium (210) eine Kopiersteuerungs-Managementdatei speichert, wobei die Kopiersteuerungs-Managementdatei eine Struktur aufweist, die Zugriffsinformationen über den Managementserver (250), der Kopierberechtigungsinformationen bereitstellt, und Datenzugriffsinformationen über den Datenbereitstellungsserver (270) zum Erfassen zusätzlicher Daten umfasst, wobei die zusätzlichen Daten von dem ersten Medium (210) nicht direkt erfassbar sind, wobei die zusätzlichen Daten wegen des Unterschieds des Datenformats zwischen dem ersten Datenformat und dem zweiten Datenformat erzeugt werden, wobei die zusätzlichen Daten hinsichtlich des Inhalts den Daten entsprechen, wie sie auf dem ersten Medium (210) in dem ersten Datenformat aufgezeichnet sind, wobei die zusätzlichen Daten aber codierte Bilddaten in dem zweiten Format, codierte Audiodaten in dem zweiten Format, Untertiteldaten in dem zweiten Format und von den auf dem ersten Medium (210) aufgezeichneten Metadaten verschiedene Metadaten umfassen,
wobei die Datenverarbeitungseinheit (501) in einem Kopierprozess zum Aufzeichnen der auf dem ersten Medium (210) aufgezeichneten Daten auf dem zweiten Medium (230) zu Folgendem konfiguriert ist:
Lesen der auf dem ersten Medium (210) aufgezeichneten Kopiersteuerungs-Managementdatei,
Ausführen eines Prozesses des Empfangens der Kopiergenehmigungsinformationen von dem Managementserver (250),
Lesen der Datenzugriffsinformationen der zusätzlichen Daten von der Kopiersteuerungs-Managementdatei,
Ausführen eines Prozesses des Lesens der Datenzugriffsinformationen zum Erhalten der zusätzlichen Daten von der auf dem ersten Medium (210) aufgezeichneten Kopiersteuerungs-Managementdatei, und
Ausgeben von Daten, die die Datenzugriffsinformationen enthalten, um die zusätzlichen Daten als die auf dem zweiten Medium (230) aufzuzeichnenden Daten zu enthalten.

5. Informationsverarbeitungssystem, das Folgendes umfasst:
eine Informationsverarbeitungsvorrichtung (220), die dafür konfiguriert ist, auf einem ersten Medium (210) aufgezeichnete Daten zu lesen und einen Prozess des Aufzeichnens von Daten auf einem zweiten Medium oder einen Prozess des Ausgebens auf dem zweiten Medium (230) aufzuzeichnender Daten auszuführen;
einen Managementserver (250), der dafür konfiguriert ist, an die Informationsverarbeitungsvorrichtung Kopierberechtigungsinformationen auszugeben; und
einen Datenbereitstellungsserver (270), der dafür konfiguriert ist, einen Prozess des Bereitstellens zusätzlicher Daten für die Informationsverarbeitungsvorrichtung auszuführen,
wobei das erste Medium (210) eine Blu-Ray-Disk ist und das zweite Medium (230) ein Flash-Speicher oder eine Festplatte ist,
wobei die Daten, die auf dem ersten Medium (210) aufgezeichnet sind, in einem ersten Datenformat aufgezeichnet sind,
wobei die Daten, die auf dem zweiten Medium (230) als einem Kopierziel aufgezeichnet werden sollen, in einem zweiten Datenformat, das sich von dem ersten Datenformat unterscheidet, aufgezeichnet werden sollen,
wobei das erste Datenformat ein Blu-Ray-Disk-Spielfilm-Format, BDMV-Format, ist und das zweite Datenformat ein Common File Format, CFF, ist,
wobei die auf dem ersten Medium (210) aufgezeichneten Daten in dem ersten Datenformat bereitgestellte Bilddaten, Audiodaten, Untertiteldaten und Metadaten umfassen,
wobei das erste Medium (210) eine Kopiersteuerungs-Managementdatei speichert, wobei die Kopiersteuerungs-Managementdatei eine Struktur aufweist, die Zugriffsinformationen über den Managementserver (250), der Kopierberechtigungsinformationen bereitstellt, und Datenzugriffsinformationen über den Datenbereitstellungsserver (270) zum Erfassen zusätzlicher Daten umfasst, wobei die zusätzlichen Daten von dem ersten Medium (210) nicht direkt erfassbar sind, wobei die zusätzlichen Daten wegen des Unterschieds des Datenformats zwischen dem ersten Datenformat und dem zweiten Datenformat erzeugt werden, wobei die zusätzlichen Daten hinsichtlich des Inhalts den Daten entsprechen, wie sie auf dem ersten Medium (210) in dem ersten Datenformat aufgezeichnet sind, wobei die zusätzlichen Daten aber codierte Bilddaten in dem zweiten Format, codierte Audiodaten in dem zweiten Format, Untertiteldaten in dem zweiten Format und von den auf dem ersten Medium (210) aufgezeichneten Metadaten verschiedene Metadaten umfassen,
wobei die Informationsverarbeitungsvorrichtung (220) Folgendes enthält:
eine Datenverarbeitungseinheit (501), die dafür konfiguriert ist, auf dem ersten Medium (210) aufgezeichnete Daten zu lesen und den Prozess des Aufzeichnens von Daten auf dem zweiten Medium (230) oder den Prozess des Ausgebens auf dem zweiten Medium (230) aufzuzeichnender Daten auszuführen; und
eine Kommunikationseinheit (502), die dafür konfiguriert ist, die Kommunikation mit dem Managementserver und mit dem Datenbereitstellungsserver (270) auszuführen,
wobei die Datenverarbeitungseinheit (501) in einem Kopierprozess zum Aufzeichnen der auf dem ersten Medium (210) aufgezeichneten Daten auf dem zweiten Medium (230) zu Folgendem konfiguriert ist:
Lesen der auf dem ersten Medium (210) aufgezeichneten Kopiersteuerungs-Managementdatei,
Ausführen eines Prozesses des Empfangens der Kopiergenehmigungsinformationen von dem Managementserver (250),
Lesen der Datenzugriffsinformationen der zusätzlichen Daten von der Kopiersteuerungs-Managementdatei,
Ausführen eines Prozesses des Zugreifens auf die und des Erfassens der zusätzlichen Daten von dem Datenbereitstellungsserver (270) unter Verwendung der Datenzugriffsinformationen, und
Ausgeben von Daten, die die von dem Datenbereitstellungsserver erfassten zusätzlichen Daten enthalten, als die auf dem zweiten Medium (230) aufzuzeichnenden Daten.

6. Informationsverarbeitungsverfahren, das in einer Informationsverarbeitungsvorrichtung (220) implementiert wird,
wobei die Informationsverarbeitungsvorrichtung (220) Folgendes enthält:
eine Datenverarbeitungseinheit (501), die dafür konfiguriert ist, auf einem ersten Medium (210) aufgezeichnete Daten zu lesen und einen Prozess des Aufzeichnens von Daten auf einem zweiten Medium (230) oder einen Prozess des Ausgebens von Daten, die auf dem zweiten Medium (230) aufgezeichnet werden sollen, auszuführen; und
eine Kommunikationseinheit (502), die dafür konfiguriert ist, die Kommunikation mit einem Managementserver (250) und mit einem Datenbereitstellungsserver (270) auszuführen,
wobei das erste Medium (210) eine Blu-Ray-Disk ist und das zweite Medium (230) ein Flash-Speicher oder eine Festplatte ist,
wobei die Daten, die auf dem ersten Medium (210) aufgezeichnet sind, in einem ersten Datenformat aufgezeichnet sind,
wobei die Daten, die auf dem zweiten Medium (230) als einem Kopierziel aufgezeichnet werden sollen, in einem zweiten Datenformat, das sich von dem ersten Datenformat unterscheidet, aufgezeichnet werden sollen,
wobei das erste Datenformat ein Blu-Ray-Disk-Spielfilm-Format, BDMV-Format, ist und das zweite Datenformat ein Common File Format, CFF, ist,
wobei die auf dem ersten Medium (210) aufgezeichneten Daten in dem ersten Datenformat bereitgestellte Bilddaten, Audiodaten, Untertiteldaten und Metadaten umfassen,
wobei das erste Medium (210) eine Kopiersteuerungs-Managementdatei speichert, wobei die Kopiersteuerungs-Managementdatei eine Struktur aufweist, die Zugriffsinformationen über den Managementserver (250), der Kopierberechtigungsinformationen bereitstellt, und Datenzugriffsinformationen über den Datenbereitstellungsserver (270) zum Erfassen zusätzlicher Daten umfasst, wobei die zusätzlichen Daten von dem ersten Medium (210) nicht direkt erfassbar sind, wobei die zusätzlichen Daten wegen des Unterschieds des Datenformats zwischen dem ersten Datenformat und dem zweiten Datenformat erzeugt werden, wobei die zusätzlichen Daten hinsichtlich des Inhalts den Daten entsprechen, wie sie auf dem ersten Medium (210) in dem ersten Datenformat aufgezeichnet sind, wobei die zusätzlichen Daten aber codierte Bilddaten in dem zweiten Format, codierte Audiodaten in dem zweiten Format, Untertiteldaten in dem zweiten Format und von den auf dem ersten Medium (210) aufgezeichneten Metadaten verschiedene Metadaten umfassen,
wobei die Datenverarbeitungseinheit (501) in einem Kopierprozess zum Aufzeichnen der auf dem ersten Medium (210) aufgezeichneten Daten auf dem zweiten Medium (230) :
die auf dem ersten Medium (210) aufgezeichnete Kopiersteuerungs-Managementdatei liest,
einen Prozess des Empfangens der Kopiergenehmigungsinformationen von dem Managementserver (250) ausführt,
die Datenzugriffsinformationen der zusätzlichen Daten von der Kopiersteuerungs-Managementdatei liest,
unter Verwendung der Datenzugriffsinformationen einen Prozess des Zugreifens auf und des Erfassens zusätzlicher Daten von dem Datenbereitstellungsserver (270) ausführt, und
Daten, die die von dem Datenbereitstellungsserver (270) erfassten zusätzlichen Daten enthalten, als die auf dem zweiten Medium (230) aufzuzeichnenden Daten ausgibt.

7. Programm, um zu veranlassen, dass eine Informationsverarbeitungsvorrichtung (220) eine Informationsverarbeitung ausführt,
wobei die Informationsverarbeitungsvorrichtung (220) Folgendes enthält:
eine Datenverarbeitungseinheit (501), die dafür konfiguriert ist, auf einem ersten Medium (210) aufgezeichnete Daten zu lesen und einen Prozess des Aufzeichnens von Daten auf einem zweiten Medium (230) oder einen Prozess des Ausgebens von Daten, die auf dem zweiten Medium (230) aufgezeichnet werden sollen, auszuführen; und
eine Kommunikationseinheit (502), die dafür konfiguriert ist, die Kommunikation mit einem Managementserver (250) und mit einem Datenbereitstellungsserver (270) auszuführen,
wobei das erste Medium (210) eine Blu-Ray-Disk ist und das zweite Medium (230) ein Flash-Speicher oder eine Festplatte ist,
wobei die Daten, die auf dem ersten Medium (210) aufgezeichnet sind, in einem ersten Datenformat aufgezeichnet sind,
wobei die Daten, die auf dem zweiten Medium (230) als einem Kopierziel aufgezeichnet werden sollen, in einem zweiten Datenformat, das sich von dem ersten Datenformat unterscheidet, aufgezeichnet werden sollen,
wobei das erste Datenformat ein Blu-Ray-Disk-Spielfilm-Format, BDMV-Format, ist und das zweite Datenformat ein Common File Format, CFF, ist,
wobei die auf dem ersten Medium (210) aufgezeichneten Daten in dem ersten Datenformat bereitgestellte Bilddaten, Audiodaten, Untertiteldaten und Metadaten umfassen,
wobei das erste Medium (210) eine Kopiersteuerungs-Managementdatei speichert, wobei die Kopiersteuerungs-Managementdatei eine Struktur aufweist, die Zugriffsinformationen über den Managementserver (250), der Kopierberechtigungsinformationen bereitstellt, und Datenzugriffsinformationen über den Datenbereitstellungsserver (270) zum Erfassen zusätzlicher Daten umfasst, wobei die zusätzlichen Daten von dem ersten Medium (210) nicht direkt erfassbar sind, wobei die zusätzlichen Daten wegen des Unterschieds des Datenformats zwischen dem ersten Datenformat und dem zweiten Datenformat erzeugt werden, wobei die zusätzlichen Daten hinsichtlich des Inhalts den Daten entsprechen, wie sie auf dem ersten Medium (210) in dem ersten Datenformat aufgezeichnet sind, wobei die zusätzlichen Daten aber codierte Bilddaten in dem zweiten Format, codierte Audiodaten in dem zweiten Format, Untertiteldaten in dem zweiten Format und von den auf dem ersten Medium (210) aufgezeichneten Metadaten verschiedene Metadaten umfassen,
wobei das Programm in einem Kopierprozess zum Aufzeichnen der auf dem ersten Medium (210) aufgezeichneten Daten auf dem zweiten Medium (230) veranlasst, dass die Datenverarbeitungseinheit (501):
die auf dem ersten Medium (210) aufgezeichnete Kopiersteuerungs-Managementdatei liest;
einen Prozess des Empfangens der Kopiergenehmigungsinformationen von dem Managementserver (250) ausführt;
die Datenzugriffsinformationen der zusätzlichen Daten von der Kopiersteuerungs-Managementdatei liest;
unter Verwendung der Datenzugriffsinformationen einen Prozess des Zugreifens auf und des Erfassens zusätzlicher Daten von dem Datenbereitstellungsserver (270) ausführt; und
Daten, die die von dem Datenbereitstellungsserver (270) erfassten zusätzlichen Daten enthalten, als die auf dem zweiten Medium (230) aufzuzeichnenden Daten ausgibt.

## Revendications

1. Dispositif de traitement d'informations (220) comprenant :
une unité de traitement de données (501) configurée pour lire des données enregistrées sur un premier support (210), et réaliser un processus parmi un processus d'enregistrement de données sur un deuxième support (230) et un processus de délivrance de données destinées à être enregistrées sur le deuxième support (230) ; et
une unité de communication (502) configurée pour réaliser une communication avec un serveur de gestion (250) et un serveur de fourniture de données (270),
dans lequel le premier support (210) est un disque Blu-ray et le deuxième support (230) est une mémoire flash ou un disque dur,
dans lequel les données qui sont enregistrées sur le premier support (210) sont enregistrées dans un premier format de données,
dans lequel les données destinées à être enregistrées sur le deuxième support (230) en tant que destination de copie sont destinées à être enregistrées dans un deuxième format de données qui diffère du premier format de données,
dans lequel le premier format de données est un format « Blu-ray Disc Movie », BDMV et le deuxième format de données est un format de fichier commun, CFF,
dans lequel les données enregistrées sur le premier support (210) comprennent des données d'image, des données audio, des données de sous-titrage et des métadonnées fournies dans le premier format de données,
dans lequel le premier support (210) stocke un fichier de gestion de contrôle de copie, le fichier de gestion de contrôle de copie ayant une structure comprenant des informations d'accès au sujet du serveur de gestion (250) qui fournit des informations de permission de copie et des informations d'accès aux données au sujet du serveur de fourniture de données (270) pour acquérir des données additionnelles, les données additionnelles ne pouvant pas être acquises directement à partir du premier support (210), les données additionnelles étant générées en raison de la différence en termes de format de données entre le premier format de données et le deuxième format de données, les données additionnelles relatives à du contenu correspondant aux données telles qu'elles sont enregistrées sur le premier support (210) dans le premier format de données, mais les données additionnelles comprennent des données d'image codées dans le deuxième format, des données audio codées dans le deuxième format, des données de sous-titrage dans le deuxième format, et des métadonnées différentes des métadonnées enregistrées sur le premier support (210),
dans lequel, dans un processus de copiage pour enregistrer, sur le deuxième support (230), les données enregistrées sur le premier support (210), l'unité de traitement de données est configurée pour :
lire le fichier de gestion de contrôle de copie enregistré sur le premier support (210),
réaliser un processus de réception d'informations de permission de copie à partir du serveur de gestion (250),
lire, à partir du fichier de gestion de contrôle de copie, les informations d'accès aux données des données additionnelles,
réaliser un processus d'accès aux et d'acquisition des données additionnelles à partir du serveur de fourniture de données (270) en utilisant les informations d'accès aux données, et
délivrer des données contenant les données additionnelles acquises à partir du serveur de fourniture de données (270) en tant que données destinées à être enregistrées sur le deuxième support (230) .

2. Dispositif de traitement d'informations (220) selon la revendication 1, dans lequel :
le fichier de gestion de contrôle de copie stocke en outre des informations d'attribut au sujet de données qui peuvent être acquises avec des informations d'accès aux données enregistrées dans le fichier de gestion de contrôle de copie ; et
l'unité de traitement de données (501) délivre des informations d'attribut en tant que données destinées à être enregistrées sur le deuxième support (230), les informations d'attribut étant acquises à partir du fichier de gestion de contrôle de copie.

3. Dispositif de traitement d'informations (220) selon la revendication 1, dans lequel :
l'unité de traitement de données (501) identifie des données destinées à être copiées et lit, à partir du fichier de gestion de contrôle de copie, les informations d'accès aux données des données additionnelles associées aux données identifiées destinées à être copiées.

4. Dispositif de traitement d'informations (220) comprenant :
une unité de traitement de données (501) configurée pour lire des données enregistrées sur un premier support (210), et réaliser un processus parmi un processus d'enregistrement de données sur un deuxième support (230) et un processus de délivrance de données destinées à être enregistrées sur le deuxième support (230) ; et
une unité de communication (502) configurée pour réaliser une communication avec un serveur de gestion (250),
dans lequel le premier support (210) est un disque Blu-ray et le deuxième support (230) est une mémoire flash ou un disque dur,
dans lequel les données qui sont enregistrées sur le premier support (210) sont enregistrées dans un premier format de données,
dans lequel les données destinées à être enregistrées sur le deuxième support (230) en tant que destination de copie sont destinées à être enregistrées dans un deuxième format de données qui diffère du premier format de données,
dans lequel le premier format de données est un format « Blu-ray Disc Movie », BDMV et le deuxième format de données est un format de fichier commun, CFF,
dans lequel les données enregistrées sur le premier support (210) comprennent des données d'image, des données audio, des données de sous-titrage et des métadonnées fournies dans le premier format de données,
dans lequel le premier support (210) stocke un fichier de gestion de contrôle de copie, le fichier de gestion de contrôle de copie ayant une structure comprenant des informations d'accès au sujet du serveur de gestion (250) qui fournit des informations de permission de copie et des informations d'accès aux données au sujet d'un serveur de fourniture de données (270) pour acquérir des données additionnelles, les données additionnelles ne pouvant pas être acquises directement à partir du premier support (210), les données additionnelles étant générées en raison de la différence en termes de format de données entre le premier format de données et le deuxième format de données, les données additionnelles relatives à du contenu correspondant aux données telles qu'elles sont enregistrées sur le premier support (210) dans le premier format de données, mais les données additionnelles comprennent des données d'image codées dans le deuxième format, des données audio codées dans le deuxième format, des données de sous-titrage dans le deuxième format, et des métadonnées différentes des métadonnées enregistrées sur le premier support (210),
dans lequel, dans un processus de copiage pour enregistrer, sur le deuxième support (230), les données enregistrées sur le premier support (210), l'unité de traitement de données (501) est configurée pour :
lire le fichier de gestion de contrôle de copie enregistré sur le premier support (210),
réaliser un processus de réception d'informations de permission de copie à partir du serveur de gestion (250),
lire, à partir du fichier de gestion de contrôle de copie, les informations d'accès aux données des données additionnelles,
réaliser un processus de lecture des informations d'accès aux données pour obtenir les données additionnelles à partir du fichier de gestion de contrôle de copie enregistré sur le premier support (210), et
délivrer des données contenant les informations d'accès aux données pour obtenir les données additionnelles en tant que données destinées à être enregistrées sur le deuxième support (230).

5. Système de traitement d'informations comprenant :
un dispositif de traitement d'informations (220) configuré pour lire des données enregistrées sur un premier support (210), et réaliser un processus parmi un processus d'enregistrement de données sur un deuxième support ou un processus de délivrance de données destinées à être enregistrées sur le deuxième support (230) ;
un serveur de gestion (250) configuré pour délivrer des informations de permission de copie au dispositif de traitement d'informations ; et
un serveur de fourniture de données (270) configuré pour réaliser un processus de fourniture de données additionnelles au dispositif de traitement d'informations,
dans lequel le premier support (210) est un disque Blu-ray et le deuxième support (230) est une mémoire flash ou un disque dur,
dans lequel les données qui sont enregistrées sur le premier support (210) sont enregistrées dans un premier format de données,
dans lequel les données destinées à être enregistrées sur le deuxième support (230) en tant que destination de copie sont destinées à être enregistrées dans un deuxième format de données qui diffère du premier format de données,
dans lequel le premier format de données est un format « Blu-ray Disc Movie », BDMV et le deuxième format de données est un format de fichier commun, CFF,
dans lequel les données enregistrées sur le premier support (210) comprennent des données d'image, des données audio, des données de sous-titrage et des métadonnées fournies dans le premier format de données,
dans lequel le premier support (210) stocke un fichier de gestion de contrôle de copie, le fichier de gestion de contrôle de copie ayant une structure comprenant des informations d'accès au sujet du serveur de gestion (250) qui fournit les informations de permission de copie et des informations d'accès aux données au sujet d'un serveur de fourniture de données (270) pour acquérir les données additionnelles, les données additionnelles ne pouvant pas être acquises directement à partir du premier support (210), les données additionnelles étant générées en raison de la différence en termes de format de données entre le premier format de données et le deuxième format de données, les données additionnelles relatives à du contenu correspondant aux données telles qu'elles sont enregistrées sur le premier support (210) dans le premier format de données, mais les données additionnelles comprennent des données d'image codées dans le deuxième format, des données audio codées dans le deuxième format, des données de sous-titrage dans le deuxième format, et des métadonnées différentes des métadonnées enregistrées sur le premier support (210),
dans lequel le dispositif de traitement d'informations (220) inclut :
une unité de traitement de données (501) configurée pour lire des données enregistrées sur le premier support (210), et réaliser un processus parmi le processus d'enregistrement de données sur le deuxième support (230) ou le processus de délivrance de données destinées à être enregistrées sur le deuxième support (230) ; et
une unité de communication (502) configurée pour réaliser une communication avec le serveur de gestion et le serveur de fourniture de données (270),
dans lequel, dans un processus de copiage pour enregistrer, sur le deuxième support (230), les données enregistrées sur le premier support (210), l'unité de traitement de données (501) est configurée pour :
lire le fichier de gestion de contrôle de copie enregistré sur le premier support (210),
réaliser un processus de réception d'informations de permission de copie à partir du serveur de gestion (250),
lire, à partir du fichier de gestion de contrôle de copie, les informations d'accès aux données des données additionnelles,
réaliser un processus d'accès aux et d'acquisition des données additionnelles à partir du serveur de fourniture de données (270) en utilisant les informations d'accès aux données, et
délivrer des données contenant les données additionnelles acquises à partir du serveur de fourniture de données en tant que données destinées à être enregistrées sur le deuxième support (230).

6. Procédé de traitement d'informations mis en œuvre dans un dispositif de traitement d'informations (220), le dispositif de traitement d'informations (220) incluant :
une unité de traitement de données (501) configurée pour lire des données enregistrées sur un premier support (210), et réaliser un processus parmi un processus d'enregistrement de données sur un deuxième support (230) et un processus de délivrance de données destinées à être enregistrées sur le deuxième support (230) ; et
une unité de communication (502) configurée pour réaliser une communication avec un serveur de gestion (250) et un serveur de fourniture de données (270),
dans lequel le premier support (210) est un disque Blu-ray et le deuxième support (230) est une mémoire flash ou un disque dur,
dans lequel les données qui sont enregistrées sur le premier support (210) sont enregistrées dans un premier format de données,
dans lequel les données destinées à être enregistrées sur le deuxième support (230) en tant que destination de copie sont destinées à être enregistrées dans un deuxième format de données qui diffère du premier format de données,
dans lequel le premier format de données est un format « Blu-ray Disc Movie », BDMV et le deuxième format de données est un format de fichier commun, CFF,
dans lequel les données enregistrées sur le premier support (210) comprennent des données d'image, des données audio, des données de sous-titrage et des métadonnées fournies dans le premier format de données,
dans lequel le premier support (210) stocke un fichier de gestion de contrôle de copie, le fichier de gestion de contrôle de copie ayant une structure comprenant des informations d'accès au sujet du serveur de gestion (250) qui fournit des informations de permission de copie et des informations d'accès aux données au sujet du serveur de fourniture de données (270) pour acquérir des données additionnelles, les données additionnelles ne pouvant pas être acquises directement à partir du premier support (210), les données additionnelles étant générées en raison de la différence en termes de format de données entre le premier format de données et le deuxième format de données, les données additionnelles relatives à du contenu correspondant aux données telles qu'elles sont enregistrées sur le premier support (210) dans le premier format de données, mais les données additionnelles comprennent des données d'image codées dans le deuxième format, des données audio codées dans le deuxième format, des données de sous-titrage dans le deuxième format, et des métadonnées différentes des métadonnées enregistrées sur le premier support (210),
dans lequel, dans un processus de copiage pour enregistrer, sur le deuxième support (230), les données enregistrées sur le premier support (210), l'unité de traitement de données (501) :
lit le fichier de gestion de contrôle de copie enregistré sur le premier support (210),
réalise un processus de réception d'informations de permission de copie à partir du serveur de gestion (250),
lit, à partir du fichier de gestion de contrôle de copie, les informations d'accès aux données des données additionnelles,
réalise un processus d'accès aux et d'acquisition des données additionnelles à partir du serveur de fourniture de données (270) en utilisant les informations d'accès aux données, et
délivre des données contenant les données additionnelles acquises à partir du serveur de fourniture de données (270) en tant que données destinées à être enregistrées sur le deuxième support (230) .

7. Programme pour obliger un dispositif de traitement d'informations (220) à réaliser un traitement d'informations,
le dispositif de traitement d'informations (220) incluant :
une unité de traitement de données (501) configurée pour lire des données enregistrées sur un premier support (210), et réaliser un processus parmi un processus d'enregistrement de données sur un deuxième support (230) et un processus de délivrance de données destinées à être enregistrées sur le deuxième support (230) ; et
une unité de communication (502) configurée pour réaliser une communication avec un serveur de gestion (250) et un serveur de fourniture de données (270),
dans lequel le premier support (210) est un disque Blu-ray et le deuxième support (230) est une mémoire flash ou un disque dur,
dans lequel les données qui sont enregistrées sur le premier support (210) sont enregistrées dans un premier format de données,
dans lequel les données destinées à être enregistrées sur le deuxième support (230) en tant que destination de copie sont destinées à être enregistrées dans un deuxième format de données qui diffère du premier format de données,
dans lequel le premier format de données est un format « Blu-ray Disc Movie », BDMV et le deuxième format de données est un format de fichier commun, CFF,
dans lequel les données enregistrées sur le premier support (210) comprennent des données d'image, des données audio, des données de sous-titrage et des métadonnées fournies dans le premier format de données,
dans lequel le premier support (210) stocke un fichier de gestion de contrôle de copie, le fichier de gestion de contrôle de copie ayant une structure comprenant des informations d'accès au sujet du serveur de gestion (250) qui fournit des informations de permission de copie et des informations d'accès aux données au sujet du serveur de fourniture de données (270) pour acquérir des données additionnelles, les données additionnelles ne pouvant pas être acquises directement à partir du premier support (210), les données additionnelles étant générées en raison de la différence en termes de format de données entre le premier format de données et le deuxième format de données, les données additionnelles relatives à du contenu correspondant aux données telles qu'elles sont enregistrées sur le premier support (210) dans le premier format de données, mais les données additionnelles comprennent des données d'image codées dans le deuxième format, des données audio codées dans le deuxième format, des données de sous-titrage dans le deuxième format, et des métadonnées différentes des métadonnées enregistrées sur le premier support (210),
dans lequel, dans un processus de copiage pour enregistrer, sur le deuxième support (230), les données enregistrées sur le premier support (210), le programme oblige l'unité de traitement de données (501) à :
lire le fichier de gestion de contrôle de copie enregistré sur le premier support (210) ;
réaliser un processus de réception d'informations de permission de copie à partir du serveur de gestion (250) ;
lire, à partir du fichier de gestion de contrôle de copie, les informations d'accès aux données des données additionnelles ;
réaliser un processus d'accès aux et d'acquisition des données additionnelles à partir du serveur de fourniture de données (270) en utilisant les informations d'accès aux données ; et
délivrer des données contenant les données additionnelles acquises à partir du serveur de fourniture de données (270) en tant que données destinées à être enregistrées sur le deuxième support (230) .
